# EUROPÄISCHE PATENTSCHRIFT

(11) **EP 2 976 546 B1**
(45) Veröffentlichungstag und Bekanntmachung des Hinweises auf die Patenterteilung: **18.04.2018**
(21) Anmeldenummer: 14705189.0
(22) Anmeldetag: 19.02.2014
(51) Int. Cl.: F16F 15/14

(54) **TILGERSCHWINGUNGSDÄMPFER**
TUNED MASS DAMPER
AMORTISSEUR DE VIBRATIONS HARMONIQUES

(30) Priorität: 18.03.2013 DE 102013204713
(43) Veröffentlichungstag der Anmeldung: 27.01.2016
(73) Patentinhaber: ZF Friedrichshafen AG, 88046 Friedrichshafen (DE)
(72) Erfinder: CEGAR, Stojan, 97493 Bergrheinfeld (DE); WIRACHOWSKI, Michael, 97078 Würzburg (DE); SIEMENS, Kyrill, 97084 Würzburg (DE)
(86) Internationale Anmeldenummer: PCT/EP2014/053204
(87) Internationale Veröffentlichungsnummer: WO 2014/146849

(56) Entgegenhaltungen:
- WO-A1-2012/175213
- DE-A1- 19 808 731
- DE-A1- 19 954 278
- DE-A1-102011 100 895

## Beschreibung

Ausführungsbeispiele beziehen sich auf einen Tilgerschwingungsdämpfer, beispielsweise für einen Antriebstrang eines Kraftfahrzeuges, zur Dämpfung eines Schwingungsanteils einer Drehbewegung. Tilgerschwingungsdämpfer können beispielsweise im Rahmen von Anfahrelementen, beispielsweise bei einem hydrodynamischen Drehmomentwandler eines Kraftfahrzeugs, eingesetzt werden.

In vielen Anfahrelementen, die auch als Anfahrkupplungen bezeichnet werden, werden Tilgerschwingungsdämpfer eingesetzt, um Drehungleichförmigkeiten zu dämpfen, die beispielsweise einer Verbrennungskraftmaschine entstammen. Bei diesen treten arbeitsbetriebsbedingt beispielsweise aufgrund der stoßartigen Freisetzung der Energie Drehmomentstöße auf, die über die Kurbelwelle an einen Eingang eines solchen Anfahrelements übertragen werden. Um diese von einem Ausgang des Anfahrelements, welches seinerseits häufig mit einem Eingang eines Getriebes gekoppelt ist, fernzuhalten, zumindest jedoch zu dämpfen, können Schwingungsdämpfer zur Dämpfung solcher und anderer Schwingungsanteile der Drehbewegung der Kurbelwelle eingesetzt werden.

Schwingungsdämpfer weisen hierbei häufig ein schwingfähiges System bzw. ein System auf, welches durch Energiespeicherelemente in der Lage ist, Energie kurzfristig zwischen zu speichern. Je nach konkreter Implementierung eines entsprechenden Schwingungsdämpfers können hierbei beispielsweise Federelemente oder auch andere Energiespeicher eingesetzt werden.

Bei Tilgerschwingungsdämpfern kommen Schwingungspendelmassen, die auch als Tilgermassen bezeichnet werden, zur Speicherung von Energiespitzen bei einer entsprechenden Drehbewegung zum Einsatz. Im Unterschied zu vielen anderen Schwingungsdämpfern, bei denen die zu übertragende Drehbewegung und damit das zu übertragenden Drehmoment an einer Eingangsseite des Schwingungsdämpfers eingekoppelt und an einer Ausgangsseite wieder ausgekoppelt wird, weisen Tilgerschwingungsdämpfer typischerweise nur einen Anschluss auf, mit dem sie an die zu übertragende Drehbewegung angekoppelt werden. Anders ausgedrückt sind bei ihnen die Federelemente, also die Tilgermassen, typischerweise nicht im Drehmomentfluss angeordnet. Der Anschluss des Tilgerschwingungsdämpfers dient vielmehr sowohl zur Aufnahme der zuvor genannten Energiespitzen wie auch zur Abgabe der zwischengespeicherten Energie.

Neben der reinen Funktion des Tilgerschwingungsdämpfers, nämlich der Dämpfung eines Schwingungsanteils einer Drehbewegung, werden an Tilgerschwingungsdämpfer heute eine Vielzahl zusätzlicher Anforderungen gestellt. So sollen diese beispielsweise möglichst einfach herstellbar sein. Ebenso sollen sie den insgesamt zur Verfügung stehenden Bauraum hierbei möglichst effizient ausnutzen. So steht häufig für ein Anfahrelement nur ein vorbestimmter Bauraum insgesamt zur Verfügung, den sich die einzelnen Komponenten des Anfahrelementes untereinander teilen müssen. Bei mechanischen Systemen zu Schwingungsdämpfung hat hierbei die Größe einer Komponente häufig einen wichtigen Einfluss auf ihre Funktion. In Anbetracht des jedoch nur begrenzt zur Verfügung stehenden Bauraums, können sich hieraus Randbedingungen hinsichtlich einer möglichst effizienten Ausnutzung des für den Tilgerschwingungsdämpfer beispielsweise zur Verfügung stehenden Bauraums ergeben.

Ebenso bestehen Bestrebungen dahingehend, mit möglichst technisch einfachen Mitteln und mit möglichst geringem Aufwand einen entsprechenden Tilgerschwingungsdämpfer aufzubauen und in ein entsprechendes Anfahrelement integrieren zu können. Es besteht also auch hier ein Bedarf daran, die Herstellung eines Tilgerschwingungsdämpfers möglichst effizient und einfach zu gestalten, wobei hier gegebenenfalls ein Kompromiss hinsichtlich des Materialeinsatzes und des eigentlichen Herstellungsaufwands im Sinne einer Montage einzugehen sein könnte.

Aufgrund der Tatsache, dass bei Tilgerschwingungsdämpfern entsprechende Tilgermassen zum Einsatz kommen, die ihrerseits Schwingungen ausführen, um einen Schwingungsanteil der Drehbewegung zu dämpfen, kann es gegebenenfalls unter bestimmten Betriebsbedingungen dazu kommen, dass die Tilgermassen Geräusche hervorrufen, die von dem Fahrer eines Fahrzeugs, seinen Passagieren oder anderen Personen und Passanten, in welches das Anfahrelement integriert ist, als störend empfunden werden. Je nach konkreter Implementierung eines solchen Tilgerschwingungsdämpfers können so beispielsweise metallische Geräusche hervorgerufen werden, die beispielsweise während des Anlassens des betreffenden Motors oder auch während seines Abschaltens auftreten können.

Während des Betriebs eines Tilgerschwingungsdämpfers treten hierbei neben der Gewichtskraft insbesondere auch Fliehkräfte auf, die auf die Tilgermassen einwirken. Durch die Fliehkraft, welche durch die Motordrehzahl hervorgerufen wird, werden die auch als Gewichte bezeichneten Tilgermassen eines solchen Tilgerschwingungsdämpfers radial gegebenenfalls nach außen gedrückt. Die Fliehkraft ist hierbei von der Drehzahl, dem Schwerpunktradius und der Masse der Tilgermassen abhängig. Die Drehzahl stellt hierbei die Größe dar, die während des Betriebs leicht beeinflusst wird. Beim Abstellen des Motors verringert sich so beispielsweise die Motordrehzahl, bis dieser schließlich stillsteht (0 U/min).

Während des Abstellens des Motors wird hierbei eine Motordrehzahl erreicht, bei der die auf die Tilgermassen einwirkende Gewichtskraft die auf diese einwirkenden Fliehkräfte betragsmäßig übersteigt. An diesem Punkt kann es nun passieren, dass die einzelnen Tilgermassen aneinanderstoßen und so die vorgenannten, als störend empfundenen Geräusche hervorrufen.

Ebenso können solche Geräusche beispielsweise durch die Rollen erzeugt werden, auf denen die Tilgermassen gelagert sein können. Stoßen diese in die Anschläge ihrer Bahnkurven, kann dies ebenfalls von einem störenden Geräusch begleitet sein. Durch den Impuls der Tilgermassen kann so ein Geräusch erzeugt werden, dass der Fahrer, die Passagiere des Fahrzeugs oder andere Personen nicht gewohnt sind und daher als störend empfinden. Es besteht so auch die Bestrebung, ein Entstehen von Geräuschen während des Betriebs eines Tilgerschwingungsdämpfers zu reduzieren, zu minimieren oder gegebenenfalls sogar vollständig abzustellen.

Neben Anfahrelementen, wie sie beispielsweise in einem Antriebstrang eines Kraftfahrzeugs zum Einsatz kommen können, können Tilgerschwingungsdämpfer auch bei anderen drehenden Systemen zum Einsatz kommen, bei denen eine Dämpfung eines Schwingungsanteils an der Drehbewegung notwendig oder ratsam ist. Beispiele komrnen so aus dem Bereich des Werkzeugmaschinenbaus, aber auch andere Bereiche des Maschinen- und Fahrzeugbaus, bei denen entsprechende Drehungleichförmigkeiten in einer Drehbewegung auftreten oder auftreten können.

Die DE 10 2011 004 443 A1 bezieht sich auf eine Schwingungsdämpfungseinrichtung eines Fahrzeuges, die einen um eine Drehachse drehbaren Auslenkungsmassenträger und wenigstens eine am Auslenkungsmassenträger bezüglich diesem verlagerbar getragene Auslenkungsmasse aufweist, wobei bei Auslenkung der wenigstens einen Auslenkungsmasse aus einer Grundrelativlage bezüglich des Auslenkungsmassenträgers eine Radiallage der wenigstens einen Auslenkungsmasse bezüglich der Drehachse verändert wird. Wenigstens einer Auslenkungsmasse ist hierbei eine Rückstellanordnung zugeordnet, die wenigstens in einem Teilbereich der Auslenkungsbewegung der betreffenden Auslenkungsmassen eine in Richtung zu ihrer Grundrelativlage gerichtete Kraft auf die Auslenkungsmaße ausfugt.

Die DE 10 2011 100 895 A1 bezieht sich auf ein Fliehkraftpendel, insbesondere in einem Antriebstrang eines Kraftfahrzeuges mit einem um eine Drehachse verdrehbaren Pendelflansch und einer Mehrzahl von über den Umfang verteilten, auf beiden Seiten des Pendelflansches angeordneten Pendelmassen, wobei jeweils zwei axial gegenüberliegende Pendelmassen mittels den Pendelflansch durchgreifenden Verbindungsmitteln miteinander zu Pendelmassenpaaren verbunden sind. Die Pendelmassenpaare sind jeweils voneinander in Umfangsrichtung beabstandet, um eine elastische Begrenzung der Pendelmassen unter Verzicht von Anschlagpuffern und deren Ausschnitten in dem Pendelflansch zu zählen, ist eine elastische Begrenzung einer Schwenkbewegung der Pendelmassen mittels einer radial innerhalb der Pendelmassen vorgesehenen Ringfeder implementiert.

Die WO 2012/175213 A1 beschreibt eine Fliehkraftpendelvorrichtung. Die DE 199 54 278 A1 und die darin genannten Dokumente beschreiben eine Schwingungsdämpfungsvorrichtung. Die DE 198 08 731 A1 und das darin genannte Dokument beschreiben einen Drehschwingungsdämpfer.

Es besteht daher ein Bedarf daran, einen Kompromiss zwischen einer Vereinfachung der Herstellung eines Tilgerschwingungsdämpfers, einer Reduzierung während des Betriebes auftretender Geräusche, einer effizienten Ausnutzung des zur Verfügung stehenden Bauraums und der Leistung des Schwingungsdämpfers zu verbessern. Diesen Bedarf trägt ein Tilgerschwingungsdämpfer gemäß Patentanspruch 1 Rechnung.

Ein Tilgerschwingungsdämpfer gemäß einem Ausführungsbeispiel, der beispielsweise bei einem Antriebstrang eines Kraftfahrzeugs eingesetzt werden kann und zur Dämpfung eines Schwingungsanteils einer Drehbewegung dient, umfasst wenigstens drei Tilgermassen, die derart ausgebildet sind, um in Abhängigkeit von der Drehbewegung eine Schwingung auszuführen, um den Schwingungsanteil derselben zu dämpfen. Er umfasst ferner wenigstens ein Führungsbauteil, das ausgebildet ist, um die Tilgermassen derart beweglich zu führen, sodass die Tilgermassen entlang einer zu einer Drehachse oder Drehrichtung der Drehbewegung senkrechten Umfangsrichtung versetzt angeordnet sind und die Schwingungen ausführen können. Der Tilgerschwingungsdämpfer umfasst ferner ein gegenüber dem wenigstens einen Führungsbauteil um die Drehachse der Drehbewegung verdrehbares und formstabiles Distanzbauteil, das mit den Tilgermassen in einer spielbehafteten formschlüssigen Verbindung steht, die so ausgestaltet sind, dass ausgehend von einer Mittellage der Tilgermassen zu dem Distanzbauteil bei einer ein Spiel der Verbindungen zweier der Tilgermassen zu dem Distanzbauteil überwindenden Schwingung einer der beiden Tilgermassen das Distanzbauteil entlang der Umfangsrichtung so verdreht wird, dass dieses die andere der beiden Tilgermassen entlang der Umfangsrichtung mitnimmt.

Ausführungsbeispielen liegt so die Erkenntnis zugrunde, dass ein Kompromiss zwischen einer Vereinfachung der Herstellung, einer Reduzierung der während des Betriebs erzeugter Geräusche, einer effizienteren Ausnutzung des zur Verfügung stehenden Bauraums und der Leistung des Schwingungsdämpfers durch das Vorsehen eines formstabilen Distanzbauteils erzielbar ist, welches die Tilgermassen mit einer spielbehafteten, formschlüssigen Verbindung führt bzw. bei einer entsprechenden Auslenkung entlang der Umfangsrichtung mitnimmt. Aufgrund der Formstabilität des Distanzbauteils und der Mitnahme der Tilgermassen entlang der Umfangsrichtung, kann so beispielsweise ein Berühren der Tilgermassen weitgehend oder vollständig ausgeschlossen werden. Hierdurch kann gegebenenfalls eine Reduzierung der Geräusche während des Betriebs, also den Betriebszuständen des Tilgerschwingungsdämpfers, die das Hochlaufen und das Herunterlaufen der Drehzahl der Drehbewegung umfassen, bewirkt werden. Darüber hinaus kann, wie nachfolgend noch erläutert werden wird, ein entsprechendes Distanzbauteil aufgrund seiner Formstabilität platzsparend implementiert werden und hierbei gegebenenfalls zusätzliche Funktionen mitübernehmen. So kann ein solches

Distanzbauteil gegebenenfalls durch eine entsprechende Ausgestaltung weiteres Geräuschreduzierungspotential mit sich bringen. Nicht zuletzt kann eine Herstellung eines Tilgerschwingungsdämpfers gemäß einem Ausführungsbeispiel dadurch vereinfacht werden, dass das Distanzbauteil mehr als nur zwei, nämlich wenigstens drei Tilgermassen mechanisch koppelt.

Die Tilgermassen und das Distanzbauteil greifen hier - anders ausgedrückt - mit Spiel ineinander ein, um so die spielbehaftete formschlüssige Verbindung zu schaffen. Unter Spiel wird hierbei der Bewegungsfreiraum verstanden, in dem sich die betreffende Komponente bzw. das betreffende Objekt, also im vorliegenden Fall die Tilgermassen, zu dem Distanzbauteil frei bewegen können. Die betreffenden Komponenten weisen hierbei eine solche Geometrie oder Formgebung auf, dass entlang einer Richtung im mathematischen Sinne eines Vektors jeweils wenigstens eine Fläche der beteiligten Objekte miteinander derart in Kontakt treten, sodass eine Kraft zwischen diesen entlang der besagten Richtung und/oder entlang einer der Richtung entgegengesetzten Richtung ausübbar ist.

Allgemein wird unter einer kraftschlüssigen oder reibschlüssigen Verbindung eine solche verstanden, die durch Haftreibung zustande kommt. Eine stoffschlüssige Verbindung kommt durch molekulare oder atomare Wechselwirkungen und Kräfte und eine formschlüssige Verbindung durch eine geometrische Verbindung der betreffenden Verbindungspartner zustande. Die Haftreibung setzt im Allgemeinen eine Normalkraftkomponente zwischen den beiden Verbindungspartnern voraus.

Ein reibschlüssiger Kontakt liegt hierbei dann vor, wenn zwei Objekte, also beispielsweise das betreffende Aufnahmeelement und die Gleitfläche miteinander reibschlüssig in Kontakt treten, sodass zwischen diesen eine Kraft im Falle einer Relativbewegung senkrecht zu einer Berührfläche zwischen diesen entsteht. Hierbei kann ein Drehzahlunterschied, also beispielsweise ein Schlupf, bestehen. Neben einem solchen reibschlüssigen Kontakt umfasst ein reibschlüssiger Kontakt jedoch auch eine reibschlüssige bzw. kraftschlüssige Verbindung zwischen den betreffenden Objekten, bei denen ein entsprechender Drehzahlunterschied bzw. Schlupf im Wesentlichen nicht auftritt.

Unter einem formstabilen Bauteil wird hierbei ein solches verstanden, welches keine oder nur eine im Verhältnis zu seinen Ausmaßen geringe und damit im Wesentlichen vernachlässigbare mechanische elastische Verformbarkeit aufweist. So tritt zwar bei im Wesentlichen allen Bauteilen bei einer entsprechenden Krafteinwirkung eine elastische Verformung auf, diese bewegt sich jedoch typischerweise in Größenordnungen, die unter Berücksichtigung der Dimensionen des betreffenden Bauteils vernachlässigbar sind. Entsprechende Änderungen in der Form liegen so häufig im Bereich von weniger als 0,1 ‰, weniger als 1 ‰ oder weniger als 1 %. Hierbei gilt dies für alle auf das betreffende Bauteil einwirkenden Kräfte, also beispielsweise im Falle eines gestreckten oder longitudinalen Bauteils, sowohl entlang dieser longitudinalen Richtung als auch senkrecht im Sinne von Scherkräften.

Optional können bei einem Tilgerschwingungsdämpfer gemäß einem Ausführungsbeispiel die Tilgermassen und das Distanzbauteil so ausgebildet sein, dass die Tilgermassen bezüglich des Distanzbauteils von ihren Mittellagen zu dem Distanzbauteil ausgehend um einen vorbestimmten Winkel verdrehbar sind. Anders ausgedrückt können gegebenenfalls die Tilgermassen durch das Distanzbauteil einzeln oder gemeinsam um einen vorbestimmten Winkel verdreht werden. So kann je nach konkreter Ausgestaltung einer Tilgermasse neben einer reinen Parallelversetzung entlang der Umfangsrichtung auch eine Drehung und damit gegebenenfalls eine Änderung des Abstandes des Schwerpunkts von der Drehachse, die auch als axiale Richtung bezeichnet wird, durch die Verdrehung bewirkt werden. Hierdurch kann es gegebenenfalls möglich sein, einen sogenannten drehzahladaptiven Tilgerschwingungsdämpfer zu implementieren, bei dem in Abhängigkeit von der Bewegung der Tilgermassen, also in Abhängigkeit von ihren Auslenkungen, der Schwerpunkt gegenüber der Drehachse der Drehbewegung verändert wird.

Ergänzend oder alternativ können beim Tilgerschwingungsdämpfer gemäß einem Ausführungsbeispiel die Tilgermassen und das Distanzbauteil so ausgebildet sein, dass die Spiele der Verbindungen zwischen den Tilgermassen und dem Distanzbauteil ein Berühren zweier entlang der Umfangsrichtung benachbarter Tilgermassen in allen Betriebszuständen des Tilgerschwingungsdämpfers unterbunden werden. Die Betriebszustände umfassen hierbei ebenso ein Anhalten bzw. Anlaufen des Tilgerschwingungsdämpfers. Hierdurch kann es also möglich sein, eine Geräuschentwicklung, die aufgrund des Aneinanderschlagens zweier oder mehrerer Tilgermassen hervorgerufen werden, zu reduzieren oder sogar vollständig zu unterbinden.

Ergänzend oder alternativ können bei einem Tilgerschwingungsdämpfer gemäß einem Ausführungsbeispiel die Spiele der Verbindungen zwischen den Tilgermassen und dem Distanzbauteil so ausgebildet sein, dass die Tilgermassen von dem Distanzbauteil im Wesentlichen parallel zueinander geführt werden. Eine parallele Führung ist hierbei nicht auf eine geradlinige Bewegung im Sinne einer Bewegung entlang einer geraden Linie beschränkt. Eine parallele Führung kann ebenso bei Kurven, Bahnen oder anderen gebogenen Konturen erfolgen. Bahnen können hierbei parallel sein, wenn beispielsweise ihre Tangenten in jedem Punkt parallel sind. Dies gilt selbstverständlich ebenso für Abschnitte, welche gegebenenfalls mehr als einen Punkt im mathematischen Sinne umfassen. Hierdurch kann es gegebenenfalls möglich sein, eine Kollision von zwei oder mehreren Tilgermassen in den Betriebszuständen des Tilgerschwingungsdämpfers zu unterbinden.

Ergänzend oder alternativ kann bei einem Tilgerschwingungsdämpfer gemäß einem Ausführungsbeispiel das wenigstens eine Führungsbauteil wenigstens abschnittsweise eine kreis- oder zylindermantelförmige Kontur aufweisen, die sich um die Drehachse wenigstens teilweise oder vollständig herum erstreckt. Das Distanzbauteil kann so ausgebildet sein, um radial an der kreis- oder zylindermantelförmigen Kontur gelagert zu sein. So kann das wenigstens eine Führungsbauteil eine Innen- und/oder Außenkontur aufweisen, die vollständig und/oder teilweise kreisförmig bzw. zylindermantelförmig ausgebildet ist. Die zylindermantelförmige Kontur erstreckt sich hierbei parallel zu der Drehachse, also der axialen Richtung der Drehbewegung und um diese herum. Hierdurch kann es möglich sein, mit konstruktiv einfachen Mitteln die drehbare Anordnung des Distanzbauteils zu wenigstens einem der Führungsbauteile zu implementieren. So kann es also gegebenenfalls möglich sein, die Herstellung des Tilgerschwingungsdämpfers weiter zu vereinfachen.

Ergänzend oder alternativ können bei einem Tilgerschwingungsdämpfer gemäß einem Ausführungsbeispiel wenigstens 50 % einer Masse des Distanzbauteils vollständig radial außerhalb oder innerhalb wenigstens eines Führungsbauteils angeordnet sein. Bei anderen Ausführungsbeispielen können dies wenigstens 60 %, wenigstens 70 %, wenigstens 80 % oder wenigstens 90 % der Masse des Distanzbauteils sein. Anders ausgedrückt kann die Masse des Distanzbauteils im Wesentlichen radial außerhalb oder radial innerhalb wenigstens eines Führungsbauteils angeordnet sein.

Hierbei ist unter der Bezeichnung "wenigstens ein Führungsbauteil" genau dieses gemeint, wenn der Tilgerschwingungsdämpfer genau ein solches Führungsbauteil umfasst. Umfasst er hingegen mehrere, so gilt dies für wenigstens eines der betreffenden Führungsbauteile. Hierdurch kann es gegebenenfalls möglich sein, den Distanzring gerade so anzuordnen und auszugestalten, dass dieser im Wesentlichen radial außerhalb oder innerhalb eines oder mehrerer Führungsbauteile angeordnet ist, wodurch es gegebenenfalls möglich sein kann, eine effizientere Ausnutzung des zur Verfügung stehenden Bauraums umzusetzen.

Ergänzend oder alternativ kann bei einem Tilgerschwingungsdämpfer gemäß einem Ausführungsbeispiel das Distanzbauteil ausgebildet sein, um durch ein in Kontakt Treten mit den Tilgermassen außerhalb der spielbehafteten formschlüssigen Verbindung zu diesen eine Bewegung der Tilgermassen entlang einer radialen Richtung und/oder einen maximalen Schwingwinkel der Tilgermassen zu begrenzen. So kann bei einem Tilgerschwingungsdämpfer gemäß einem Ausführungsbeispiel das Distanzbauteil die radiale Bewegung der Tilgermassen und/oder den Schwingwinkel der Tilgermassen hinsichtlich eines maximalen Wertes begrenzen und so eine Entwicklung von als störend empfundenen Geräuschen reduzieren oder sogar vollständig unterbinden. Hierbei kann dies durch weitere Strukturen des Distanzbauteils geschehen, die gerade nicht der spielbehafteten formschlüssigen Verbindung zur Mitnahme der Tilgermassen dienen.

Bei einem solchen Tilgerschwingungsdämpfer gemäß einem Ausführungsbeispiel kann optional das Distanzbauteil als Distanzinnenring oder als Distanzaußenring ausgebildet sein, um wenigstens eine der Tilgermassen bei einer radial nach innen bzw. einer radial nach außen gerichteten Bewegung über eine vorbestimmte Distanz hinaus abzufangen. Das Distanzbauteil kann hierbei dies für genau eine Tilgermasse, für einige oder für alle Tilgermassen der wenigstens drei Tilgermassen übernehmen. Es kann hierbei gegebenenfalls ausreichen, dies auch für weniger als alle, gegebenenfalls sogar nur für eine einzige Tilgermasse umzusetzen, da aufgrund der Mitnahme der Tilgermassen durch das Distanzbauteil eine mechanische Kopplung zwischen diesen bestehen kann. Hierdurch kann es also möglich sein, dass das Distanzbauteil ergänzend oder alternativ zu der zuvor beschriebenen Begrenzung eine Geräuschentwicklung durch die Tilgermassen reduziert oder sogar unterbindet.

Aufgrund der Ausgestaltung als Distanzinnenring oder als Distanzaußenring wird das Distanzbauteil häufig auch als Distanzring bezeichnet. Dieser kann einteilig, mehrteilig, beispielsweise segmentiert oder auf andere Art und Weise ausgeführt sein. Die Segmente können hierbei untereinander mechanisch mit oder ohne Spiel verbunden sein. Ebenso ist es nicht notwendig, dass der Distanzring 360° im Sinne eines Vollkreises um die Drehachse der Drehbewegung vollständig umschließt. Der Distanzring muss in einem solchen Fall lediglich die wenigstens drei Tilgermassen, gegebenenfalls auch alle Tilgermassen, über die zuvor beschriebene spielbehaftete formschlüssige Verbindung führen bzw. mitnehmen. Ebenso kann ein solcher Ring auch eine von der klassischen Ringform abweichende Struktur aufweisen, wenn dieser sich beispielsweise radial nach innen und/oder radial nach außen über die reine ringförmige Struktur erstreckt. Unter einem Ring wird daher auch eine solche Struktur verstanden, welche beispielsweise Abweichungen in radialer Richtung, gegebenenfalls auch entlang der Drehachse aufweist. Dies kann beispielsweise zur Einsparung von Masse bzw. Gewicht, zum Abfangen mechanischer Belastungen oder auch zur gezielten Formgebung im Interesse eines möglichst gleichmäßigen Trägheitsmoments möglich oder sogar ratsam sein.

Ergänzend oder alternativ können bei einem Tilgerschwingungsdämpfer gemäß einem Ausführungsbeispiel die Tilgermassen und das Distanzbauteil so ausgebildet sein, dass ein maximaler Schwingwinkel der Tilgermassen und/oder eine Bewegung derselben entlang der radialen Richtung durch die spielbehaftete formschlüssige Verbindung begrenzt wird. So kann auch die formschlüssige spielbehaftete Verbindung bei Ausführungsbeispielen gegebenenfalls herangezogen werden, um eine Geräuschentwicklung zu reduzieren oder sogar vollständig auszuschließen.

So kann ergänzend oder alternativ bei einem Tilgerschwingungsdämpfer gemäß einem Ausführungsbeispiel eine Materialpaarung der bei dem Begrenzen der radialen Bewegung bzw. des maximalen Schwingwinkels miteinander in Kontakt tretenden Komponenten so gewählt sein, dass gegenüber einer metallischen Materialpaarung ein geringeres Geräusch entsteht. So kann beispielsweise eine der betreffenden Komponenten örtlich begrenzt oder vollständig einen Kunststoff, also beispielsweise ein Duroplast, ein Elastomer oder ein Thermoplast aufweisen, während die andere Komponente in dem betreffenden Bereich oder auch vollständig einen metallischen Werkstoff, also beispielsweise ein Metall, eine Legierung oder einen anderen vergleichbaren metallischen Werkstoff, dem beispielsweise nichtmetallische Komponenten beigegeben sein können, aufweisen.

Ergänzend oder alternativ kann bei einem Tilgerschwingungsdämpfer gemäß einem Ausführungsbeispiel die spielbehaftete formschlüssige Verbindung zwischen dem Distanzbauteil und wenigstens einer der Tilgermassen eine Verbindungsstruktur und eine Verbindungsausnehmung aufweisen, wobei die Verbindungsstruktur in die Verbindungsausnehmung eingreift und wobei die Verbindungsstruktur und die Verbindungsausnehmung ausgebildet sind, um eine radiale Bewegung der Verbindungsstruktur und der Verbindungsausnehmung zueinander und/oder eine Verdrehung der Verbindungsstruktur und der Verbindungsausnehmung zueinander zu ermöglichen. Hierdurch kann es gegebenenfalls möglich sein, mithilfe von technisch einfacher Mittel und damit eine vereinfachte Herstellung eines Tilgerschwingungsdämpfer gemäß einem Ausführungsbeispiel zu ermöglichen. Die Verbindungsstruktur kann beispielsweise einen Zapfen oder eine Feder einer Nut-Feder-Verbindung, die Verbindungsausnehmung, beispielsweise eine Bohrung, ein Langloch, eine Nut einer Nut-Feder-Verbindung oder einer schlitzförmige Ausnehmung umfassen. Sind die Verbindungsausnehmungen beispielsweise in dem Distanzbauteil implementiert, können diese beispielsweise im Wesentlichen radial orientiert sein. Handelt es sich also beispielsweise um ein Langloch, eine schlitzförmige Ausnehmung oder eine Nut, kann diese im Wesentlichen radial orientiert sein. Im Falle einer Implementierung der Verbindungsausnehmung in einer oder mehreren Tilgermassen kann dies ebenso für diese gelten, wenn beispielsweise die Tilgermasse in der Mittellage angeordnet ist, um die diese herum ihre Schwingungen ausführt. Hierbei können eine einzelne, einige oder auch alle Tilgermassen bzw. Verbindungen

über eine solche spielbehaftete formschlüssige Verbindung umgesetzt sein. Lediglich der Vollständigkeit halber soll an dieser Stelle erwähnt sein, dass bei einer Verschwenkung der Drehbewegung einer Verdrehung gegebenenfalls auch eine lineare Bewegung, beispielsweise entlang der radialen Richtung überlagert sein kann.

Ergänzend oder alternativ kann bei einem Tilgerschwingungsdämpfer gemäß einem Ausführungsbeispiel die Verbindungsstruktur wenigstens teilweise eine kreisförmige und/oder wenigstens teilweise elliptische Außenkontur senkrecht zu der Drehachse aufweisen, die sich über einen vorbestimmten Öffnungswinkel von mehr als 0° erstreckt. Der Öffnungswinkel ist hierbei der Winkel, den die Tangenten zu beiden Seiten der Verbindungsstruktur an einem Randbereich, in dem die kreisförmige bzw. elliptische Außenkontur in eine abweichende Kontur übergeht, zueinander aufweisen.

Ergänzend oder alternativ kann bei einem solchen Tilgerschwingungsdämpfer gemäß einem Ausführungsbeispiel die Verbindungsausnehmung ausgebildet sein, um die Verbindungsstruktur aufzunehmen, um eine Verdrehung der betreffenden Tilgermasse um den Öffnungswinkel zu ermöglichen und um eine Bewegung der Verbindungsstruktur entlang der radialen Richtung zu ermöglichen. So kann bei einem Tilgerschwingungsdämpfer gemäß einem Ausführungsbeispiel eine Außenkontur der Verbindungsausnehmung beispielsweise zwei aneinander gegenüberliegende gerade Abschnitte aufweisen, die zwischen einem offenen Ende der Verbindungsausnehmung und einem geschlossenen Ende der Verbindungsausnehmung angeordnet sind. Hierbei können die beiden geraden Abschnitte optional parallel zueinander verlaufen. Ergänzend oder alternativ kann das Distanzbauteil auch axial von dem wenigstens einen Führungsbauteil wenigstens teilweise geführt werden.

Ergänzend oder alternativ kann bei einem Tilgerschwingungsdämpfer gemäß einem Ausführungsbeispiel die Verbindungsstruktur wenigstens abschnittsweise eine zylinderförmige Außenkontur aufweisen, deren Mittelachse, die auch als Symmetrieachse bezeichnet wird, sich parallel zu der Drehachse erstreckt. In einem solchen Fall kann die Außenkontur der Verbindungsausnehmung zwei einander gegenüberliegende gerade Abschnitte aufweisen, die zwischen einem offenen Ende der Verbindungsausnehmung und einem geschlossenen Ende der Verbindungsausnehmung angeordnet sind. Die Verbindungsausnehmung kann hierbei ausgebildet sein, um die Verbindungsstruktur aufzunehmen, um eine Verdrehung der betreffenden Tilgermasse und eine Bewegung der Verbindungsstruktur entlang der radialen Richtung zu ermöglichen. Eine zylinderförmige Außenkontur stellt hierbei eine solche dar, welche in einer Ebene senkrecht zu der Drehachse bzw. senkrecht zu ihrer Mittelachse vollständig umlaufend ausgebildet ist.

Optional kann bei einem Tilgerschwingungsdämpfer gemäß einem Ausführungsbeispiel die Verbindungsstruktur mit der betreffenden Tilgermasse mechanisch fest verbunden sein, wobei die Verbindungsstruktur und wenigstens ein Führungsbauteil ausgebildet sind, um durch eine in Kontakt tretende Verbindungsstruktur mit dem wenigstens einem Führungsbauteil eine Bewegung der betreffenden Tilgermasse entlang der radialen Richtung zu begrenzen. Hierbei wird unter einer mechanisch festen Verbindung eine solche verstanden, die im Wesentlichen spielfrei in alle linearen Raumrichtungen ist. Eine solche kann beispielsweise durch eine kraftschlüssige, formschlüssige und/oder stoffschlüssige Verbindung geschaffen werden.

Optional kann bei einem solchen Tilgerschwingungsdämpfer gemäß einem Ausführungsbeispiel die Verbindungsstruktur ausgebildet sein, um über die zylinderförmige Außenkontur mit dem wenigstens einen Führungsbauteil in Kontakt zu treten. Optional kann hierzu die Verbindungsstruktur aus einem metallischen Werkstoff gefertigt sein, während der Abschnitt der zylinderförmigen Außenkontur, der mit dem wenigstens einem Führungsbauteil in Kontakt tritt, von einer Hülse umgeben sein kann, die aus einem Kunststoff, beispielsweise einem Duroplast, einem Elastomer oder einem Thermoplast gefertigt ist. In einem solchen Fall kann optional die Verbindungsstruktur ein Niet umfassen, der mit der betreffenden Tilgermasse verbunden ist und bei dem das Distanzbauteil entlang der Drehrichtung wenigstens teilweise durch einen Nietkopf des Niets geführt wird.

Ergänzend oder alternativ kann bei einem Tilgerschwingungsdämpfer gemäß einem Ausführungsbeispiel die Verbindungsstruktur mit wenigstens einer der Tilgermassen verbunden sein, wobei die Verbindungsstruktur in das Distanzbauteil ausgebildet ist, um durch ein in Kontakt treten der Verbindungsstruktur mit dem Distanzbauteil eine Bewegung der betreffenden Tilgermasse entlang der radialen Richtung zu begrenzen. Optional kann bei einem solchen Tilgerschwingungsdämpfer die Verbindungsstruktur ausgebildet sein, um über die zylinderförmige Außenkontur mit einer schlitzförmigen Ausnehmung des Distanzbauteils in Kontakt zu treten, um die Bewegung der betreffenden Tilgermasse entlang der radialen Richtung zu begrenzen.

Auch bei einem solchen Ausführungsbeispiel eines Tilgerschwingungsdämpfers kann optional die Verbindungsstruktur aus einem metallischen Werkstoff gefertigt sein, wobei der Abschnitt der zylinderförmigen Außenkontur, der mit dem wenigstens einen Führungsbauteil in Kontakt tritt, von einer Hülse umgeben sein kann, die aus einem Kunststoff, beispielsweise einem Duroplast, einem Elastomer oder einem Thermoplast, gefertigt ist. Optional kann bei einem Tilgerschwingungsdämpfer die Verbindungsstruktur einen Niet umfassen, der mit der betreffenden Tilgermasse verbunden ist und bei dem das Distanzbauteil entlang der Drehrichtung wenigstens teilweise durch einen Nietkopf des Niets geführt wird.

Unabhängig von der genauen Implementierung der Hülse kann diese als separates Bauteil, jedoch auch integral mit dem Niet gefertigt sein. Diese kann beispielsweise anvulkanisiert, angeklebt oder mithilfe einer anderen Verbindungstechnik mit dem Niet verbunden sein. Je nach verwendetem Material können hier unterschiedliche Verfahrenstechniken sinnvoll sein. Im Falle eines Elastomere kann der Niet beispielsweise gummiert sein.

Bei einem Tilgerschwingungsdämpfer gemäß einem Ausführungsbeispiel kann optional das Distanzbauteil die Verbindungsstruktur umfassen, die einen Führungsabschnitt aufweist. In einem solchen Fall kann wenigstens eine der Tilgermassen die Verbindungsausnehmung aufweisen, die ein Langloch und/oder eine schlitzförmige Ausnehmung umfasst, in die der Führungsabschnitt eingreift. Der Führungsabschnitt kann hierbei optional eine zylinderförmige oder eine polygonale, beispielsweise rechteckige oder quadratische, Außenkontur aufweisen.

Optional kann bei einem solchen Ausführungsbeispiel das Distanzbauteil einen ringförmigen Abschnitt aufweisen, der mit der sich entlang der Drehachse erstreckenden Verbindungsstruktur verbunden ist. Optional kann bei einem solchen Tilgerschwingungsdämpfer gemäß einem Ausführungsbeispiel das Distanzbauteil einen weiteren ringförmigen Abschnitt aufweisen, der entlang der Drehachse parallel zu dem ringförmigen Abschnitt versetzt angeordnet ist und ebenfalls mit der Verbindungsstruktur verbunden ist. Für den ringförmigen Abschnitt können hierbei die zuvor im Hinblick auf den Ring gemachten Ausführungen entsprechend gelten. So können beispielsweise der ringförmige Abschnitt und/oder der weitere ringförmige Abschnitt einteilig oder auch mehrteilig ausgeführt sein, um nur eine Modifikation zu erläutern.

Alternativ kann bei einem Tilgerschwingungsdämpfer gemäß einem Ausführungsbeispiel das Distanzbauteil wenigsten einen ringsegmentförmigen Abschnitt und einen entlang der Drehachse parallel zu dem ringsegmentförmigen Abschnitt versetzten und mit diesem verbundenen weiteren ringförmigen Abschnitt umfassen, wobei die Verbindungsstruktur sich entlang der Drehachse erstreckt und mit dem ringsegmentförmigen Abschnitt und/oder dem weiteren ringsegmentförmigen Abschnitt verbunden ist. Optional kann bei diesem oder auch anderen Ausführungsbeispielen eines Tilgerschwingungsdämpfers die Verbindungsstruktur und die Verbindungsausnehmung ausgebildet sein, um durch ein in Kontakt Treten der Verbindungsstruktur mit einem Ende der Verbindungsausnehmung eine Bewegung der betreffenden Tilgermasse entlang der radialen Richtung zu begrenzen. Optional kann bei einem solchen Ausführungsbeispiel eines Tilgerschwingungsdämpfers die Verbindungsstruktur aus einem metallischen Werkstoff gefertigt sein, wobei der Abschnitt der zylinderförmigen Außenkontur, der mit dem Ende der Verbindungsausnehmung in Kontakt tritt, von einer Hülse umgeben ist, die aus einem Kunststoff, beispielsweise einem Duroplast, einem Elastomer oder einem Thermoplast, gefertigt ist. Auch hier gilt wiederum das zuvor im Zusammenhang mit der Hülse erwähnte. Bei einem Tilgerschwingungsdämpfer der Erfindung, weist das Distanzbauteil eine Anschlagstruktur auf, die ausgebildet ist, um ein Verdrehen des Distanzbauteils bezüglich des wenigstens einen Führungsbauteils zu begrenzen. Hierdurch kann es gegebenenfalls möglich sein, mit konstruktiv einfachen Mitteln eine Entlastung der spielbehafteten formschlüssigen Verbindung zu realisieren. In einem solchen Fall kann es also beispielsweise möglich sein, die Begrenzung der Verdrehung von der formschlüssigen Verbindung auf die Anschlagstruktur zu übertragen. Bei einem Tilgerschwingungsdämpfer gemäß der Erfindung, umfasst die Anschlagstruktur des Distanzbauteils einen Anschlagsvorsprung oder eine Anschlagsausnehmung, die ausgebildet ist, um in eine Gegenanschlagsausnehmung bzw. einen Gegenanschlagsvorsprung wenigstens eines Führungsbauteils einzugreifen und so eine Verdrehung des Distanzbauteils bezüglich dem wenigstens einen Führungsbauteil zu begrenzen. Hierdurch kann mit konstruktiv einfachen Mitteln, unter effizienter Ausnutzung des zur Verfügung stehenden Bauraums gegebenenfalls eine Reduzierung der Geräusche des Tilgerschwingungsdämpfers während des Betriebs bzw. während seiner Betriebszustände reduziert oder vollständig unterbunden werden.

Optional kann im Zusammenhang mit dem Anschlagsvorsprung und der entsprechenden Gegenanschlagsausnehmung bzw. der Anschlagsausnehmung und des Gegenanschlagsvorsprungs eine Materialpaarung verwendet werden, wie diese zuvor beschrieben wurde. So kann also das Distanzbauteil oder auch das Führungsbauteil beispielweise aus einem metallischen Werkstoff gefertigt sein, während das jeweils andere Bauteil beispielsweise aus einem Kunststoff, also beispielsweise aus einem Duroplast, einem Elastomer oder auch einem Thermoplast gefertigt sein kann.

Ergänzend oder alternativ können bei einem Tilgerschwingungsdämpfer gemäß einem Ausführungsbeispiel die Tilgermassen jeweils wenigstens eine Führungslaufbahn aufweisen. Das wenigstens eine Führungsbauteil kann darüber hinaus für die Tilgermassen jeweils eine Führungslaufbahn aufweisen, die zu den Führungslaufbahnen der Tilgermassen korrespondieren, wobei der Tilgerschwingungsdämpfer für die Tilgermassen jeweils wenigstens einen Wälzkörper aufweist, die ausgebildet sind, um an den Führungslaufbahnen des wenigstens einen Führungsbauteils und denen der Tilgermassen abzurollen, um diese so zu führen, dass eine Auslenkung der Tilgermassen aus ihren jeweiligen Mittellagen zu einer radialen Verlagerung der Schwerpunkte der betreffenden Tilgermassen führt. Hierdurch kann es also möglich sein, einen drehzahladaptiven Tilger zu implementieren.

Optional kann bei einem solchen Ausführungsbeispiel eines Tilgerschwingungsdämpfers eine Begrenzung der Bewegung der wenigstens einen Tilgermasse in der radialen Richtung bewirkt werden, bevor der wenigstens eine betreffende Wälzkörper ein Ende der beteiligten Führungslaufbahnen der Tilgermasse und des wenigstens einen Führungsbauteils erreicht. Hierdurch kann es gegebenenfalls vermieden werden, auch im Bereich der Wälzkörper und des Führungsbauteils eine geräuschmindernde Materialpaarung einzusetzen, durch die gegebenenfalls eine Belastbarkeit der Führung insgesamt, ein Trägheitsmoment der Wälzkörper oder eine Herstellung des wenigstens einen Führungsbauteils erschwert wird.

Ergänzend oder alternativ können beim Tilgerschwingungsdämpfer gemäß einem Ausführungsbeispiel das Distanzbauteil und die Tilgermassen ausgebildet sein, um das Mitnehmen der Tilgermassen entlang der Umfangsrichtung und in entgegengesetzter Richtung zu ermöglichen. Ergänzend oder alternativ hierzu können das wenigstens eine Führungsbauteil, das Distanzbauteil und die Tilgermassen ausgebildet sein, um eine im Wesentlichen symmetrische Schwingung der Tilgermassen um ihre jeweiligen Mittellagen zu ermöglichen. In einem solchen Fall kann das Distanzbauteil in einer spielbehafteten formschlüssigen Verbindung stehen, die so ausgestaltet ist, dass durch eine die Spiele der Verbindung überwindende Verdrehung des Distanzbauteils entlang der Umfangsrichtung die Tilgermassen entlang der Umfangsrichtung mitgenommen werden.

Ergänzend oder alternativ kann bei einem Tilgerschwingungsdämpfer gemäß einem Ausführungsbeispiel das Distanzbauteil mit allen Tilgermassen spielbehaftet formschlüssig so verbunden sein, dass von einer Mittellage einer beliebigen Tilgermasse aller Tilgermassen zu dem Distanzbauteil und den Mittellagen der anderen Tilgermassen zu dem Distanzbauteil bei einer ein Spiel aller Verbindungen der Tilgermassen zu dem Distanzbauteil überwindenden Schwingung der beliebigen Tilgermasse das Distanzbauteil entlang der Umfangsrichtung so verdreht wird, dass dieses alle übrigen Tilgermassen entlang der Umfangsrichtung mitnimmt.

Benachbart sind zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Eine mechanische Kopplung zweier Komponenten umfasst sowohl eine unmittelbare, wie auch eine mittelbare Kopplung. Ein Bauteil ist nahtlos, wenn dieses entlang eines geschlossenen Pfads um eine vorbestimmte Richtung, beispielsweise eine axiale Richtung oder eine Symmetrieachse, keine Naht aufweist, an der durch eine entsprechende Verbindungstechnik, beispielsweise eine stoffschlüssige Verbindungstechnik und hier insbesondere durch ein Schweißen, Löten oder Verkleben, das Bauteil mit sich selbst oder einem anderen Bauteil verbunden ist.

Unter einer einstückig ausgebildeten Komponente wird eine solche verstanden, die genau aus einem zusammenhängenden Materialstück gefertigt ist. Unter einer einteilig gefertigten, bereitgestellten oder hergestellten Komponente oder Struktur oder einer integral mit wenigstens einer weiteren Komponente oder Struktur gefertigten, bereitgestellten oder hergestellten Komponente oder Struktur wird eine solche verstanden, die ohne eine Zerstörung oder Beschädigung einer der wenigstens zwei beteiligten Komponenten nicht von der wenigstens einen weiteren Komponente getrennt werden kann. Ein einstückiges Bauteil stellt so auch wenigstens ein integral mit einer anderen Struktur des betreffenden Bauteils gefertigtes oder einteiliges Bauteil dar.

Trotz des Wortbestandteils "Richtung" kann es sich bei den einzelnen "Richtungen" im vorliegenden Fall nicht notwendigerweise um eine Richtung im mathematischen Sinne eines Vektors, sondern um eine Linie handeln, entlang derer die entsprechende Bewegung erfolgt. Eine solche Linie kann geradlinig, jedoch auch gebogen sein. Abzugrenzen sind hier Richtungen, die tatsächlich Richtungen entlang einer Linie, beispielsweise der Bewegungsrichtung, beschreiben. So kann beispielsweise eine erste Richtung einer zweiten Richtung entgegengerichtet sein, beide jedoch entlang einer auch als Richtung bezeichneten Linie verlaufen oder gerichtet sein.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie wird hierbei als Rotationssymmetrie bezeichnet.

Nachfolgend werden unter Bezugnahme auf die beigefügten Figuren Ausführungsbeispiele näher beschrieben und erläutert.
Fig. 1a zeigt eine Aussicht auf die Tilgermassen eines konventionellen drehzahladaptiven Tilgers in einer Vollauslenkung;
Fig. 1b zeigt eine Aussicht auf die Tilgermassen eines konventionellen drehzahladaptiven Tilgers ohne Betriebsdrehzahl;
Fig. 2 zeigt eine Querschnittsdarstellung durch ein hydrodynamisches Anfahrelement mit einem Tilgerschwingungsdämpfer gemäß einem Ausführungsbeispiel;
Fig. 3a zeigt eine Teilquerschnittsdarstellung durch einen Tilgerschwingungsdämpfer gemäß einem Ausführungsbeispiel;
Fig. 3b zeigt eine Teilaufrissdarstellung des in Fig. 3a gezeigten Tilgerschwingungsdämpfers gemäß einem Ausführungsbeispiel;
Fig. 4a zeigt eine Ausgestaltung einer Tilgermasse eines Tilgerschwingungsdämpfers gemäß einem Ausführungsbeispiel;
Fig. 4b zeigt eine Querschnittsdarstellung einer Verbindungsstruktur eines Distanzbauteils eines Tilgerschwingungsdämpfers gemäß einem Ausführungsbeispiel;
Fig. 5 zeigt eine Teilaufrissdarstellung eines Tilgerschwingungsdämpfers gemäß einem Ausführungsbeispiel in einem Zustand der maximalen Verschwenkung der Tilgermasse;
Fig. 6 zeigt eine Teilaufrissdarstellung des Tilgerschwingungsdämpfers aus Fig. 5 gemäß einem Ausführungsbeispiel mit der Tilgermasse in einer Mittellage;
Fig. 7a zeigt eine Seitenansicht eines Distanzbauteils eines Tilgerschwingungsdämpfers gemäß einem Ausführungsbeispiel;
Fig. 7b zeigt eine Aufsicht auf das Distanzbauteil aus Fig. 7a;
Fig. 8 zeigt eine perspektivische Darstellung eines Distanzbauteils eines Tilgerschwingungsdämpfers gemäß einem Ausführungsbeispiel;
Fig. 9a zeigt eine Querschnittsdarstellung durch ein Distanzbauteil eines Tilgerschwingungsdämpfers gemäß einem Ausführungsbeispiel;
Fig. 9b zeigt eine Aufsicht auf ein weiteres Distanzbauteil eines Tilgerschwingungsdämpfers gemäß einem Ausführungsbeispiel;
Fig. 10a zeigt eine Querschnittsdarstellung durch einen Tilgerschwingungsdämpfer gemäß einem Ausführungsbeispiel;
Fig. 10b zeigt eine Teilaufrissdarstellung des in Fig. 10a gezeigten Tilgerschwingungsdämpfers;
Fig. 11a zeigt eine Seitenansicht eines Distanzbauteils eines Tilgerschwingungsdämpfers gemäß einem Ausführungsbeispiel;
Fig. 11b zeigt eine Aufsicht des in Fig. 11a gezeigten Distanzbauteils;
Fig. 12 zeigt eine perspektivische Darstellung des in den .Fig. 11a und 11b gezeigten Distanzbauteils;
Fig. 13 a zeigt eine Querschnittsdarstellung durch ein hydrodynamisches Anfahrelement mit einem Tilgerschwingungsdämpfer gemäß einem Ausführungsbeispiel;
Fig. 13b zeigt eine Querschnittsdarstellung durch das in Fig. 13a gezeigte hydrodynamische Anfahrelement mit dem Tilgerschwingungsdämpfer in einer verdrehten Position;
Fig. 14a zeigt eine Querschnittsdarstellung durch einen Tilgerschwingungsdämpfer gemäß einem Ausführungsbeispiel;
Fig. 14b zeigt eine Teilaufrissdarstellung des in Fig. 14a gezeigten Tilgerschwingungsdämpfers;
Fig. 15 zeigt eine Aufsicht auf einen Tilgerschwingungsdämpfer gemäß einem Ausführungsbeispiel, bei dem die Tilgermassen in einer Mittellage angeordnet sind;
Fig. 16 zeigt den in Fig. 15 dargestellten Tilgerschwingungsdämpfer in einem Zustand der maximalen Verschwenkung der Tilgermassen;
Fig. 17 zeigt eine Aufsicht auf einen Tilgerschwingungsdämpfer gemäß einem Ausführungsbeispiel;
Fig. 18a zeigt eine Querschnittsdarstellung durch einen Tilgerschwingungsdämpfer gemäß einem Ausführungsbeispiel;
Fig. 18b zeigt eine Vergrößerung einer Verbindungsstruktur und einer Verbindungsausnehmung des in Fig. 18a gezeigten Tilgerschwingungsdämpfers;
Fig. 19 zeigt eine vergrößerte Darstellung einer Verbindungsstruktur mit einer Hülse eines Tilgerschwingungsdämpfers gemäß einem Ausführungsbeispiel;
Fig. 20 zeigt eine perspektivische Darstellung eines Tilgerschwingungsdämpfers gemäß einem Ausführungsbeispiel;
Fig. 21 zeigt eine perspektivische Darstellung eines Tilgerschwingungsdämpfers gemäß einem Ausführungsbeispiel;
Fig. 22 zeigt eine weitere Ausgestaltung eines Tilgerschwingungsdämpfers gemäß einem Ausführungsbeispiels, bei dem das Distanzbauteil als ein Innenring ausgestaltet ist;
Fig. 23 zeigt eine perspektivische Seitenansicht eines Tilgerschwingungsdämpfers gemäß einem Ausführungsbeispiel;
Fig. 24 zeigt eine Aufsicht auf einen Tilgerschwingungsdämpfer gemäß einem Ausführungsbeispiel;
Fig. 25a zeigt eine Aufsicht auf den in Fig. 24 gezeigten Tilgerschwingungsdämpfer;
Fig. 25b zeigt eine Schnittdarstellung durch den in den .Fig. 24 und 25a gezeigten Tilgerschwingungsdämpfer;
Fig. 25c zeigt eine perspektivische Darstellung des Distanzbauteils des Tilgerschwingungsdämpfers aus den Fig. 24, 25a und 25b;
Fig. 26a zeigt eine Darstellung der Tilgermassen des in den Fig. 24, 25a, 25b gezeigten Tilgerschwingungsdämpfers gemäß einem Ausführungsbeispiel mit maximal verschwenkten Tilgermassen;
Fig. 26b zeigt eine Position eines Wälzkörpers in einer Führungslaufbahn eines Führungsbauteils des Tilgerschwingungsdämpfers aus Fig. 26a;
Fig. 26c zeigt eine vergrößerte Aufsicht der Verbindungsstruktur in der Verbindungsausnehmung des Tilgerschwingungsdämpfers aus Fig. 26a;
Fig. 27a und 27b zeigen einen Vergleich der an einer Tilgermasse angreifenden Kräfte bei einem Betrieb des Tilgerschwingungsdämpfers bei einer konstanten Drehzahl des Motors und einem langsamen Drehen des Motors, wenn dieser beispielsweise abgestellt wird;
Fig. 28a zeigt eine perspektivische Darstellung eines Distanzbauteils eines Tilgerschwingungsdämpfers gemäß einem Ausführungsbeispiel der Erfindung;
Fig. 28b zeigt eine Aufsicht auf den Tilgerschwingungsdämpfer gemäß einem Ausführungsbeispiel der Erfindung mit dem in Fig. 28a gezeigten Distanzbauteil;
Fig. 29 zeigt eine perspektivische Darstellung eines Distanzbauteils eines Tilgerschwingungsdämpfers gemäß einem Ausführungsbeispiel; und
Fig. 30a bis 30d zeigen Aufrissdarstellungen eines Tilgerschwingungsdämpfers im Bereich einer Tilgermasse und der Verbindungsstruktur mit unterschiedlich ausgestalteten Verbindungsstrukturen.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Wie bereits eingangs kurz erläutert wurde, werden Schwingungsdämpfer und hier insbesondere Tilgerschwingungsdämpfer in einer Vielzahl von technischen Gebieten eingesetzt, zu denen beispielsweise Antriebstränge eines Kraftfahrzeugs, jedoch auch andere technische Gebiete zählen. Schwingungsdämpfer und Tilgerschwingungsdämpfer können beispielsweise dann eingesetzt werden, wenn eine Drehbewegung Drehungleichförmigkeiten aufweisen, wie sie beispielsweise arbeitsprinzipbedingt bei Verbrennungsmotoren auftreten können. Bei Verbrennungsmotoren, die beispielsweise dem Otto-Prinzip oder dem Diesel-Prinzip folgen, treten stoßartige Kraftentfaltungen und damit stoßartige Drehmomentspitzen auf, die sich sowohl in dem erzeugten Drehmoment, wie auch in der momentanen Drehzahl eines solchen Motors niederschlagen können.

Wird nun beispielsweise in einem Antriebstrang zwischen einem solchen Verbrennungsmotor und ein Getriebe ein Anfahrelement geschaltet, welches dazu dient, auch bei einem Stillstand des Fahrzeugs ein Weiterlaufen des Motors zu ermöglichen, kann es schon aufgrund von Betrachtungen im Hinblick auf den Fahrkomfort im Interesse des Herstellers des betreffenden Fahrzeugs und seiner Kunden liegen, die Drehungleichförmigkeiten aus der Drehbewegung der Kurbelwelle des Motors vor dem Erreichen der Eingangswelle des Getriebes zu entfernen, zumindest jedoch zu reduzieren bzw. zu dämpfen. Zu diesem Zweck können Schwingungsdämpfer im Rahmen entsprechender Anfahrelemente eingesetzt werden, die typischerweise darauf basieren, dass Energiespitzen der Drehbewegung, also beispielsweise Drehmomentspitzen oder kurzzeitige Drehzahlüberhöhungen in Energiespeichern zwischengespeichert werden, bevor diese wiederum an die Eingangswelle des Getriebes weitergegeben werden. Als Anfahrelemente können hierbei sowohl hydrodynamische Anfahrelemente, also beispielsweise ein auch als Wandler bezeichneter Drehmomentwandler, jedoch auch auf einer reibschlüssigen Verbindung basierende Anfahrelemente sowie Kombinationen beider Konzepte verwendet werden.

Schwingungsdämpfer weisen dazu häufig ein Eingangsbauteil und ein Ausgangsbauteil auf, zwischen denen die Energiespeicherelemente eingesetzt sind und über die die Übertragung der Drehbewegung erfolgt. Bei Tilgerschwingungsdämpfern, die kurz auch als "Tilger" bezeichnet werden, erfolgt der Drehmomentfluss nicht über die entsprechenden Energiespeicherelemente. Vielmehr weisen Tilgerschwingungsdämpfer häufig einen Anschluss oder ein Anschlussbauteil auf, an welches die als Energiespeicherelemente wirkende Tilgermassen angekoppelt sind, die von einem oder mehreren Führungsbauteilen so gelagert oder geführt werden, dass bei einer Auslenkung, also einer Schwingung der betreffenden Tilgermassen ein Schwerpunkt derselben radial bewegt wird. Hierdurch können die Tilgermassen in dem durch die Drehbewegung erzeugten Kraftfeld, welches unter anderen die Fliehkraft der Drehbewegung umfasst, potentielle Energie gewinnen. Entsprechende Tilgerschwingungsdämpfer werden auch als drehzahladaptive Tilger bezeichnet.

Energie, die in die Tilgermassen kurzzeitig geflossen ist, kann entsprechend aus diesen wieder abgezogen werden und über das Anschlussbauteil in die Drehbewegung zu einem entsprechenden Zeitpunkt wieder eingekoppelt werden. Ein Tilgerschwingungsdämpfer kann daher Schwingungsanteile dadurch dämpfen, gegebenenfalls sogar vollständig eliminieren, indem er die auftretende Schwingungsenergie kurzzeitig zwischenspeichert und entsprechend zurück in die Drehbewegung einkoppelt.

Die Tilgermassen sind hierbei häufig aus einem metallischen Werkstoff gefertigt, also beispielsweise einem Metall, einer Legierung oder einem ähnlichen metallischen Werkstoff, das beispielsweise auch nicht metallische Komponenten umfassen kann. Je nach Betriebszustand eines solchen Tilgerschwingungsdämpfers können jedoch gegebenenfalls metallische Geräusche entstehen, die von dem Fahrer eines solchen Kraftfahrzeugs bzw. den Passagieren des Kraftfahrzeugs, aber auch von Passanten oder anderen Beobachtern als störend empfunden werden können. Entsprechende metallische Geräusche können beispielsweise im normalen Fahrzeugbetrieb, jedoch auch im Kriechbetrieb des Fahrzeugs auftreten. Ebenso können Sie im Rahmen des Abstellens des Verbrennungsmotors, der kurz auch als Motor bezeichnet wird, auftreten. Dies ist gerade für Motor-Start-Stop-Automatiken (MSA) relevant, wie sie beispielsweise zur Energieeinsparung eingesetzt werden.

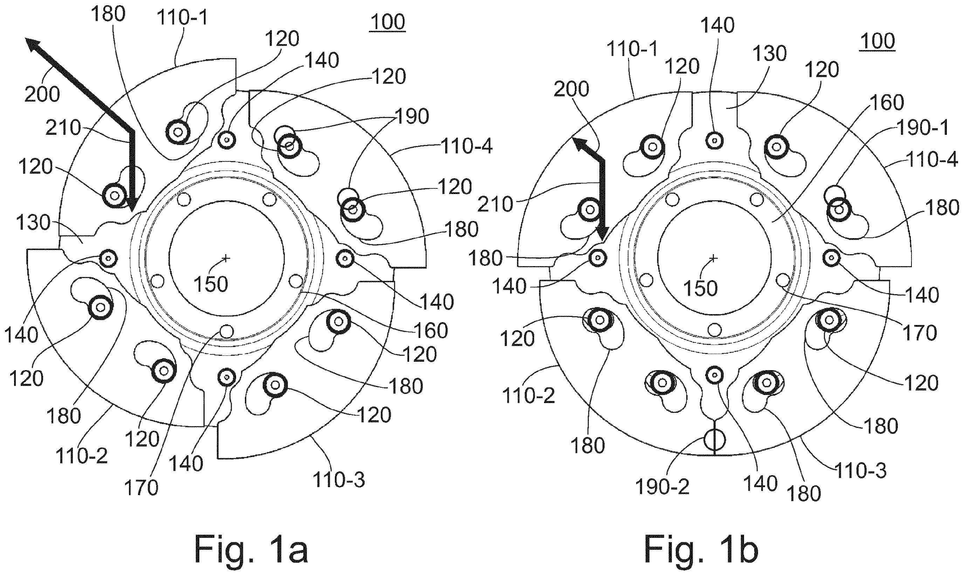

Wie nachfolgend im Zusammenhang mit den Fig. 1a und 1b noch erläutert werden wird, wird durch das Abstellen des Motors im Fahrzeug die Drehzahl und damit auch die Fliehkraft der Tilgermassen des auch als drehzahladaptiven Tilgers bezeichneten Tilgerschwingungsdämpfers reduziert. Ab einer bestimmten Drehzahl können dann die Gewichtskräfte einen erhöhten Einfluss auf die Lage der Tilgermassen im Tilgerschwingungsdämpfer nehmen, sodass diese gegebenenfalls aneinander prallen können. Dieser Effekt kann die zuvor beschriebenen unerwünschten Geräusche hervorrufen.

Die Wahrnehmbarkeit dieser Geräusche kann beispielsweise dadurch erhöht werden, dass das Getriebe trägheitsbedingt auch nach dem Abstellen des Motors einige Sekunden noch nachlaufen kann. Durch das Nachlaufen der Dämpferbaugruppe, welche den Tilgerschwingungsdämpfer umfasst, können die Tilgermassen des Tilgerschwingungsdämpfers aneinander oder in ihre jeweiligen Anschläge schlagen.

Fig. 1a zeigt eine Aufsicht auf einen konventionellen Tilgerschwingungsdämpfer 100, der 4 Tilgermassen 110-1, 110-2, 110-3 und 110-4 aufweist, die jeweils mithilfe zweier Rollen 120 an einem ersten Führungsblech 130 und einem in Fig. 1a nicht gezeigten zweiten Führungsblech so gelagert bzw. geführt sind, dass die Tilgermassen 110 eine Schwingung ausführen können, um einen Schwingungsanteil einer in den Tilgerschwingungsdämpfer 100 eingeleiteten Drehbewegung zu dämpfen. Das zweite Führungsblech, das in Fig. 1a nicht eingezeichnet ist, ist über 4 Distanzbolzen 140 mit dem ersten Führungsblech 130 mechanisch starr bzw. mechanisch fest gekoppelt. Das erste Führungsblech 130 weist darüber hinaus einen beispielsweise entlang einer Drehachse 150 einer in den Torsionsschwingungsdämpfer 100 einleitbaren Drehbewegung fest angeordneten Flansch 160. Der Flansch 160 ist hierbei als Flanschstruktur des ersten Führungsblechs 130 ausgeführt und weist neben meiner entsprechenden Ausstellung, mit deren Hilfe der zuvor beschriebene axiale Versatz entlang der Drehachse 150 erreicht wird, mehrere Bohrungen 170 auf, mit deren Hilfen der Flansch 160 an einer anderen Baugruppe mechanisch drehfest verbindbar ist.

Sowohl das erste Führungsblech 130 als auch das zweite Führungsblech sowie die Tilgermassen 10 weisen hierbei Führungslaufbahnen 180 auf, auf denen die Rollen 120 abrollen. Die Führungslaufbahnen 180 des ersten Führungsblechs 130 korrespondieren hierbei zu denen der entsprechenden Führungslaufbahnen 180 der Tilgermassen 110. So sind, genauer gesagt, in Fig. 1a, lediglich die Führungslaufbahnen der Tilgermassen 110 gezeigt. Um beispielsweise bei einer Auslenkung der Tilgermassen 110 eine Verlagerung ihres Schwerpunktes entlang einer radialen Richtung, die senkrecht auf der Drehachse 150 steht, zu ermöglichen, weisen die Führungslaufbahnen 180 der Tilgermassen 110 im Wesentlichen spiegelsymmetrische Führungslaufbahnen gegenüber denen des ersten Führungsblechs 130 sowie des nicht gezeigten zweiten Führungsblechs auf. Selbstverständlich können die Führungslaufbahnen 180 auch durch eine andere Formgebung derart zueinander korrespondieren, dass die zuvor beschriebene Versetzung des Schwerpunktes bei einer entsprechenden Auslenkung der Tilgermassen 110 realisierbar ist.

Fig. 1a zeigt hierbei eine Situation im Normalbetrieb eines Fahrzeugs, bei dem die zuvor beschriebenen Geräusche durch das Anschlagen der Tilgermassen 110 an den Bahnenden der Führungslaufbahnen 180 entstehen können. So zeigen die Kreise 190 Bereiche an, in denen eine entsprechende Kollision zwischen den Rollen 120 und den Bahnenden der Führungslaufbahnen 180 stattfinden. Dies kann beispielsweise dann der Fall sein, wenn die Tilgermassen 110 aufgrund der auftretenden Schwingungen zu einer größeren Schwingungsamplitude angeregt werden oder tendieren, als der konstruktiv definierte maximale Schwingwinkel dies zulässt.

Unabhängig davon kann also eine entsprechende Geräuschentwicklung auch während des Normalbetriebs auftreten, wenn also beispielsweise eine Fliehkraft 200, eine Gewichtskraft 210, die beide auf die gleiche Tilgermasse 110 einwirken, betragsmäßig größer ist.

Fig. 1b zeigt den konventionellen Torsionsschwingungsdämpfer 100 aus Fig. 1a in einer anderen Betriebssituation. Bei der in Fig. 1b gezeigten Situation sind die auf die Tilgermassen 110 einwirkenden Fliehkräfte 200 betragsmäßig kleiner als die auf diese einwirkenden Gewichtskräfte 210. Eine solche Situation kann beispielsweise dann auftreten, wenn nach dem Ausschalten des Motors die Drehzahl der Getriebeeingangswelle langsam auf null absinkt. Mit sinkender Drehzahl der Getriebeeingangswelle sinkt entsprechend auch die Fliehkraft 200 betragsmäßig, welche auf die Tilgermassen 110 einwirkt.

Hierdurch kann es nun passieren, dass die Tilgermassen 110 keinen oder zumindest nicht so starken radialen Zwangsbedingungen bzw. Zwangskräften unterliegen, sodass die Tilgermassen 110 in diesem Betriebszustand oder Betriebspunkt aufgrund ihrer eigenen Gewichtskräfte 210 entlang der auch als Bahnen bezeichneten Führungslaufbahnen 180 oder frei herunterfallen können. Je nach Drehstellung des Tilgerschwingungsdämpfers 100 können hierbei die Tilgermassen 110 wiederum an ein Bahnende einer Führungslaufbahn 180 schlagen, wie dies beispielsweise durch den Kreis 190-1 dargestellt ist oder auch unmittelbar miteinander kollidieren, wie dies der Kreis 190-2 in Fig. 1d illustriert. Hierdurch kann ein klackerndes, wahrnehmbares metallisches Geräusch verursacht werden, welches sowohl im Inneren, als auch außerhalb des Fahrzeuges wahrnehmbar und häufig als störend empfunden wird.

Bei den Darstellungen der Fig. 1a und 1b zur besseren Übersicht das zweite Führungsbauteil, welches auch als rechts Bahnblech bezeichnet wird, nicht eingezeichnet.

Zur Reduzierung der während des Betriebs oder verschiedener Betriebszustände auftretender Geräusche weisen Ausführungsbeispiele von Tilgerschwingungsdämpfern ein gegenüber dem wenigstens einen Führungsbauteil, welches ein Tilgerschwingungsdämpfer gemäß einem Ausführungsbeispiel umfasst, verdrehbares und formstabiles Distanzbauteil auf, dass mit wenigstens drei Tilgermassen des Tilgerschwingungsdämpfers in einer spielbehafteten formschlüssigen Verbindung steht. Die Verbindungen sind hierbei gerade so ausgestaltet, dass ausgehend von einer Mittellage der betreffenden Tilgermassen zu dem Distanzbauteil bei einer ein Spiel der Verbindungen zweier der Tilgermassen zu dem Distanzbauteil überwindenden Schwingung eine der beiden Tilgermassen das Distanzbauteil entlang einer Umfangsrichtung so verdreht, dass dieses die andere der beiden Tilgermassen entlang der Umfangsrichtung mitnimmt.

Das Distanzbauteil koppelt so die einzelnen Tilgermassen aneinander, ist jedoch dabei als im Wesentlichen ein Bauteil ausgeführt. So kann das Distanzbauteil beispielsweise als Ring implementiert sein und gleichzeitig als Abstandsstück dienen. Aus diesem Grund wird bei manchen Ausführungsbeispielen das Distanzbauteil auch als Distanzring, Führungsring oder Anschlagring bezeichnet. Das nunmehr zunächst beschriebene Ausführungsbeispiel realisiert hierbei die spielbehaftete formschlüssige Verbindung durch eine Nut-Feder-Verbindung, bei der also das Distanzbauteil als Nut-Feder-Ring implementiert ist. Hierdurch kann das Anschlagen der Tilgermassen an die entsprechenden Wälzkörper, die beispielsweise als Rollen implementiert sind, ohne auch die Rollen selbst an den Enden der Führungsbahnen, die auch als Bahnkurven bezeichnet werden, unterbunden werden. Hierdurch kann so ein Geräusch reduziert werden, wenn beispielsweise das Distanzbauteil in den betreffenden Kollisionsbereichen Kunststoff aufweist oder aus Kunststoff gefertigt ist. Die Geräuschdämpfung bzw. Geräuschreduzierung kann sich hierbei beispielsweise dadurch ergeben, dass die Kraft bzw. Impulskraft als Änderung des Impulses mit der Zeit (F = dp/dt = m dv/dt) reduziert wird.

Eine Implementierung aus Kunststoff kann hierbei gegebenenfalls ratsam oder interessant sein, da eine Zeit (t) für eine Geschwindigkeitsänderung (dv) tendenziell kürzer ist, wenn eine Steifigkeit des Bauteils hoch ist. Die Steifigkeit eines Bauteils ist jedoch häufig abhängig vom sogenannten E-Modul, welches bei Kunststoffen typischerweise wesentlich geringer ist als bei beispielsweise bei Stahl. Aus diesem Grund kann der Einsatz eines entsprechenden Werkstoffs mit einem kleineren E-Modul als ein metallischer Werkstoff, beispielsweise Stahl, interessant sein. So kann Kunststoff beispielsweise ein Duroplast, ein Thermoplast oder auch ein Elastomer, also beispielsweise ein Gummi oder ein gummiertes Bauteil, zum Einsatz gebracht werden.

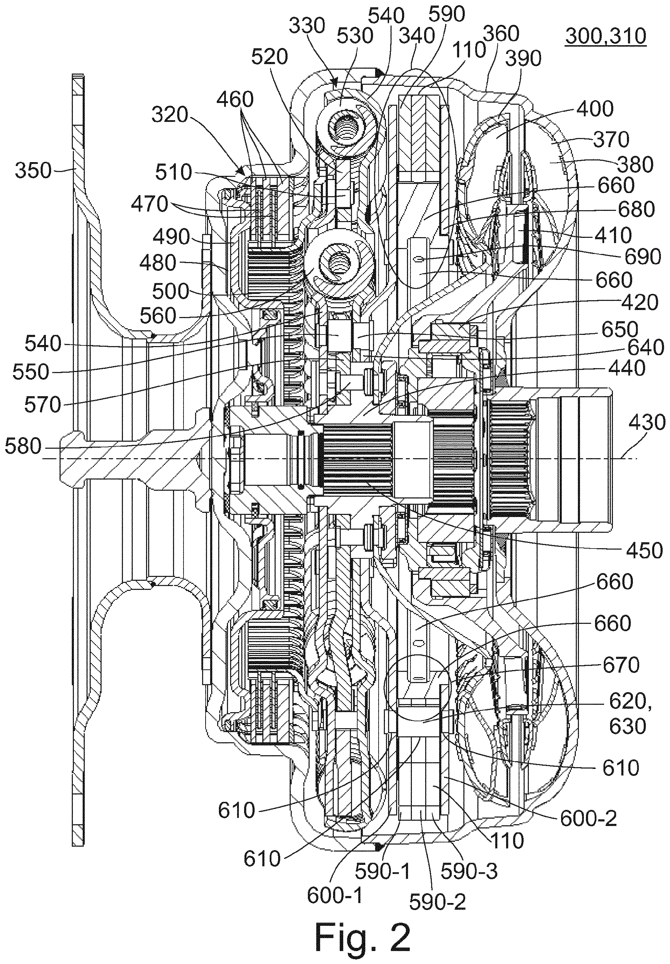

Darüber hinaus kann ein Kunststoff auch eine materialbedingte Dämpfung aufweisen, die sich zusätzlich geräuschreduzierend auswirken kann. Ebenso haben Kunststoffe häufig ein kleineres (spezifisches) Gewicht als viele andere Werkstoffe, beispielsweise Stahl. Wie nachfolgend noch näher erläutert werden wird, bewegt sich hierbei das Distanzbauteil im Wesentlichen entlang der Umfangsrichtung. Durch eine Verringerung der Masse kann so eine Verringerung der Trägheit bzw. einer Verringerung des Trägheitsmomentes erzielt werden, welche der Bewegung entgegenwirkt. So kann durch eine entsprechend geschickte Materialwahl und/oder eine entsprechend geschickte Geometriewahl die Trägheit eines Distanzbauteils aus einem Kunststoff beispielsweise kleiner sein als die eines entsprechenden Bauteils aus Stahl. Nicht zuletzt im Interesse einer Reduzierung der Gesamtmasse eines solchen Fahrzeuges kann es somit gegebenenfalls möglich sein, ein Anwachsen des Eigengewichts eines entsprechenden Anfahrelementes mit einem Tilgerschwingungsdämpfer gemäß einem Ausführungsbeispiel, also beispielsweise eines hydrodynamischen Wandlers, nicht erheblich, wenn überhaupt zu implementieren. Fig. 2 zeigt eine Querschnittsdarstellung durch ein Anfahrelement 300, bei dem es sich genauer gesagt, um einen hydrodynamischen Wandler 310 mit einer Überbrückungskupplung 320, einem zweistufigen Schwingungsdämpfer 330 und einem Tilgerschwingungsdämpfer 340 gemäß einem Ausführungsbeispiel umfasst. Der Torsionsschwingungsdämpfer 340 ist hierbei als drehzahladaptiver Tilger implementiert.

Das Anfahrelement 300 umfasst hierbei eine flexible Anschlussplatte 350, die das Eingangsbauteil des Anfahrelements 300 darstellt und beispielsweise mit einer Motorausgangswelle, also beispielsweise der Kurbelwelle eines Verbrennungsmotors drehfest verbindbar ist. Die flexible Anschlussplatte 350 kann hierbei beispielsweise Taumelschwingungen und andere mechanische Vibrationen von einem Gehäuse 360 des Anfahrelements 300 entkoppeln. Ebenso kann die flexible Anschlussplatte 350 beispielsweise - je nach verwendeten Verbrennungsmotor - einen axialen Bauraum zwischen dem Anfahrelement 300 und dem in Fig. 2 nicht gezeigten Verbrennungsmotor überbrücken.

Die flexible Anschlussplatte 350 ist hierbei mit dem Gehäuse 360 drehfest verbunden, auf welches also die Drehbewegung des Motors übertragen wird. Die hydrodynamischen Komponenten des Anfahrelementes 300 umfassen hierbei eine Pumpenstruktur 370, welche eine Vielzahl von mit dem Gehäuse 360 mechanisch drehfest verbundenen Pumpenschaufeln 380 umfasst. Durch die Drehbewegung des Gehäuses 360 wird ein im Inneren des Gehäuses 360 befindliches hydrodynamisches Medium, beispielsweise ein Wandleröl, beschleunigt und auf ein Turbinenrad 390 hin beschleunigt, welches eine Vielzahl von Turbinenschaufeln 400 umfasst, die mit dem Turbinenrad 390 ebenso drehfest, beispielsweise über eine formschlüssige Verbindung durch ein Krimpen formschlüssig verbunden sind. Die hydrodynamischen Komponenten umfassen ferner einen Leitrad 410, welches über einen Freilauf 420 drehbar um eine Drehachse 430 der in das Anfahrelement 300 einleitbaren Drehbewegung gelagert ist. Der Freilauf 420 ermöglicht hierbei eine freie Bewegung des Leitrads 410 in einer Drehrichtung, während in der entgegengesetzten Richtung der Freilauf 420 blockiert.

Das Turbinenrad 390 ist hierbei über eine oder mehrere Nietverbindungen mit einer Abtriebsnabe 440 verbunden, die das Ausgangsbauteil des Anfahrelementes 300 darstellt und die über eine Innenverzahnung 450 mit einer Getriebeeingangswelle drehfest koppelbar ist, die jedoch in Fig. 2 nicht dargestellt ist.

Über die vorgenannten hydrodynamischen Kopplungen kann so das Drehmoment von der flexiblen Anschlussplatte 350 und den durch das Pumpenrad 370 bewirkten Fluidstrom des hydrodynamischen Mediums auf die Abtriebsnabe 440 und damit an das Ausgangsbauteil des Anfahrelementes 300 übertragen werden. Um jedoch eine Überbrückung der hydrodynamischen Wandlerkomponenten im Interesse einer Steigerung des Wirkungsgrades des Anfahrelementes 300 zu ermöglichen, weist dieses ferner die Überbrückungskupplung 320 auf, bei der bei dem hier gezeigten Ausführungsbeispiel eines Anfahrelementes 300 mehrere Außenlamellen 460, die ihrerseits drehfest mit dem Gehäuse 360 verbunden sind, mit entsprechenden Innenlamellen 470 in einen reibschlüssigen Kontakt gebracht werden können, in dem ein Kolbenvolumen 480 mit Druck beaufschlagt wird und so einen Kolben 490 gegen die Außenlamellen 460 drückt. Die Innenlamellen 470 sind ihrerseits drehfest mit einem Innenlamellenträger 500 gekoppelt. Um jedoch ein Einkuppeln und Auskuppeln, also ein Schaffen bzw. Lösen des reibschlüssigen Kontaktes zu ermöglichen, sind diese zumindest teilweise entlang der Drehachse 430, also entlang der axialen Richtung, verschiebbar angeordnet.

Der Innenlamellenträger 500 ist mit einem zweistufigen Schwingungsdämpfer 330 gekoppelt. So ist über eine Distanzvernietung 510 der Innenlamellenträger 500 mit einer äußeren Zentralscheibe 520 drehfest gekoppelt, die in Anlage mit ersten Federelementen 530 stehen. Die äußere Zentralscheibe 520 stellt so das Eingangsbauteil des Schwingungsdämpfers 330 dar.

Die ersten Federelemente 530 stehen darüber hinaus mit zwei Abdeckblechen 540, die zu beiden Seiten entlang der Drehachse 430 an die ersten Federelemente 530 angrenzen, in Kontakt. Über eine weitere Distanzvernietung 550 sind die beiden Abdeckbleche 540 miteinander und dem Torsionsschwingungsdämpfer 340 gemäß einem Ausführungsbeispiel gekoppelt. Die beiden Abdeckbleche 540 stehen darüber hinaus mit zweiten Federelementen 560 in Anschlag, welche darüber hinaus mit einer inneren Zentralscheibe 570 in Anlage steht, die ebenso mit der Abtriebsnabe 440 über eine Vernietung 580 drehfest verbunden ist.

Die ersten Federelemente 530 stellen hierbei die erste Stufe des zweistufigen Schwingungsdämpfers 330, die zweiten Federelemente 560, die zweite Stufe des zweistufigen Schwingungsdämpfers 330 dar. Der Torsionsschwingungsdämpfer 340 gemäß seinem Ausführungsbeispiel ist hierbei mit den als Zentralmasse dienenden Abdeckblechen 540 mechanisch drehfest gekoppelt.

Der Tilgerschwingungsdämpfer 340 gemäß seinem Ausführungsbeispiel weist mehrere, typischerweise wenigstens drei Tilgermassen 110 auf, die, wie bereits zuvor erläutert wurde, gerade so ausgebildet sind, dass diese in Abhängigkeit von der in den Torsionsschwingungsdämpfer 340 eingeleiteten Drehbewegung eine Schwingung ausführen können, um einen Schwingungsanteil derselben zu dämpfen, der beispielsweise eine Folge einer Drehungleichförmigkeit sein kann. Die Tilgermassen 110 sind hierbei entlang der Umfangsrichtung, also senkrecht zu der Drehachse 430 der Drehbewegung versetzt angeordnet. Sie sind bei dem hier gezeigten Ausführungsbeispiel mehrteilig, genauer gesagt dreiteilig ausgeführt. So umfasst jede der Tilgermassen 110 hier drei entlang der Drehachse 430 zueinander versetzt angeordnete Teiltilgermassen 590, von denen in Fig. 2 in der oberen Hälfte der Darstellung ein exemplarisch mit dem Bezugszeichen 590 bezeichnet ist, in der unteren Hälfte die entsprechenden Teiltilgermassen 590 der Tilgermasse 110 mit individuellen Bezugszeichen 590-1, 590-2 und 590-3 bezeichnet sind. Die Teiltilgermassen 590 sind hierbei nicht miteinander mechanisch starr oder fest verbunden, weshalb diese untereinander als Massen 110 betrachtet werden können.

Bei dem hier gezeigten Ausführungsbeispiel weist der Tilgerschwingungsdämpfer 340 genauer gesagt vier entlang der Umfangsrichtung im Wesentlichen äquidistant verteilte Tilgermassen 110 auf, die jeweils drei untereinander nicht gekoppelte Teiltilgermassen 590 umfassen. Selbstverständlich können bei anderen Ausführungsbeispielen auch andere Anzahlen von Tilgermassen 110 und/oder anders aufgebaute Tilgermassen 110 zum Einsatz kommen. Ein Tilgerschwingungsdämpfer 340 gemäß seinem Ausführungsbeispiel weist hierbei jedoch wenigstens drei Tilgermassen 110 auf. Die einzelnen Tilgermassen 110, die - wie bereits erläutert wurde - entlang der Umfangsrichtung verteilt sind, können hierbei äquidistant, jedoch auch abweichend angeordnet sein.

Auch können sie unterschiedlich aufgebaut sein, also beispielsweise einteilig ausgebildet sein. Ebenso können sie mehrere Teiltilgermassen 590 aufweisen, wobei eine dreiteilige Ausgestaltung, wie diese in Fig. 2 gezeigt ist, bei Weitem nicht zwingend ist. So können auch weniger oder mehr Teiltilgermassen 590 im Rahmen einer Tilgermasse 110 zum Einsatz kommen. Auch können diese gegebenenfalls untereinander, sofern sie überhaupt implementiert sind, miteinander fest oder starr verbunden sein.

Darüber hinaus weist der Tilgerschwingungsdämpfer 340, wie in Fig. 2 gezeigt ist, ein erstes Führungsbauteil 600-1 und ein zweites Führungsbauteil 600-2 auf, das bezogen auf das erste Führungsbauteil 600-1 entlang der Drehachse 430 versetzt angeordnet ist. Die Führungsbauteile 600 sind hierbei ausgebildet, um die Tilgermassen 110 derart beweglich zu führen, sodass diese entlang der Umfangsrichtung nicht nur versetzt angeordnet sind, sondern ebenso die entsprechenden Schwingungen ausführen können, um einen Schwingungsanteil einer Drehbewegung zu dämpfen.

Zu diesem Zweck weist der hier dargestellte Tilgerschwingungsdämpfer 340 an beiden Führungsbauteilen 600 entsprechende Führungslaufbahnen 610 auf, die zusammen mit entsprechenden Führungslaufbahnen 610 in den Tilgermassen 110 derart ausgebildet sind, sodass ein oder mehrere Wälzkörper 620 an diesem abrollen und so die entsprechende Führung der Tilgermassen 110 zu den Führungsbauteilen 600 vermitteln können. Die Wälzkörper 620 sind hierbei als gestufte Rollen 630 ausgeführt. Die Führungslaufbahnen 610 der Tilgermassen 110 korrespondieren hierbei zu den Führungslaufbahnen 610 der Führungsbauteile 600 derart, dass bei einer Auslenkung der Tilgermassen 110 aus ihren jeweiligen Mittellagen eine radiale Verlagerung des Schwerpunktes der betreffenden Tilgermasse 110 erfolgt. Diese können beispielsweise im Wesentlichen spiegelbildlich ausgeführt sein, wie dies nachfolgend noch näher erläutert werden wird.

Bei anderen Ausführungsbeispielen können selbstverständlich unterschiedliche Anzahlen von Führungsbauteilen 600 als die in Fig. 2 gezeigten zwei Führungsbauteile 600-1, 600-2 implementiert werden. So kann es beispielsweise möglich sein, auch nur mit einem einzigen Führungsbauteil 600 die wenigstens drei Tilgermassen 110 entsprechend zu führen. Je nach konkreter Ausgestaltung kann es in einem solchen Fall gegebenenfalls ratsam sein, die Tilgermassen 110 entlang der Drehachse 430 zu beiden Seiten des Führungsbauteils 600 anzuordnen. Darüber hinaus ist es jedoch auch möglich, mehr als zwei Führungsbauteile 600 zu implementieren.

Bei dem hier gezeigten Ausführungsbeispiel sind die Führungsbauteile 600 aus einem blechartigen Werkstoff, typischerweise aus einem Stahlblech gefertigt, weshalb diese auch als Führungsbleche oder auch - wegen der integrierten Führungslaufbahnen 610 - als Bahnbleche bezeichnet werden. Sie sind hier im Wesentlichen scheibenförmig bzw. ringförmig implementiert, wobei das erste Führungsbauteil 600-1 eine Flanschstruktur 640 mit mehreren Bohrungen 650 aufweist, mit deren Hilfe das erste Führungsbauteil 600-1 mit den Abdeckblechen 540 des Schwingungsdämpfers 330 verbunden ist.

Darüber hinaus umfasst der Tilgerschwingungsdämpfer 340 ferner ein formstabiles Distanzbauteil 660, welches um die Drehachse 430 der Drehbewegung verdrehbar ausgestaltet ist. Das Distanzbauteil 660 steht hierbei mit den Tilgermassen 110 in einer spielbehafteten formschlüssigen Verbindung, die grade so ausgestaltet sind, dass ausgehend von einer Mittellage der Tilgermassen 110 zu dem Distanzbauteil 660 bei einer ein Spiel der betreffenden Verbindungen zweier der Tilgermassen 110 zu dem Distanzbauteil 660 überwindenden Schwingung das Distanzbauteil 660 entlang der Umfangsrichtung gerade so verdreht wird, dass dieses die andere der beiden Tilgermassen 110 ebenfalls entlang der Umfangsrichtung mitnimmt. Hierdurch werden also die Tilgermassen 110 im Wesentlichen parallel durch das Distanzbauteil 660 durch das entsprechende Spiel geführt.

Bei dem hier gezeigten Ausführungsbeispiel wird die entsprechende Verbindung durch eine Nut-Feder-Verbindung 670 realisiert, wie diese in dem entsprechenden Kreis 670 in Fig. 2 angedeutet ist. Aus diesem Grund wird das Distanzbauteil 660 auch als Nut- und Feder-Ring bezeichnet, da diese ebenso - abgesehen von den entsprechenden Federstrukturen - im Wesentlichen ringförmig ausgestaltet ist. Das Distanzbauteil 660 weist hierbei eine umlaufende Schulter 680 auf, mit deren Hilfe das Distanzbauteil 660 sowohl in radialer, wie auch in axialer Richtung, also entlang der Drehachse 430 durch das zweite Führungsbauteil 600-2 geführt wird.

Darüber hinaus weist das Distanzbauteil 660 mehrere Löcher, bzw. Bohrungen 690 auf, die beispielsweise einer Gewichtsreduzierung, jedoch auch einem Zustrom bzw. Abfluss von dem hydraulischen Medium in einen Bereich zwischen dem Distanzbauteil 660 und den Tilgermassen 110 dienen kann, um so einer durch das hydraulische Medium hervorgerufene Dämpfung der Schwingung der Tilgermassen 110 entgegen zu wirken.

Selbstverständlich können Distanzbauteile 660 bei anderen Ausführungsbeispielen auch anders ausgeführt werden, wie die nachfolgende Beschreibung noch zeigen wird. So ist beispielsweise das Vorsehen von Bohrungen 690 bei Weitem keine zwingende Maßnahme.

Wie die nachfolgende Beschreibung noch zeigen wird, werden die Tilgermassen 110 durch Federn nach dem Nut-Feder-Prinzip an dem als Ring ausgebildeten Distanzbauteil 660 relativ zueinander in Position gehalten. Ein Abstandswinkel der Tilgermassen 110 zueinander, bezogen auf die Drehachse 340, ändert sich hierbei im Wesentlichen nicht. Somit kann in vielen Betriebssituationen ein Gegeneinanderschlagen der Tilgermassen 110 unterbunden werden.

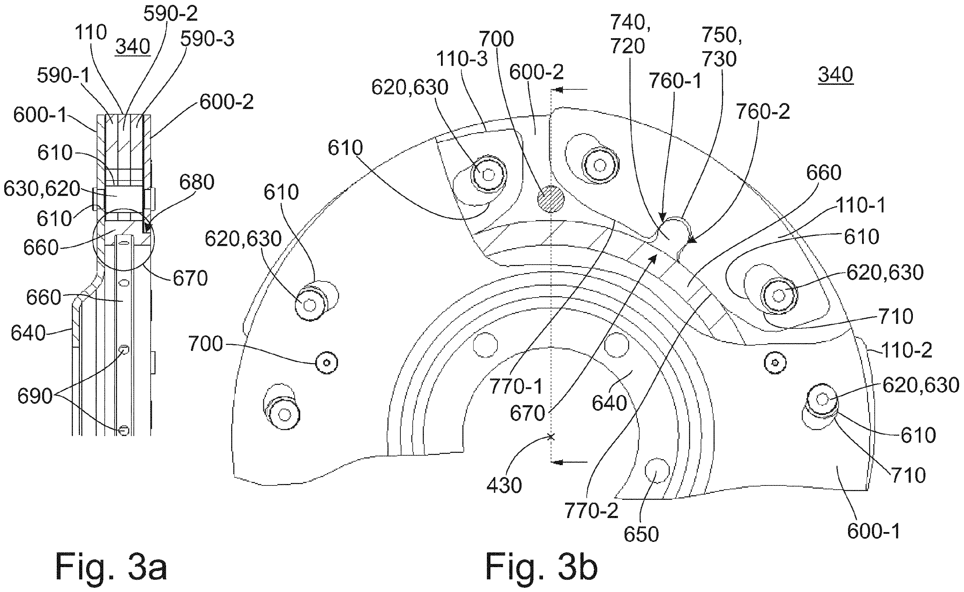

Wie die nachfolgenden Fig. 3a und 3b zeigen werden, kann bei diesem Ausführungsbeispiel auch eine einzelne Tilgermasse 110 nicht durch die auf sie einwirkende Schwerkraft in den Anschlag schlagen, wenn beispielsweise der Motor abgestellt wird oder aus anderen Gründen langsam dreht. Aufgrund der zuvor beschriebenen, im Wesentlichen parallelen Führung der Tilgermassen 110 kann dies im Wesentlichen nur für alle Tilgermassen 110, die mit dem Distanzbauteil 660 gekoppelt sind, also alle Tilgermassen 110 bei dem hier gezeigten Ausführungsbeispiel gleichzeitig geschehen.

Als Anschlag wirkt jedoch aufgrund der hier gewählten Konstruktion nicht das Ende der betreffenden Führungslaufbahnen, also nicht die entsprechenden Bahnkurven, sondern vielmehr das Distanzbauteil 660 selbst, wobei sich die Tilgermassen 110 gegenseitig entlang der Umfangsrichtung abstützen. Bei dem hier gezeigten Ausführungsbeispiel wird daher eine Bewegung der Tilgermassen 110 entlang der radialen Richtung und/oder ein maximaler Schwingwinkel der Tilgermassen 110 dadurch begrenzt, dass das Distanzbauteil 610 mit den Tilgermassen 110 außerhalb der spielbehafteten formschlüssigen Verbindung in Kontakt tritt. Genauer gesagt ist das Distanzbauteil 660 als Distanzinnenring ausgebildet, um so bei wenigsten einer der miteinander gekoppelten Tilgermassen 110 die nach radial innen gerichtete Bewegung über eine vorbestimmte Distanz hinaus abzufangen. Aufgrund der parallelen Führung wird so ein unkontrolliertes Stürzen aller Tilgermassen 110, die mit dem Distanzbauteil 660 entsprechend verbunden sind, unterbunden.

Fig. 3a zeigt eine Querschnittsdarstellung durch den Tilgerschwingungsdämpfer 340, während Fig. 3b eine Teilaufrissdarstellung des Tilgerschwingungsdämpfers 340 zeigt.

Fig. 3a illustriert wiederum den inneren Aufbau der Tilgermassen 110 mit ihren drei Teiltilgermassen 590-1, 590-2, 590-3 sowie den zugehörigen Laufbahnen 610 der Tilgermasse 110 und der beiden Führungsbauteile 600-1, 600-2. Ebenso ist wiederum die durch die Schulter 680 implementierte radiale und axiale Lagerung dargestellt. Darüber hinaus ist wiederum die Nut-Feder-Verbindung 670 gezeigt.

Bei der Teilaufrissdarstellung der Fig. 3b ist das erste Führungsbauteil 600-1 mit der Flanschstruktur 640 und ihren Bohrungen 650 gezeigt. Ebenso ist das entlang der Drehachse 430 parallel versetzte Führungsbauteil 600-2 gezeigt, welches mit dem ersten Führungsbauteil 600-1 über den Distanzbolzen 700 verbunden ist.

Wie bereits zuvor erwähnt wurde, weisen die Führungsbauteile 600 ebenso Führungslaufbahnen 610 auf, wie auch die Tilgermassen 110. Die Geometrien und Anordnungen der Führungslaufbahnen 610 der Führungsbauteile 600 und der Tilgermassen 110 korrespondieren hierbei gerade zueinander so, dass bei einer Auslenkung der Tilgermassen 110 aus ihrer Mittellage eine Verlagerung des Schwerpunkts der betreffenden Tilgermasse 110 entlang der radialen Richtung eintritt. Zu diesem Zweck weisen die Führungslaufbahnen 610 einen gebogenen Abschnitt 710, der beispielsweise ellipsensegmentförmig oder kreissegmentförmig ausgestaltet sein kann, auf. Eine dem betreffenden gebogenen Abschnitt 710 gegenüberliegende Seite weist eine entsprechende Ausstülpung auf, sodass die entsprechende Ausnehmung, welche die Führungslaufbahnen 610 in den Tilgermassen 110 und den Führungsbauteilen 600 bildet, eine im Wesentlichen nierenförmige Struktur oder Ausgestaltung bei dem hier gezeigten Ausführungsbeispiel aufweist, weshalb die Laufbahn 610 auch als "Niere" bezeichnet wird. Die vorgenannte Ausstülpung kann jedoch ebenso entfallen. Auch können die bestreffenden Ausnehmungen, die die Führungslaufbahnen 610 bilden, anders ausgestaltet sein, sofern diese beispielsweise in einem solchen Sinn zueinander korrespondieren, dass es bei einer Verlagerung bzw. Auslenkung der Tilgermassen 110 aus ihren Mittellagen es zu der beschriebenen Veränderung des radialen Abstands der Schwerpunkte der betreffenden Tilgermasse 110 kommt.

Wie beispielsweise ein Vergleich der entsprechenden Führungslaufbahn 610 der Tilgermasse 110-3 und des ersten Führungsbauteils 600-1, die ebenfalls der Tilgermasse 110-3 zugeordnet ist, zeigt, sind die Führungslaufbahnen 610 hinsichtlich ihrer geometrischen Ausgestaltung einander sehr ähnlich, jedoch spiegelverkehrt angeordnet. Hierdurch kann durch ein entsprechendes Abrollen der Wälzkörper 620 die beschriebene Verlagerung des Schwerpunkts der Tilgermassen 110 realisiert werden.

Die Nut-Feder-Verbindung 670, wie sie in Fig. 3a und 3b gezeigt ist, stellt ein Beispiel einer spielbehafteten formschlüssigen Verbindung dar. So weist das Distanzbauteil 660 bei dem hier gezeigten Ausführungsbeispiel eine Verbindungsstruktur 720 auf, während die Tilgermasse 110 eine entsprechende Verbindungsausnehmung 730 aufweist. Die Verbindungsstruktur 720 und die Verbindungsausnehmung 730 sind hierbei gerade so ausgebildet, dass die Verbindungsstruktur 720 in die Verbindungsausnehmung 730 eingreifen kann, um so einerseits die beschriebene Führung bzw. Mitnahme der Tilgermasse 110 entlang der Umfangsrichtung zu ermöglichen, andererseits jedoch eine radiale Bewegung der Verbindungsstruktur 720 zu der Verbindungsausnehmung 730 bzw. ergänzend oder alternativ hierzu eine Verdrehung der Verbindungsstruktur 720 zu der Verbindungsausnehmung 730 zu ermöglichen. Da diese mit dem Distanzbauteil 660 bzw. der Tilgermasse 110 verbunden, bzw. integral mit diesen ausgeführt sind, ergibt sich entsprechend auch eine radiale Beweglichkeit bzw. Verdrehbarkeit der betreffenden Bauteile zueinander. Hierbei weist die als Feder 740 ausgestaltete Verbindungsstruktur 720 zu der als Nut 750 ausgeführten Verbindungsausnehmung jeweils in der gezeigten Darstellung einen kleinen Abstand 760-1, 760-2 auf, die das Spiel der Verbindung darstellen.

Das Distanzbauteil 660 kann sich hierbei entlang der Umfangsrichtung bewegen, wird jedoch radial durch die Schulter 680 an dem zweiten Führungsbauteil 600-2 gelagert bzw. geführt. Die Tilgermassen 110 weisen darüber hinaus an einer radial innenliegenden Seite jeweils symmetrisch zu der Verbindungsausnehmung 730 angeordnete Kontaktbereiche 770-1, 770-2 auf, die konkav und gekrümmt ausgestaltet sind, sodass diese einen möglichst flächigen Kontakt zu dem Distanzbauteil 660 im Falle des Auftreffens auf dieses ermöglichen. Handelt es sich bei dem Distanzbauteil 660 im Wesentlichen um einen Ring bzw. eine ringförmige Struktur, wie dies Fig. 3b beispielsweise zeigt, können die Kontaktbereiche 770 beispielsweise kreissegmentförmig ausgestaltet sein, wobei deren Radius dem Radius des Distanzbauteils im Bereich des Anschlags entspricht, an dem die Tilgermassen 110 mit diesem in Kontakt treten. Selbstverständlich können bei anderen Ausführungsbeispielen auch andere Ausgestaltungen der Kontaktbereiche 770 implementiert werden, wenn beispielsweise das Distanzbauteil 660 von einer Ringform weitere Abweichungen aufweist. So können beispielsweise das Distanzbauteil 660 sowie die Kontaktbereiche 770 auch geradlinig in den betreffenden Bereichen ausgeführt sein oder aber eine andere Form aufweisen.

Ist beispielsweise das Distanzbauteil 660 aus einem Kunststoff gefertigt, kann aufgrund dessen mechanische Eigenschaften, wie beispielsweise dem E-Modul oder seiner Dämpfungswirkung, gegebenenfalls eine Flächenpressung im Bereich des Kontaktbereichs 770 und damit eine Geräuschbildung und/oder gegebenenfalls ein Verschleiß reduziert werden, wenn die entsprechende Fläche des Kontaktbereich 770 vergrößert wird.

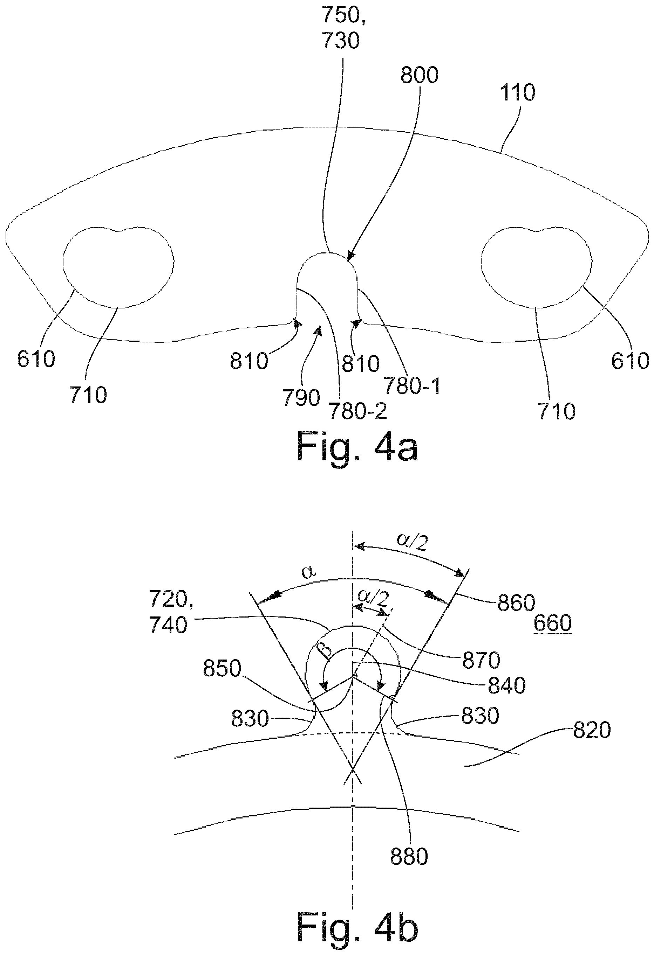

Fig. 4a zeigt eine Seitenansicht einer Tilgermasse 110, die beispielsweise die Ausnehmungen zeigt, welche die Führungsbahnen 610 mit den gebogenen Abschnitten 710 bildet. Darüber hinaus zeigt Fig. 4a die auch als Führungsnut bezeichnete Nut 750, welche die hier verwendete Verbindungsausnehmung 730 darstellt. Die Verbindungsausnehmung 730 weist bei diesem Ausführungsbeispiel zwei einander gegenüberliegende gerade Abschnitte 780-1 und 780-2 auf, in denen sich in Fig. 4a nicht gezeigte Feder 740 mit ihrer Rundung dreh- und radial bewegen kann, während sie 110 entlang der Umfangsrichtung mitnimmt, wenn das Spiel der betreffenden Nut-Feder-Verbindung überwunden wird. Anders ausgedrückt kann die Verbindungsausnehmung 730 zusammen mit der Verbindungsstruktur 720 die Tilgermasse 110 in Umfangsrichtung fixieren. Die geraden Abschnitte 780 sind hierbei zwischen einem offenen Ende 790 und einem geschlossenen Ende 800 der Verbindungsausnehmung 730 angeordnet. Darüber hinaus verlaufen die bei dem hier gezeigten Ausführungsbeispiel im Wesentlichen parallel, können jedoch auch beispielsweise in Richtung auf das geschlossene Ende 800 zusammenlaufend ausgeführt sein. Ebenso können sie gegebenenfalls auch zu dem geschlossenen Ende 800 hin auseinanderlaufend ausgestaltet sein.

Die Verbindungsausnehmung 730 weist darüber hinaus im Bereich des offenen Endes 790 zu beiden Seiten jeweils eine Abrundung 810 mit einem Radius auf, der zur Vermeidung einer Kollision bzw. eines Punktkontaktes mit dem Distanzbauteil 660 vorgesehen ist.

Um dies näher zu erläutern, zeigt Fig. 4b eine Seitendarstellung des Distanzbauteils 660 mit der als Feder 740 ausgeführten Verbindungsstruktur 720. Diese weist an einem Übergang zu einem rein ringförmigen Abschnitt 820 des Distanzbauteils 660 entsprechende Abrundungen 830 auf, die zur Reduzierung mechanischer Beanspruchung des Materials des Distanzbauteils 660 in diesem Bereich integriert sind. Die Abrundungen 810 mit ihren Radien der Tilgermasse 110 sind hierbei gerade auf die Radien der Abrundungen 830 ausgelegt, sodass die Tilgermassen 110 gerade nicht mit den Abrundungen 830 in Kontakt treten, was zu Punkt- oder Linienkontakten mit einer hohen Flächenpressung führen könnte. Hierdurch könnte es passieren, dass nicht nur das Distanzbauteil 660 bzw. die Tilgermasse 110 einer besonderen mechanischen Belastung unterworfen wird, es könnte vielmehr auch zu einer Beeinträchtigung der freien Schwingbarkeit der Tilgermasse 110 kommen.

Darüber hinaus zeigt Fig. 4b, dass die Verbindungsstruktur 720 wenigstens teilweise eine kreisförmige und/oder elliptische Außenkontur senkrecht zu der Fig. 4b nicht eingezeichneten Drehachse 430 aufweist, die sich über einen vorbestimmten Öffnungswinkel α von mehr als 0° erstreckt. Der Öffnungswinkel α zerfällt hierbei gegenüber der radialen Richtung 840 in zwei symmetrische Halbwinkel a/2. Ausgehend von einem Mittelpunkt 850 erstreckt sich hierbei die kreisförmige bzw. elliptische Außenkontur über einen Winkel β, der wiederum bezogen auf die radiale Richtung 840 in zwei symmetrische Halbwinkel β/2 zerfällt. Ausgehend von einer Tangente 860 an die kreisförmige bzw. elliptische Außenkontur der Verbindungsstruktur 720 ergibt sich durch Parallelversetzen derselben durch den Mittelpunkt 850 eine Linie 870, die ebenso mit der radialen Richtung 840 den Winkel a/2 einschließt. Da die Tangente 860 auf einem Radius 880 der kreisförmigen bzw. elliptischen Außenkontur senkrecht steht, gilt dies ebenso für die Linie 870, weshalb für den Erstreckungswinkel β bzw. seinen Halbwinkel β/2 der kreisförmige bzw. der elliptischen Außenkontur im Verhältnis zu dem Öffnungswinkel α bzw. seinem Halbwinkel α /2 die Beziehung β /2 = α /2 + 90° gilt. Entsprechend gilt für den Erstreckungswinkel β im Verhältnis zu dem Öffnungswinkel α die Beziehung β = α + 180°.

Ist nun die Verbindungsausnehmung 730 ausgebildet, um die Verbindungsstruktur 720 derart aufzunehmen, sodass diese eine Verdrehung der betreffenden Tilgermasse 110 um den Öffnungswinkel α zulässt, kann es gegebenenfalls im Falle der in Fig. 4 dargestellten parallelen Ausgestaltung der geraden Abschnitte 780 sinnvoll sein. Die betreffende kreisförmige bzw. elliptische Außenkontur mit einem Erstreckungswinkel β = α + 180° oder mehr auszugestalten. Dadurch dass die Verbindungsausnehmung 730 darüber hinaus die geraden Abschnitte 780 aufweist, kann darüber hinaus die Verbindungsstruktur 720 zu der Verbindungsausnehmung 730 ebenso eine Bewegung entlang der radialen Richtung 840 ermöglichen. Der Winkel α sollte hierbei an die möglichen Verdrehungen der Tilgermassen 110 gegenüber dem Distanzbauteil 660 angepasst werden, um so das Entstehen von Zwangskräften möglichst zu vermeiden. Die Situation hierbei entspricht etwa der eines runden Zapfens in einer Führung von parallelen Flächen.

Selbstverständlich kann es an dieser Stelle ratsam sein, den Öffnungswinkel bzw. Winkel α an die möglichen Verdrehungen der Tilgermasse 110 gegenüber dem Distanzbauteil 660 anzupassen.

Wie die Fig. 4a und 4b gezeigt haben, sind die Flächen der auch als Aussparung bezeichneten Verbindungsausnehmung 730 in den Tilgermassen 110 parallel zueinander ausgerichtet. Zwischen diesen parallelen Flächen 780 kann sich so die Rundung der Verbindungsstruktur 720, also die Rundung der Feder 740 des Distanzbauteils 660 (Nut-Feder-System) bewegen.

Die Verbindungsausnehmungen 730 in den Tilgermassen sind hierbei radial innen ausgestaltet. Dadurch kann zwar die Masse der einzelnen Tilgermassen 110 sinken, gegenüber gegebenenfalls anderer Implementierungen kann hierdurch jedoch eine Anzahl der vorgesehenen Aussparungen gegebenenfalls reduziert werden. Ebenso können gegebenenfalls entsprechende Aussparungen radial weiter außen sitzen, was zu einer weiteren Reduzierung der Masse bzw. einer Reduzierung des Trägheitsmoments führen könnte.

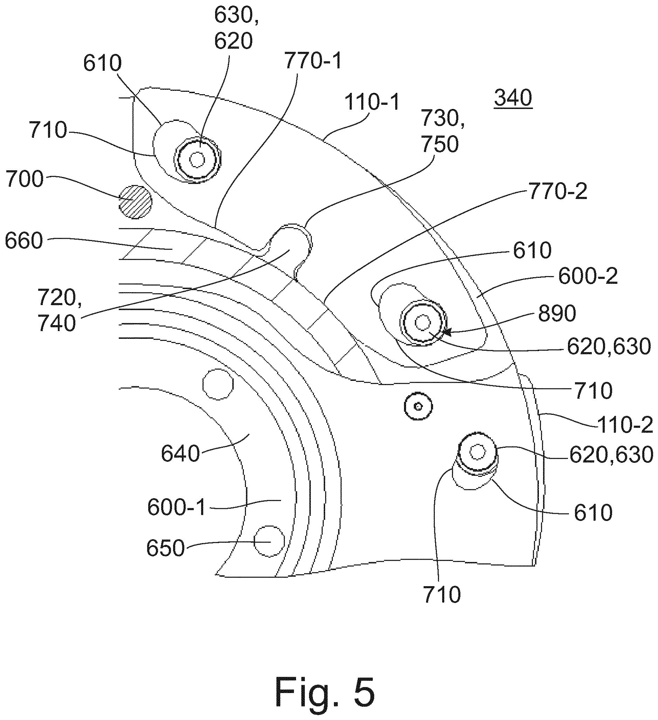

Fig. 5 zeigt eine vergrößerte Darstellung der Fig. 3b, bei der der Tilgerschwingungsdämpfer in einer Endanschlagsposition ist. Genauer gesagt ist in Fig. 5 dargestellt, wie die Tilgermasse 110-1 an dem bzw. aus Kunststoff gefertigten Distanzbauteil 660 anschlägt, bevor die Wälzkörper 620 an die betreffenden Endbereiche oder Bahnenden 890 der Führungslaufbahn 610 treffen. Anders ausgedrückt stößt die Tilgermasse 110-1 im Kontaktbereich 770 an das bzw. aus Kunststoff gefertigte Distanzbauteil 660, bevor die Wälzkörper 620 an die Bahnenden 890 (Ende der Bahnkurven) der Tilgermasse 110 bzw. der betreffenden Führungsbauteile 600 stoßen. Hierbei werden in Umfangsrichtung die Tilgermassen durch das Nut-Feder-System zueinander auf einem nahezu oder im Wesentlichen konstanten Winkel gehalten.

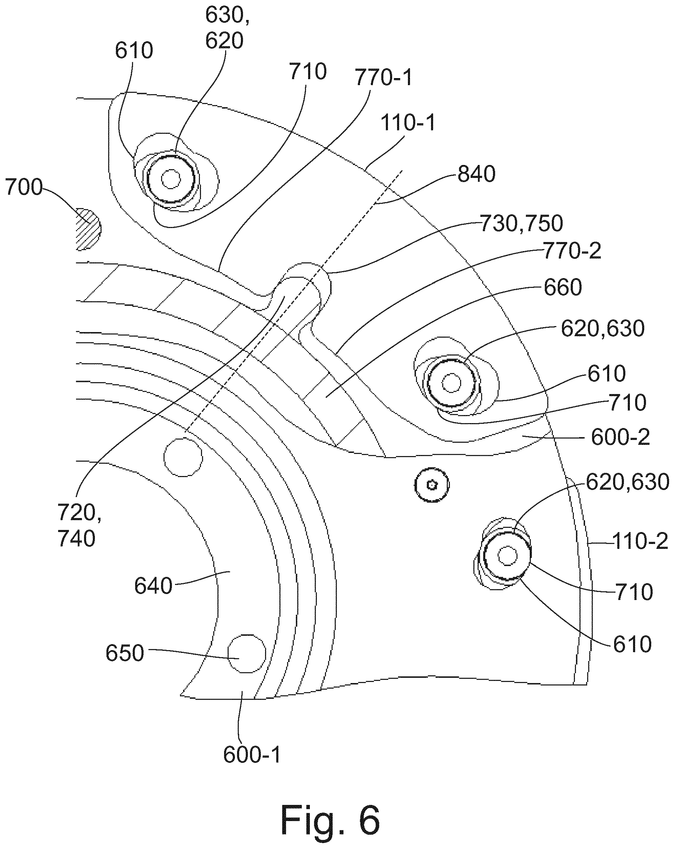

Fig. 6 zeigt eine Fig. 5 ähnliche Darstellung des Tilgerschwingungsdämpfers 340 gemäß seinem Ausführungsbeispiel, bei dem sich jedoch die Tilgermassen 110 in einer Neutralstellung oder Mittellage befinden. Die Mittellage ermöglichst hierbei, wie auch bei anderen Ausführungsbeispielen eines Tilgerschwingungsdämpfers 340, eine Auslenkung der Tilgermasse 110 um eine gleiche Distanz bzw. einen gleichen Winkel in beide Richtungen entlang der Umfangsrichtung. Aufgrund der Tatsache, dass hier sowohl die Verbindungsstruktur 720, wie auch die Tilgermasse 110 mit ihrer Verbindungsausnehmung 730 klappsymmetrisch ausgeführt sind, entspricht hier daher die Ausrichtung der Tilgermasse 110 und damit auch der Verbindungsausnehmung 730 gerade einer solchen Ausrichtung, dass die radiale Richtung 840 in der zuvor genannten Symmetrieebene der Tilgermasse 110 und der Verbindungsstruktur 720 liegt, die in diesem Fall zusammenfallen.

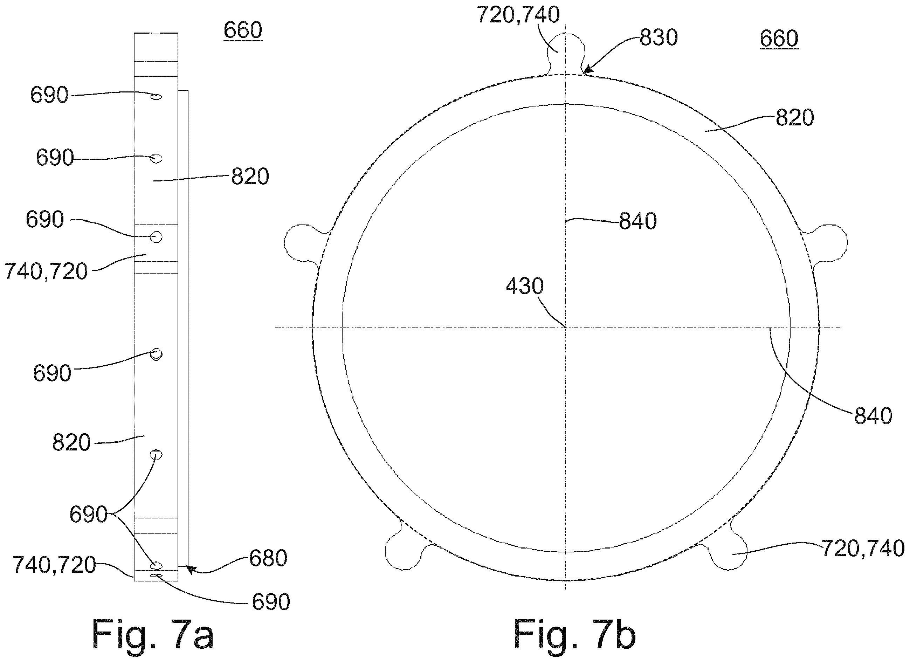

Fig. 7a zeigt eine Seitenansicht des Distanzbauteils 660, während Fig. 7b eine Aufsicht in einer Ebene senkrecht zu der Drehachse 430 zeigt. Fig. 7a zeigt hierbei wiederum die Schulter 680, mit deren Hilfe die radiale und gegebenenfalls auch die axiale Führung an dem zweiten Führungsbauteil 600-2 erfolgt, welches auch als rechtes DAT-Bahnblech (DAT=drehzahladaptiver Tilger) bezeichnet wird.

Darüber hinaus zeigt Fig. 7a eine Vielzahl von Bohrungen 690, die in einer Seitenfläche des Distanzbauteils 660, also in dem ringförmigen Abschnitt 820, jedoch auch in die Verbindungsstrukturen 720, also die Federn 740, eingebracht sein können. Bei diesen Buchungen 690 handelt es sich jedoch um optionale Komponenten, die gegebenenfalls in anderer Form oder auch überhaupt nicht implementiert sein können.

Die Bohrungen 690 im Bereich der Verbindungsstrukturen 720 weisen im Wesentlichen radial nach innen und sind dazu vorgesehen, dass das hydraulische Medium, also beispielsweise das im Inneren des Anfahrelementes 300 umfasste oder einfüllbare Hydraulikmedium, beim Bewegen der Tilgermassen 110 nach radial innen ab- oder zuströmen kann, wenn die Tilgermassen 110 in Umfangsrichtung ausgelenkt werden und sich dabei aufgrund der Form der Führungslaufbahnen 610 auch in radialer Richtung bewegen. So kann es beispielsweise passieren, dass aufgrund einer im Wesentlichen scheibenförmigen Ausgestaltung der Führungsbauteile 600 ein Zufluss bzw. Abfluss des hydraulischen Mediums durch diese unterbunden wird, was jedoch gegebenenfalls auch eine gezielte Maßnahme darstellen kann. Dadurch, dass die Führungsbauteile 600 gegebenenfalls zum Verschließen der seitlichen Flächen des Tilgerschwingungsdämpfers 340 verwendet werden, kann so gegebenenfalls ein Effekt des Eigenpumpens reduziert werden, der dadurch hervorgerufen wird, dass die Strukturen des Tilgerschwingungsdämpfers zu einer Strömung in Umfangsrichtung in dem hydraulischen Medium führen, die gegebenenfalls unerwünscht sein kann. Die weiteren Bohrungen 690 im Bereich des ringförmigen Abschnitts 820 können beispielsweise zur Gewichtsreduzierung dienen.

Fig. 7b zeigt darüber hinaus, dass bei dem hier gezeigten Ausführungsbeispiel insgesamt fünf auch als Tilgergewichte bezeichnete Tilgermassen 110 an einer entsprechenden Anzahl von Verbindungsstrukturen 720 durch das Distanzbauteil 660 geführt werden. Das Distanzbauteil 660 weist so hier eine fünf-zählige Symmetrie auf. Ebenso zeigt Fig. 7b die kreisförmige bzw. elliptische Außenkontur senkrecht zu der Drehachse 430 mit einem solchen Radius, sodass die Tilgermassen 110 verdreht werden können, ohne dabei Zwangskräfte zu erzeugen. Selbstverständlich sollte der bereits zuvor beschriebene Öffnungswinkel der kreisförmigen bzw. elliptischen Außenkontur an die spätere Anwendung bzw. an die genaue Implementierung des Tilgerschwingungsdämpfers 340 gemäß seinem Ausführungsbeispiel und weitere Parameter angepasst werden. Die Verbindungsstrukturen 720 können hierdurch die Positionierung bzw. Führung der Tilgermassen 110 zueinander bewirken. Auch zeigt Fig. 7b die bereits zuvor beschriebenen Abrundungen 830 im Bereich der Verbindungsstrukturen 720 zur Spannungsentlastung und zur Reduzierung anderer mechanischer Belastungen des Distanzbauteils 660.

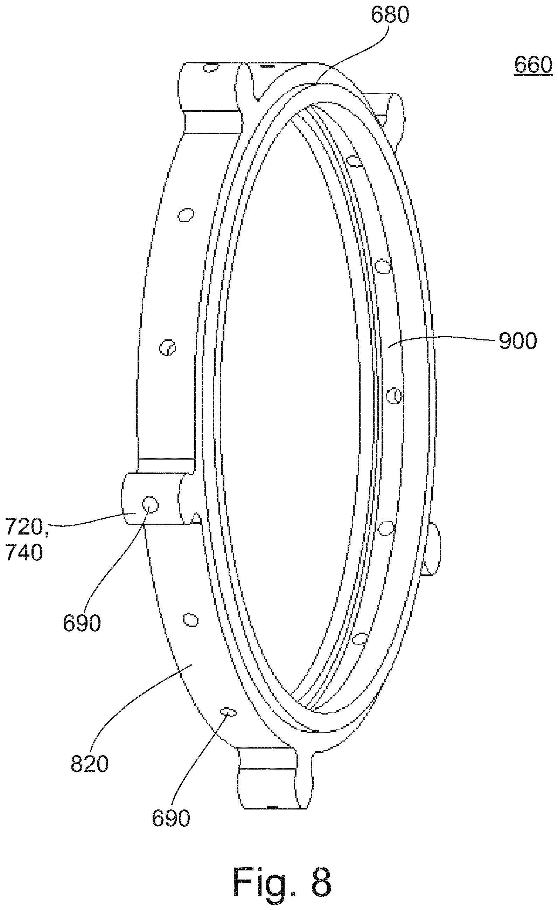

Fig. 8 zeigt eine perspektivische Darstellung eines weiteren Distanzbauteils 660, wie es beispielsweise im Zusammenhang mit einem Tilgerschwingungsdämpfer 340 zum Einsatz kommen kann. Die hier gezeigte Ausgestaltung des Distanzbauteils 660 unterscheidet sich von den zuvor beschriebenen Distanzbauteilen lediglich durch das Hinzufügen einer in Umlaufrichtung der Drehbewegung ausgeführten, das Distanzbauteil 660 vollständig umlaufenden Nut 900, welche im Bereich der Bohrungen 690 in den ringförmigen Abschnitt 820 eingebracht ist. Durch das Vorsehen der Nut 900 kann das Gewicht des Distanzbauteils 660 gegebenenfalls gegenüber einer Version ohne eine solche Nut 900 reduziert werden. Anders ausgedrückt dient die Nut 900 der Gewichtsreduzierung.

Durch den Einsatz eines Tilgerschwingungsdämpfers 340 kann gemäß seinem Ausführungsbeispiel eine Maßnahme zur Geräuschreduzierung eines drehzahladaptiven Tilgers beispielsweise in einem Drehmomentwandler auch bei niedrigen Drehzahlen gegebenenfalls umgesetzt werden. Das hierzu eingesetzte Distanzbauteil 660 ermöglicht hierbei eine im Wesentlichen parallele Führung der Tilgermassen 110 mit nur einer geringen Anzahl zusätzlicher Bauteile, im vorliegenden Ausführungsbeispiel im Wesentlichen nur mit einem einzigen zusätzlichen Bauteil, nämlich dem Distanzbauteil 660. Aufgrund der radial innenliegenden Ausgestaltung des Distanzbauteils 660 als ein Distanzinnenring kann darüber hinaus gegebenenfalls auch der zur Verfügung stehende Bauraum effizient ausgenutzt werden, ohne die Leistung der Schwingungsdämpfung signifikant zu verschlechtern. So kann also insgesamt gegebenenfalls ein Kompromiss zwischen einer Vereinfachung der Herstellung, einer Reduzierung von Geräuschen während der unterschiedlichen Betriebszustände des Tilgerschwingungsdämpfers 340, ein effizienteres Ausnutzen des zur Verfügung stehenden Bauraums und der eigentlichen Schwingungsdämpfung verbessert werden .

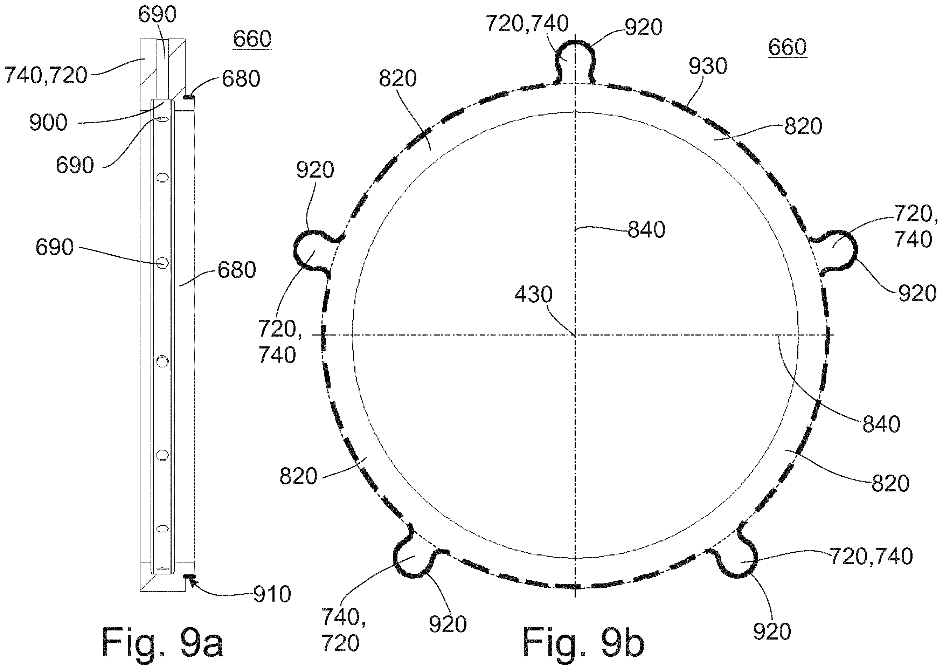

Fig. 9 a zeigt seine Querschnittsdarstellung durch ein weiteres Distanzbauteil 660 eines Tilgerschwingungsdämpfers 340 gemäß seinem Ausführungsbeispiel. Bei diesem Distanzbauteil 660, was wiederum als Distanzinnenring ausgeführt ist, mit einer entsprechenden Schulter 680 zur radialen und/oder axialen Führung desselben, sind wiederum die Bohrungen 690 zur Führung des hydraulischen Mediums und/oder zur Gewichtsreduzierung sowie die Nut 900 zur Gewichtsreduzierung implementiert. So zeigt Fig. 9a beispielsweise eine Bohrung 690, die mittig durch eine der Verbindungsstrukturen 720, also durch eine entsprechende Feder 740 verläuft.

Zur Steigerung bzw. Erhöhung der Verschleißfestigkeit weist das Distanzbauteil 660 jedoch im Bereich der Schulter 680 einen beispielsweise eingegossenen Metallring 910 auf, der im Bereich der Kontaktstelle zu dem zweiten Führungsbauteil 600-2 angeordnet ist. Hierdurch kann gegebenenfalls eine Lebensdauer des Distanzbauteils 660 erhöht werden.

Anders ausgedrückt dient der eingegossene Metallring 910 zur Steigerung der Verschleißfestigkeit an der Kontaktstelle der radialen bzw. axialen Führung des Distanzbauteils 660 und dem betreffenden Führungsbauteil 600-2. Der Metallring 910 kann hierbei eventuell zur besseren Haftung an Kunststoffen gasnitrocarburiert ausgeführt sein. Selbstverständlich können auch andere metallische Werkstoffe oder andere verschleißreduzierende Werkstoffe im Bereich einer solchen Struktur verwendet werden. Auch muss es sich nicht um einen Ring handeln, der gezielt in ein Kunststoff eingegossen wird. Dieser kann beispielsweise mithilfe anderer Verbindungstechniken, beispielsweise mittels eines Klebens, aufgebracht werden. Auch muss der Metallring 910 bei weitem nicht als ein Bauteil eingesetzt werden, sondern kann beispielsweise in mehreren Segmenten oder in geschlitzter Form oder auch gegebenenfalls als nicht vollständig umlaufend implementiert werden.

Fig. 9b zeigt eine Aufsicht auf ein weiteres Distanzbauteil 660, was beispielsweise im Rahmen eines Tilgerschwingungsdämpfers 340 gemäß seinem Ausführungsbeispiel zum Einsatz gebracht werden kann. Hierbei zeigt Fig. 9b zwei weitere optionale Implementierungsdetails, die nachfolgend beschrieben werden. So weist als eine erste mögliche Variation das Distanzbauteil 660 im Bereich der Verbindungsstrukturen 720 eingegossene Metallbleche 920 auf, die wiederum der Erhöhung der Verschleißfestigkeit dienen. Im Unterschied zu dem Metallring 910, wie er in Fig. 9a gezeigt wurde, dienen die Metallbleche 920 allerdings zur Erhöhung der Verschleißfestigkeit der Kontaktstelle zur Nut 750, also der Verbindungsausnehmung 730, die auch als Führungsnut bezeichnet wird. Anders ausgedrückt weist das Distanzbauteil 660 eine optionale Möglichkeit eingegossene Metallbleche 920 an den Verbindungsstrukturen 720 zur Erhöhung der Verschleißfestigkeit an den Kontaktstellen derselben, zu den in Fig. 9b nicht gezeigten Verbindungsausnehmungen 730 der Tilgermassen 110.

Als weitere optionale Möglichkeit zeigt Fig. 8b im Bereich des ringförmigen Abschnitts an einer senkrecht zu den radialen Richtungen 840 stehenden Seitenfläche des Distanzbauteils 660 gummierte Oberflächen 930, die in Fig. 9b gestrichelt dargestellt sind. Diese können beispielsweise zur besseren Dämpfung zwischen dem Distanzbauteil 660 und den Tilgermassen 110 dienen, wenn diese dort aufgebracht sind, wo die Kontaktbereiche 770 der Tilgermassen 110 mit dem Distanzbauteil 660 in Kontakt treten. Die gummierten Oberflächen 930 können beispielsweise durch ein angespritztes Gummi oder einen EPDM-Werkstoff (EPDM= Ethylen-Propylen-Dien-Monomer=Ethylen-Propylen-Dien-Kautschuk) implementiert werden. Selbstverständlich können gegebenenfalls auch Elastomere an dieser Stelle eingesetzt werden. Anders ausgedrückt ermöglichen es die gummierten Oberflächen 930 im Bereich des ringförmigen Abschnitts 820 gegebenenfalls eine bessere Dämpfung der Tilgermassen 110 bei einem Aufschlagen auf das Distanzbauteil 660, wenn also die Tilgermassen 110 an den Ring in radialer Richtung anschlagen.

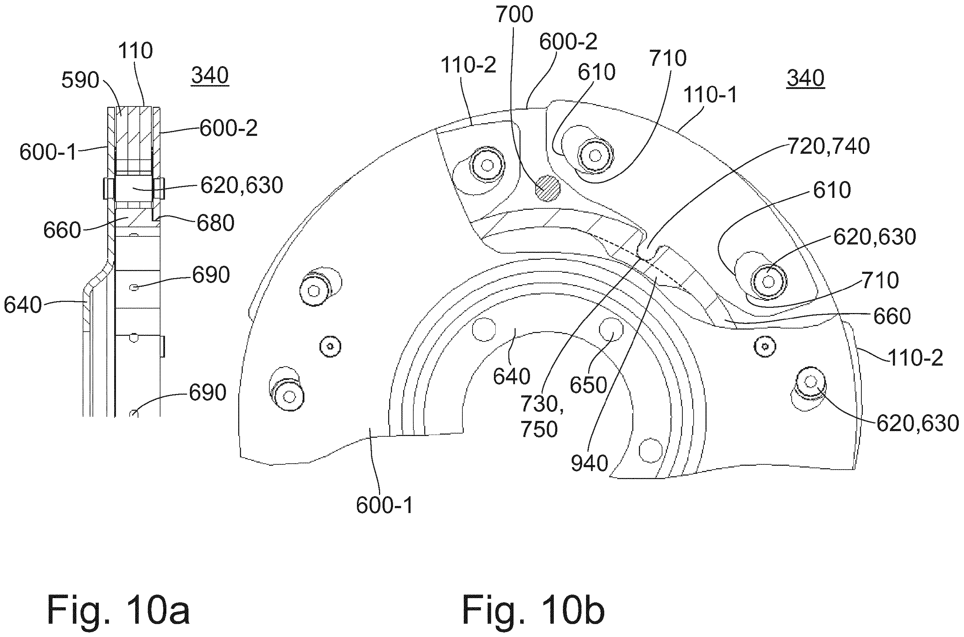

Fig. 10a und 10b schneiden eine Querschnittsdarstellung durch einen Tilgerschwingungsdämpfer 340 gemäß einem weiteren Ausführungsbeispiel, welches sich von den zuvor beschriebenen Ausführungsbeispielen, insbesondere dem im Zusammenhang mit den Fig. 3a und 3b erläuterten Ausführungsbeispiel im Wesentlichen durch die Ausgestaltung des Distanzbauteils 660 und der Verbindungstrukturen 720 sowie der Verbindungsausnehmungen 730 unterscheidet. So sind bei dem hier gezeigten Ausführungsbeispiel die Verbindungsstrukturen 720 nicht mehr an dem Distanzbauteil 660, sondern an Tilgermassen 110 angebracht. Auch sind diese wiederum als Federn 740 implementiert, wie diese zuvor beschrieben wurden. Entsprechend weist das Distanzbauteil 660 entsprechende Verbindungsausnehmungen 730 in Form entsprechender Nuten 750 auf, die wiederum eine spielbehaftete formschlüssige Verbindung ermöglichen.

Anders ausgedrückt, kann hier die zuvor beschriebene Nut-Feder-Kombination auch umgekehrt implementiert werden, bei der die Nut 750 in das beispielsweise als Kunststoffring ausgeführte Distanzbauteil 660 und die Feder 740 in dem betreffenden Gewicht 110 implementiert wird. Hierdurch kann es gegebenenfalls möglich sein, eine Masse der Tilgermasse 110 zu erhöhen.

Um dennoch eine ausreichende mechanische Stabilität gerade im Bereich der Verbindungsausnehmung 730 in den Distanzbauteilen 660 zu ermöglichen, kann es gegebenenfalls ratsam sein, radial weiter nach innen eine Verstärkungsstruktur 940 vorzusehen, um so eine bessere Verteilung der auftretenden Kräfte und Momente zu ermöglichen. Es kann also sein, dass gegenüber einer der zuvor beschriebenen Implementierung eines Distanzbauteils 660 hierdurch das Distanzbauteil 660 zumindest partiell weiter nach radial innen aufbaut. Eine solche Struktur kann beispielsweise sinnvoll dann eingesetzt werden, wenn radialer Bauraum radial innerhalb der eigentlichen Tilger-Baugruppe mit den Tilgermassen 110 und den Führungsbauteilen 600 ausreichend groß ist.

Die Verbindungsausnehmung 730 und die entsprechenden Verbindungsstrukturen 720 können dabei ähnlich oder identisch aufgebaut werden, wie diese zuvor beschrieben wurden.

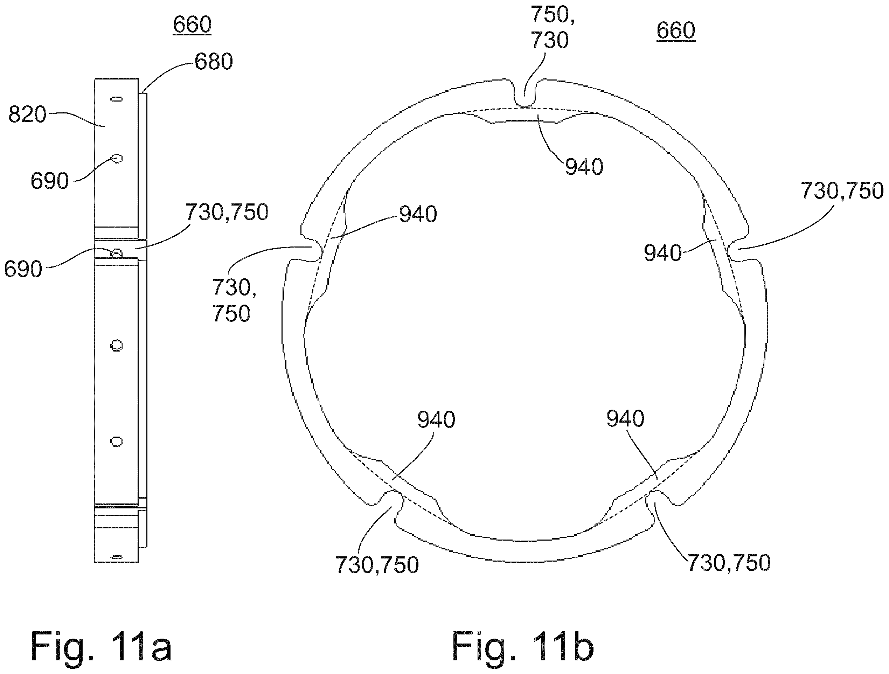

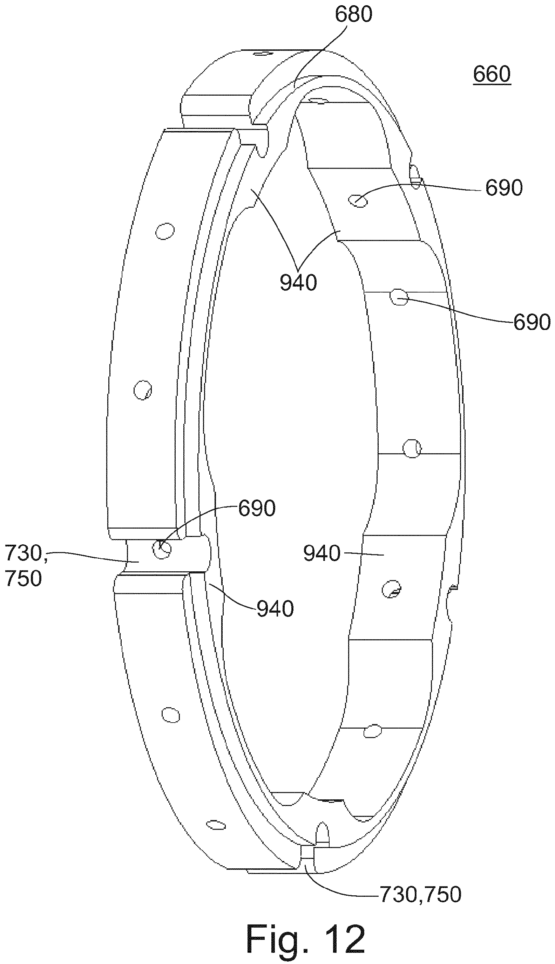

Die Fig. 11a und 11b zeigen eine Seitenansicht und eine Aufsicht auf das in Fig. 10 a und 10 b gezeigte Distanzbauteil 660, während Fig. 12 eine entsprechende perspektivische Darstellung zeigt. Die Figuren zeigen hier beispielsweise wiederum, dass das Distanzbauteil 660 wieder zur radialen und/oder axialen Führung die Schulter 680 aufweist sowie sowohl im Bereich der Verbindungsausnehmungen 730, wie auch im Bereich des ringförmigen Abschnitts 820, Bohrungen 690 zur Gewichtsreduzierung und/oder zu einem verbesserten Zu- bzw. Abfluss des hydraulischen Mediums umfasst.

Die Fig. 11b und 12 zeigen darüber hinaus, dass in die Verstärkungsstrukturen 940 im Bereich der Verbindungsausnehmungen 730 an einer radial innen liegenden Seite eine ebenfalls kreis- bzw. zylindersegmentförmige Außenkontur aufweisen.

Auch durch den Einsatz des in den Fig. 11a bis 12 gezeigten Distanzrings im Rahmen eines Tilgerschwingungsdämpfers 340 gemäß einem Ausführungsbeispiel kann so eine gemeinsame Mitnahme oder Führung der Tilgermassen 110 mit nur einem einzigen zusätzlichen Bauteil, nämlich dem Distanzbauteil 660 realisiert werden. Ebenso kann gegebenenfalls eine Implementierung ohne zusätzlichen axialen Bauraum erfolgen.

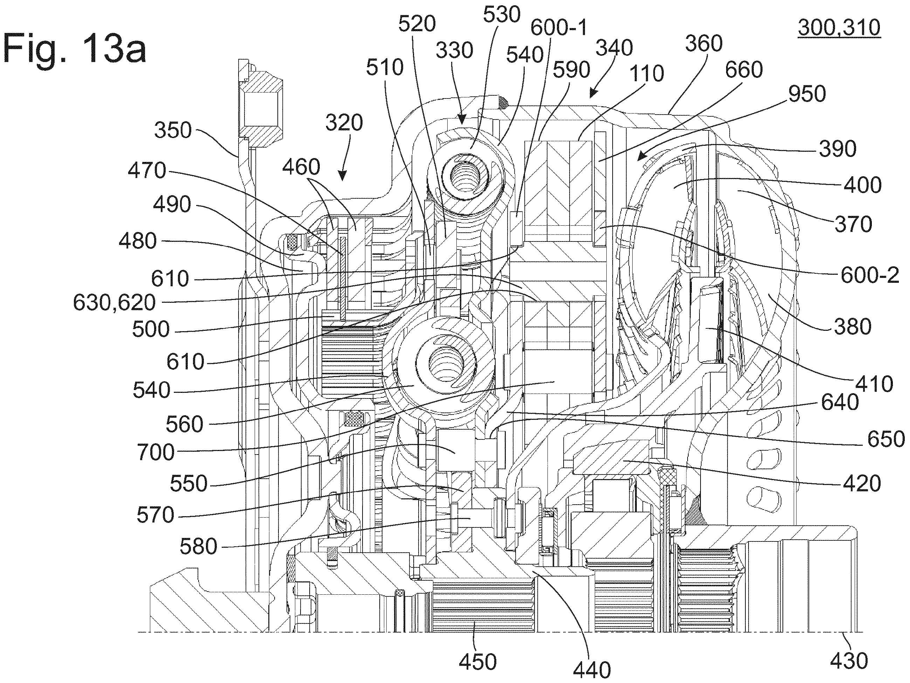

Fig. 13a zeigt ein weiteres Anfahrelement 300 gemäß einem Ausführungsbeispiel, welches wiederum als hydrodynamischer Wandler 310 implementiert ist und vom Aufbau her dem in Fig. 2 gezeigten Anfahrelement 300 bzw. hydrodynamischen Wandler 310 sehr ähnlich ist. Die Querschnittsdarstellung der Fig. 13a verläuft hierbei in einer ähnlichen Schnittebene, wie die der Fig. 2.

Die beiden Anfahrelemente 300 unterscheiden sich hierbei hinsichtlich einiger konkreter Ausgestaltungsmerkmale, zu denen beispielsweise die Zahl der Innenlamellen 470 der Überbrückungskupplung 320 zählt. So weist das in Fig. 13a gezeigte Anfahrelement 300 lediglich eine einzige Innenlamelle 470 auf, weshalb auch die Zahl der Außenlamellen 460 geringer ist als bei dem in Fig. 2 gezeigten Anfahrelement 300. Darüber hinaus unterscheiden sich die Anfahrelemente 300 jedoch insbesondere in der konstruktiven Ausgestaltung des Tilgerschwingungsdämpfers 340.

Bei dem hier gezeigten Anfahrelement 300 ist aufgrund konstruktiver Randbedingungen ein Einsatz eines radial zu den Tilgermassen 110 innenliegendes Distanzbauteils 660 nicht möglich. So kann in dem hier dargestellten Fall radial innen zu den Tilgermassen 110 des Tilgerschwingungsdämpfers 340 aus Bauraumgründen keine Maßnahme getroffen werden, die zu einer Geräuschreduzierung führen kann. So erstrecken sich die Einzeltilgermassen 590 radial deutlich weiter nach innen zu dem Turbinenrad 390 und seiner Vernietung 580 mit der Abtriebsnabe 440. Aus diesem Grund wird im Rahmen des Tilgerschwingungsdämpfers 340 ein solcher eingesetzt, bei dem das auch als Distanzring bezeichnete Distanzbauteil 660 radial außerhalb des zweiten Führungsbauteils 600-2 angeordnet und radial gelagert wird. Das Distanzbauteil 660 ist hierbei also über eine radiale spielbehaftete Lagerung an dem zweiten Führungsbauteil 600-2 geführt.

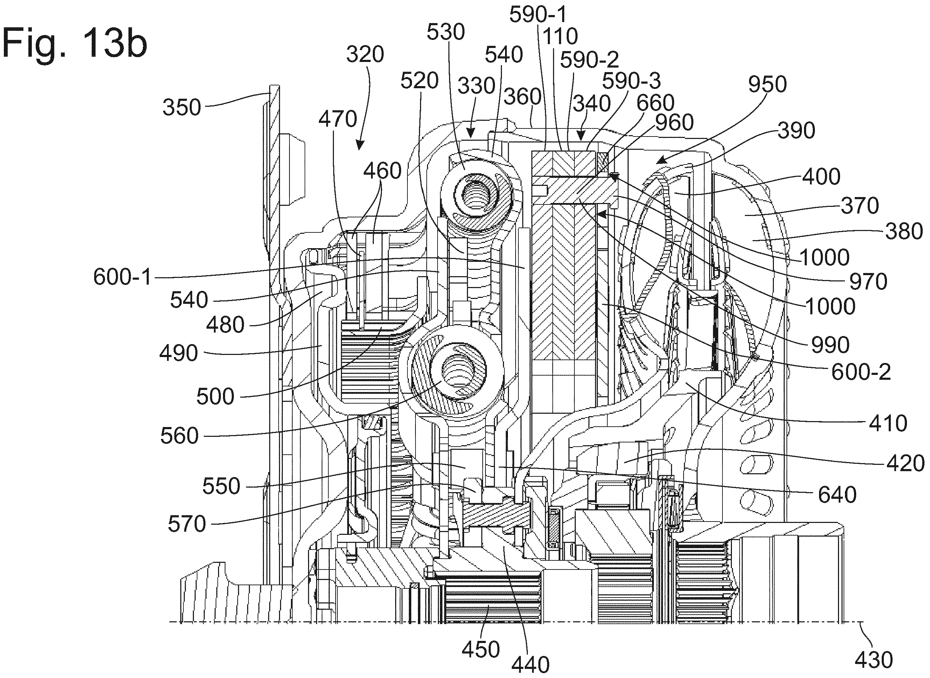

Wie nachfolgend im Zusammenhang mit Fig. 13b und den nachfolgenden Figuren noch näher erläutert wird, wird hierbei eine axiale Lagerung des Distanzbauteils 660 zwischen einem Nietkopf und den auch als Fliehgewichten bezeichneten Tilgermassen 110 implementiert. Auch hier dient wiederum das Distanzbauteil 660 zur gegenseitigen Abstützung der Tilgermassen 110 zueinander. So sind die Tilgermassen 110 im Wesentlichen hinsichtlich ihrer Verdrehwinkel zueinander fixiert. Hierdurch kann es insbesondere möglich sein, ein Gegeneinanderprallen der Tilgergewichte 110 zu unterbinden. So kann kein einzelnes Gewicht in seinen Anschlag gehen. Vielmehr kann dies nur gemeinsam für alle Tilgermassen 110 geschehen. Je nach konkreter Implementierung kann hierbei ein solcher Anschlag beispielsweise über einen radial innenliegenden Ring realisiert werden, wobei es gegebenenfalls ausreichen kann, wenn dieser Ring aus Bauraumgründen nur eine Tilgermasse 110 abfängt, sodass durch die Vernietung bzw. Kopplung über das Distanzbauteil 660 dann auch die anderen Tilgermassen 110 entsprechend gehalten werden.

Wie Fig. 13 a zeigt, liegt hierbei das Distanzbauteil 660 radial außen auf dem zweiten Führungsbauteil 600-2 auf. Hierbei sind sowohl das Distanzbauteil 660, wie auch das zweite Führungsbauteil 600-2 im Wesentlichen scheiben- bzw. ringförmig ausgestaltet, weisen also eine im Wesentlichen kreisförmige bzw. zylinderförmige Außen- oder Innenkontur auf, die hinsichtlich ihrer Radien gerade aufeinander so angepasst sind, dass das Distanzbauteil 660 durch das zweite Führungsbauteil 600-2 radial geführt wird.

Hierdurch kann es möglich sein, dass das Distanzbauteil 660 in axialer Richtung, also entlang der Drehachse 430, nicht aufbaut. Lediglich durch die später noch beschriebenen Nietköpfe kann gegebenenfalls ein erhöhter axialer Bauraumbedarf entstehen, der jedoch in einem Bereich 950 entsteht, in dem die Turbinenschale bzw. das Turbinenrad 390 gebogen ist und diesen entsprechend bereitstellt. Anders ausgedrückt ist der notwendige zusätzliche axiale Bauraum bei dem hier gezeigten Ausführungsbeispiel aufgrund der Form des Turbinenrads 390 gegeben.

Wie bereits zuvor beschrieben wurde, kann auch hier das Distanzbauteil 660 grundsätzlich aus jedem geeigneten Material gefertigt werden. So kann das Distanzbauteil 660 beispielsweise aus einem metallischen Werkstoff, also beispielsweise einem gestanzten Blech oder auch aus einem Kunststoff gefertigt sein. Typischerweise erfährt es außer der durch die Drehzahl bewirkten Fliehkräfte im normalen Betrieb nur geringe Kräfte in radialer Richtung keine oder zumindest nur geringe Kräfte.

Fig. 13b zeigt eine Fig. 13a vergleichbare Darstellung, bei der jedoch der Tilgerschwingungsdämpfer 340 gemäß einem Ausführungsbeispiel soweit verdreht ist, dass der bereits zuvor erwähnte Niet 960 sichtbar ist. Dieser weist einen Nietkopf 970 auf, der an einem dem zweiten Führungsbauteil 600-2 zugewandten Ende des Niets 960 sichtbar ist. Dieser weist einen Nietkopf 970 auf, der an einem dem zweiten Führungsbauteil 600-2 zugewandten Ende des Niets 960 angeordnet ist. Darüber hinaus weist der Niet 970 an einem dem ersten Führungsbauteil 600-1 zugewandten Ende eine Bohrung bzw. eine Ausnehmung 980 auf, die als Sackausnehmung ausgeführt ist und zentral zu einem Nietschaft 990 des Niets 960 geführt ist.

In den durch die Pfeile 1000 markierten Bereichen wird das Distanzbauteil 660 axial spielbehaftet zwischen den Tilgermassen 110 und dem Nietkopf 970 gelagert bzw. geführt. Der Bauraum ist hierbei in axialer Richtung in dem Bereich 950 aufgrund der Geometrie des Turbinenrads 390 gegeben. Anders ausgedrückt ist der Platz für den Nietkopf 970 radial außen zwischen den Tilgermassen 110 und dem Turbinenrad 390 vorhanden, während radial innerhalb der Tilgermassen 110 hier nur sehr wenig Bauraum zur Verfügung steht.

Dass das in den Fig. 13a und 13b gezeigte Anfahrelement 300 nicht zuletzt auf die Verwendung im Zusammenhang mit einer Motor-Start-Stop-Automatik ausgelegt ist, wird aufgrund der im Wesentlichen ringförmigen Ausgestaltung des Distanzbauteils 660 dieses auch als MSA-Distanzring bezeichnet (MSA=Motor-Start-Stop-Automatik).

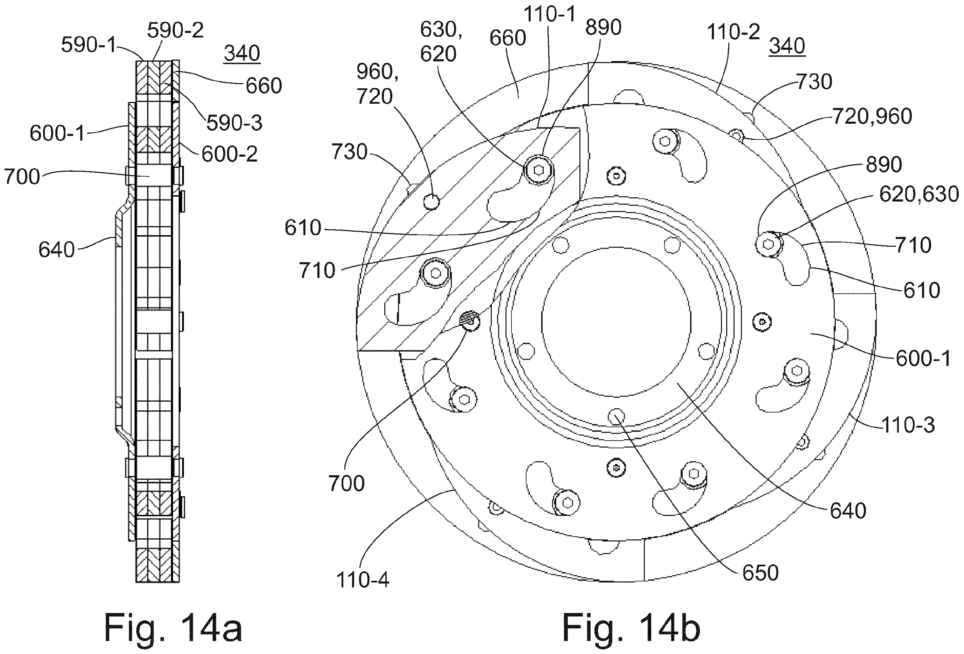

Fig. 14a zeigt eine Querschnittsdarstellung durch den Tilgerschwingungsdämpfer 340 gemäß seinem Ausführungsbeispiel, während Fig. 14b eine Teilschnittdarstellung in Form einer Aufsicht auf den Tilgerschwingungsdämpfer 340 aus Fig. 14a zeigt.

Wie die beiden Fig. 14a und 14b zusammen zeigen, sind sowohl das Distanzbauteil 660 als auch das zweite Führungsbauteil 600-2 im Wesentlichen ringförmig ausgestaltet, weshalb das Distanzbauteil 660 hier wiederum als Distanzring bezeichnet werden kann. Die Radien des Distanzbauteils 660 und des zweiten Führungsbauteils 600-2 sind hierbei so ausgebildet, dass das Distanzbauteil 660 an dem zweiten Führungsbauteil 600-2 spielbehaftet radial gelagert wird.

Die Fig. 14a und 14b zeigen hierbei die Tilgermassen 110 in einem ausgelenkten Zustand. Entsprechend sind die Wälzkörper 620 sowohl im Hinblick auf die Führungslaufbahnen 610 der Tilgermassen 110, wie auch im Hinblick auf die Führungslaufbahnen 610 der Führungsbauteile 600 jeweils im Bereich der Bahnenden 890. Durch die im Nachfolgenden noch genauer beschriebenen Verbindungsstrukturen 720, die hier durch Niete 960 gebildet werden, und entsprechende Verbindungsausnehmungen 730 in dem Distanzbauteil 660 werden wiederum die Tilgermassen spielbehaftet formschlüssig bei einer entsprechenden Auslenkung der Tilgermassen 110 in Umfangsrichtung mitgenommen.

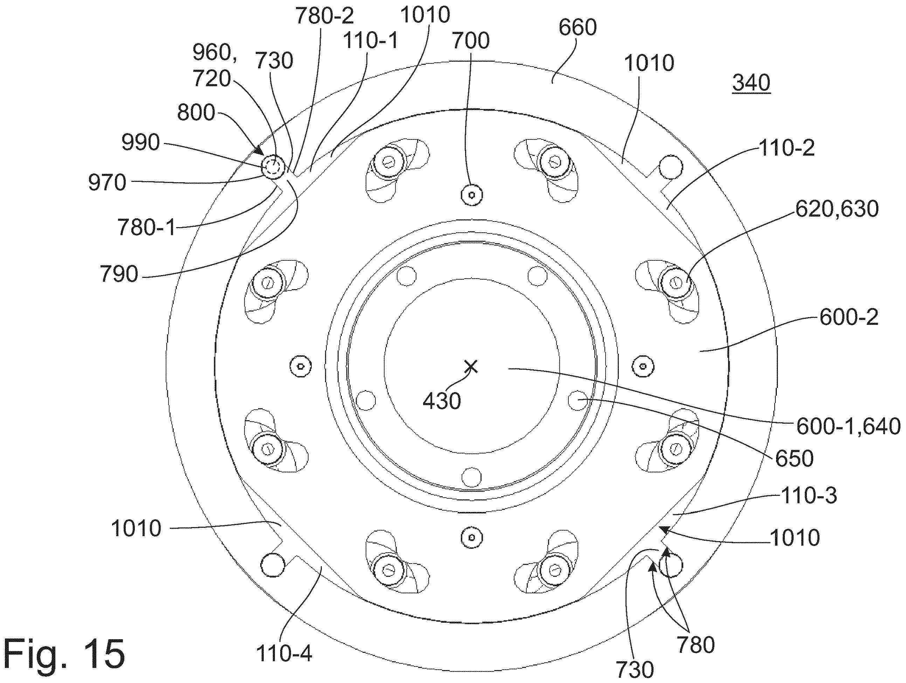

Fig. 15 zeigt eine Aufsicht auf den Tilgerschwingungsdämpfer 340 gemäß seinem Ausführungsbeispiel, wie dieser zuvor gezeigt wurde. Hierbei sind, wie die Stellungen der Wälzkörper 620 bzw. der Rollen 630 zeigen, die Tilgermassen in ihrer Neutralstellung bzw. Mittellage. Fig. 15 zeigt hierbei den Tilgerschwingungsdämpfer 340 von der Seite des zweiten Führungsbauteils 600-2 aus. Das erste Führungsbauteil 600-1 ist lediglich im Bereich der Flanschstruktur 640 mit ihren Bohrungen 650 zu sehen.

Fig. 15 zeigt, dass bei dem Distanzbauteil 660 dieses Ausführungsbeispiels die Verbindungsstruktur 720 wenigstens abschnittsweise eine zylinderförmige Außenkontur aufweist, deren Mittelachse sich parallel zu der Drehachse erstreckt. Die Verbindungsausnehmungen 730 weisen hierbei eine Außenkontur mit zwei einander gegenüberliegenden geraden Abschnitten 780-1, 780-2 auf, die wiederum zwischen einem offenen Ende 790 und einem geschlossenen Ende 800 der Verbindungsausnehmung 730 angeordnet sind. Die Verbindungsausnehmungen 730 sind hierbei wiederum gerade so ausgebildet, dass diese die Verbindungsstrukturen 720 aufnehmen, eine Verdrehung der betreffenden Tilgermassen 110 und eine Bewegung der Verbindungsstruktur 720 entlang der radialen Richtung ermöglichen können.

Hierbei sind die Verbindungsstrukturen 720 mechanisch fest mit den betreffenden Tilgermassen 110 verbunden. Wenigstens eines der Führungsbauteile 600, im vorliegenden Ausführungsbeispiel das zweite Führungsbauteil 600-2, ist hier ausgebildet, um durch ein in Kontakt Treten der Verbindungsstruktur 720 mit dem wenigstens einen Führungsbauteil 600 eine Bewegung der betreffenden Tilgermasse 100 entlang der radialen Richtung zu begrenzen. Mechanisch fest bedeutet, wie zuvor bereits erläutert wurde, in diesem Zusammenhang im Wesentlichen eine spielfreie in allen linearen Raumrichtungen mechanische Verbindung. Die Verbindungsstruktur 720 ist hierbei gerade in der Lage, um über die zylinderförmige Außenkontur mit dem wenigstens einen Führungsbauteil 600 in Kontakt zu treten. Die Verbindungsstruktur 720 ist durch den Niet 960, wie er insbesondere in Fig. 13b zu sehen gewesen ist, gebildet. Fig. 15 zeigt hierbei den Nietschaft 990, der die zylinderförmige Außenkontur der Verbindungsstruktur 720 bildet, als gestrichelte Linie, während die Darstellung in Fig. 15 im Wesentlichen den Nietkopf 970 des Niets 960 zeigt.

Um nun die zuvor beschriebene Möglichkeit der Begrenzung der radialen Bewegung der Tilgermassen 110 durch ein in Kontakt Treten der Verbindungsstruktur 720 mit dem zweiten Führungsbauteil 600-2 zu ermöglichen, weist dieses Aussparung 1010 auf, die unter anderem für die Freigängigkeit des Niets 960 bzw. der Nietköpfe 970 gegebenenfalls mit verantwortlich sein kann. Die Aussparungen 1010 stellen hierbei Freistellungen an dem zweiten Führungsbauteil 600 dar, über die sich der auch als Bolzen bezeichnete Niet 960, also die Verbindungsstruktur 720, frei in radialer Richtung bewegen kann, bevor diese mit dem betreffenden Führungsbauteil im Bereich des abgeflachten Abschnitts 1020 in Kontakt tritt.

Wie bereits erläutert wurde, bewegt sich die durch den Nietschaft 990 gebildete zylinderförmige Außenkontur entlang der parallelen, geraden Abschnitte 780 der Verbindungsausnehmung 730. Wird nun der Verdrehwinkel der Tilgermassen 110 so groß, dass die Verbindungsstruktur 720 mit ihrer zylinderförmigen Außenkontur den Bereich der Verbindungsausnehmung 730 nach radial innen verlässt, stellen die Aussparungen 110 ebenfalls eine notwendige Maßnahme dar, um ein zu frühes in Kontakt treten mit dem Führungsbauteil 600-2 gegebenenfalls zu unterbinden.

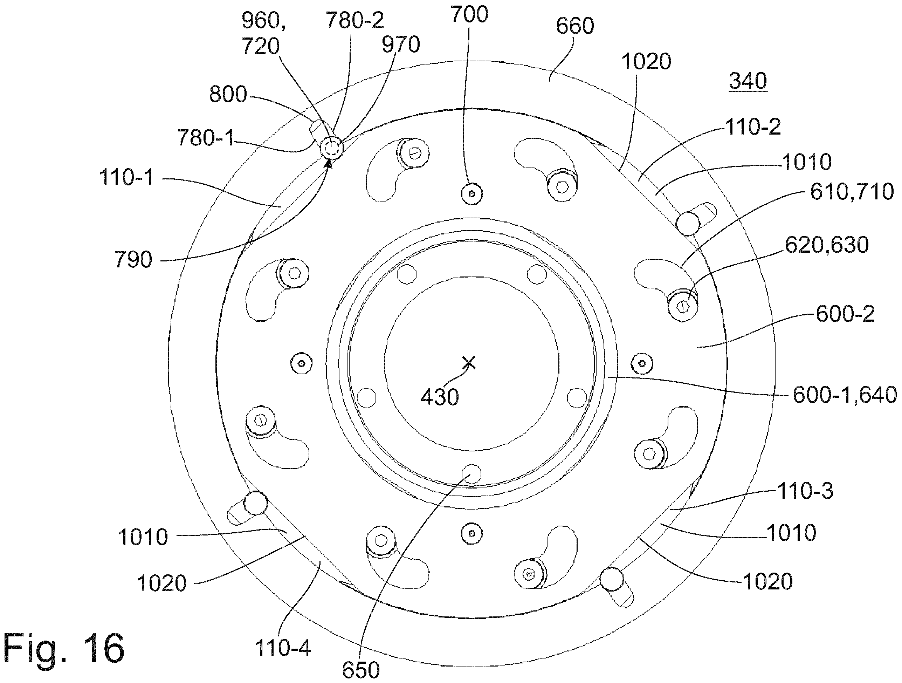

Um dies näher zu illustrieren, zeigt Fig. 16 eine Fig. 15 sehr ähnliche Darstellung, bei der jedoch im Unterschied zu Fig. 15 die Tilgermassen 110 nunmehr in einem ausgelenkten Zustand sind. So zeigt Fig. 16, wie die Verbindungsstrukturen 720, also die Niete 960, aufgrund der Verschwenkung der Tilgermassen 110 radial nach innen gewandert sind und mit ihren Mittelpunkten im Bereich der offenen Enden 790 der Verbindungsausnehmungen 730 angeordnet sind. Im voll ausgelenkten Zustand der Tilgermassen 110 treten hierbei die zylinderförmigen Außenkonturen der Verbindungsstrukturen 720, gebildet durch die Nietschäfte 990 der Niete 960 mit den abgeflachten Bereichen 1020 des Führungsbauteils 600-2, durch welche die Aussparungen 1010 gebildet werden.

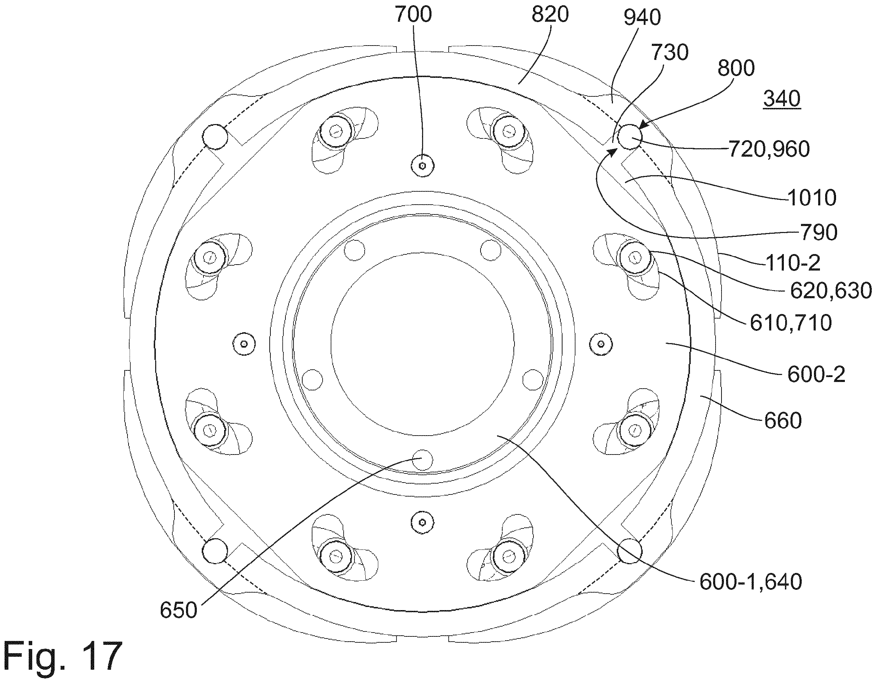

Fig. 17 zeigt eine Fig. 15 ähnliche Darstellung eines Tilgerschwingungsdämpfers 340 gemäß einem weiteren Ausführungsbeispiel, bei dem eine Gewichtsoptimierung bzw. eine Reduzierung eines Massenträgheitsmoments an dem Distanzbauteil 660 vorgenommen wurde. Auch hier sind wiederum die Tilgermassen 110 in ihrer Mittellage, also der Neutralstellung. Bei dieser optionalen Gewichtsoptimierung bzw. Reduzierung des Massenträgheitsmomentes ist eine Breite des Distanzbauteils 660 in radialer Richtung reduziert worden. Um dennoch für die im Wesentlichen schlitzförmigen Verbindungsausnehmungen 730 ausreichend Material im Bereich der geschlossenen Enden 800 der Ausnehmungen zu schaffen, weist das Distanzbauteil 660 wiederum einen ringförmigen Abschnitt 820 auf, an dem sich im Bereich der geschlossenen Enden 800 der Verbindungsausnehmung 730 Verstärkungsstrukturen 940 anschließen, die radial nach außen gegenüber dem ringförmigen Abschnitt 820, wie der durch eine gestrichelte Linie in diesem Bereich angedeutet ist, erstrecken.

Durch die damit verbundene Gewichts- bzw. Massenreduzierung kann es gegebenenfalls möglich sein, ein schnelleres Ansprechen des Tilgerschwingungsdämpfers 340 und damit des Anfahrelementes 300 zu ermöglichen.

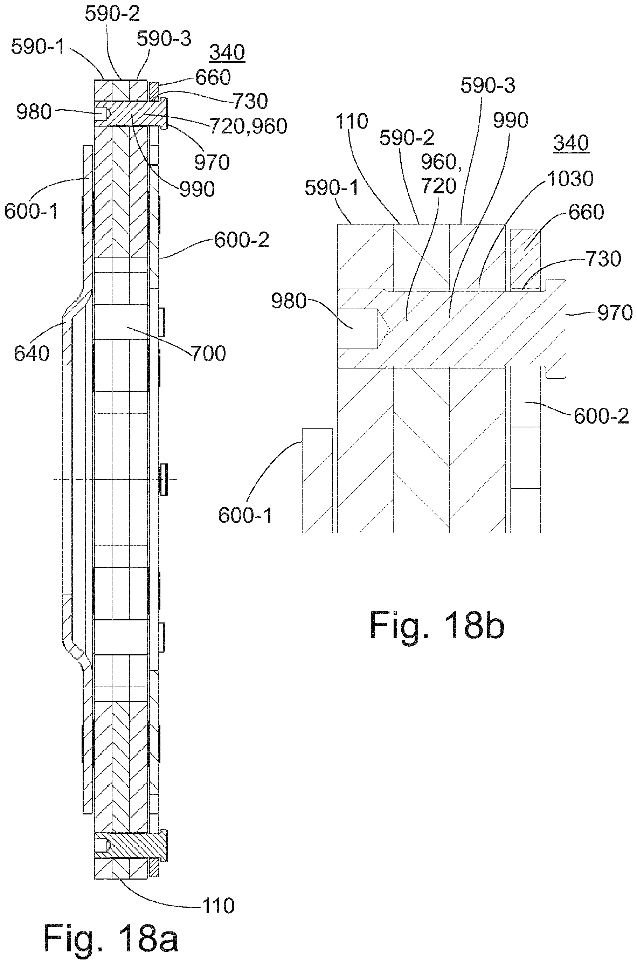

Fig. 18 a zeigt eine Querschnittsdarstellung durch den in den Fig. 13a bis 16 gezeigten Tilgerschwingungsdämpfer 340 gemäß seinen Ausführungsbeispielen. Fig. 18b zeigt hierbei eine vergrößerte Darstellung der Fig. 18a im Bereich der Verbindungsstruktur 720. Die Schnittebenen der Fig. 18a und 18b sind hierbei gerade so gewählt, dass diese einen Schnitt durch den Niet 960, also durch die Verbindungstruktur 720 zeigen.

Wie bereits zuvor erläutert wurde, sind die Tilgermassen 110 bei dem hier gezeigten Ausführungsbeispiel aus drei Einzeltilgermassen 590-1, 590-2, 590-3, die in dieser Reihenfolge zwischen dem ersten Führungsbauteil 600-1 und dem zweiten Führungsbauteil 600-2 gelagert sind, angeordnet. Um eine entsprechende möglichst freie Bewegung der einzelnen Einzeltilgermassen 590 der Tilgermasse 110 zu ermöglichen, weisen diese eine Bohrung 1030 auf, deren Durchmesser größer als ein Außendurchmesser des Nietschafts 990 ist. Anders ausgedrückt weisen die Einzeltilgermassen 590 eine größere Bohrung auf als die zylinderförmige Außenkontur, gebildet durch die Nietschaft 990, der Verbindungsstruktur 720.

Um dennoch eine axiale Führung des Distanzbauteils 660 zwischen dem Nietkopf 970 und der Tilgermasse 110, genauer gesagt, dem zweiten Führungsbauteil 600-2 nächsten Teiltilgermasse 590-3 zu ermöglichen, die entsprechend spielbehaftet ist, um beispielsweise die Verdrehung des Distanzbauteils 660 entlang der Umfangsrichtung zu dem Führungsbauteil 600-2 zu ermöglichen, ist die Verbindungsstruktur 720 in Form des Niets 960 nur mit der ersten Teiltilgermasse 590-1 vernietet.

Zu diesem Zweck weist der Niet 960 eine Bohrung 980 in Form einer Sackbohrung auf, die sich lediglich in den Bereich der ersten Teiltilgermasse 590-1 erstreckt. Hierdurch ist es möglich, den Niet 960 nur in diesem Bereich soweit aufzuweiten, dass dieser eine kraftschlüssige bzw. formschlüssige Verbindung mit der betreffenden Teiltilgermasse 590-1 abhängig von der Kraft- bzw. Bewegungsrichtung eingeht.

Hierdurch weisen die anderen Einzeltilgermassen 590-2, 590-3 Spiel zu dem Nietschaft 990 auf, womit im Betrieb gewährleistet ist, dass die Einzeltilgermassen 590 auf ihren Führungslaufbahnen 610 aufliegen und die Position zueinander nicht durch die Bohrung in den Einzeltilgermassen 590 vorgegeben ist. Hierdurch kann also gegebenenfalls ein Verhaken, Verklemmen oder eine andere Störung im Betrieb des Tilgerschwingungsdämpfers 340 gegebenenfalls hinsichtlich ihrer Wahrscheinlichkeit des Auftretens reduziert werden.

Mit anderen Worten ist der Niet 960 nur in der letzten Teiltilgermasse 590-1 vernietet, damit die auch als Einzeltilgermassen bezeichneten Teiltilgermassen 590 sich zueinander bewegen können. So können alle Teiltilgermassen 590 in den entsprechenden Bahnkonturen bzw. Führungslaufbahnen 610 an den Wälzkörpern 620 anliegen. Somit können Zwangskräfte gegebenenfalls unterbunden werden und die Positionstoleranzen der Bohrung 1030 für den Niet 960 zueinander und in Bezug auf die Führungslaufbahnen 610 kann gegebenenfalls großzügige Wälz, also nicht so gering gehalten werden. Wichtig ist in diesem Zusammenhang jedoch, dass es sich auch hierbei lediglich um eine optionale Implementierung handelt.

Die Implementierung der Bohrungen 1030 reduziert zwar grundsätzlich die Massen der Teiltilgermassen 590 und damit der Tilgermasse 110, dadurch jedoch, dass der Niet 960 die Bohrungen 1030 im Wesentlichen wieder auffüllt, kann der durch die Bohrungen 1030 eintretende Massenverlust im Wesentlichen kompensiert werden. Unter Vernachlässigung der leicht unterschiedlichen Durchmesser der Bohrungen 1030 und der Nietschäfte 990 sowie der Ausnehmung 980 kann somit grundsätzlich sogar die fehlende Masse im Prinzip vollständig ausgeglichen werden.

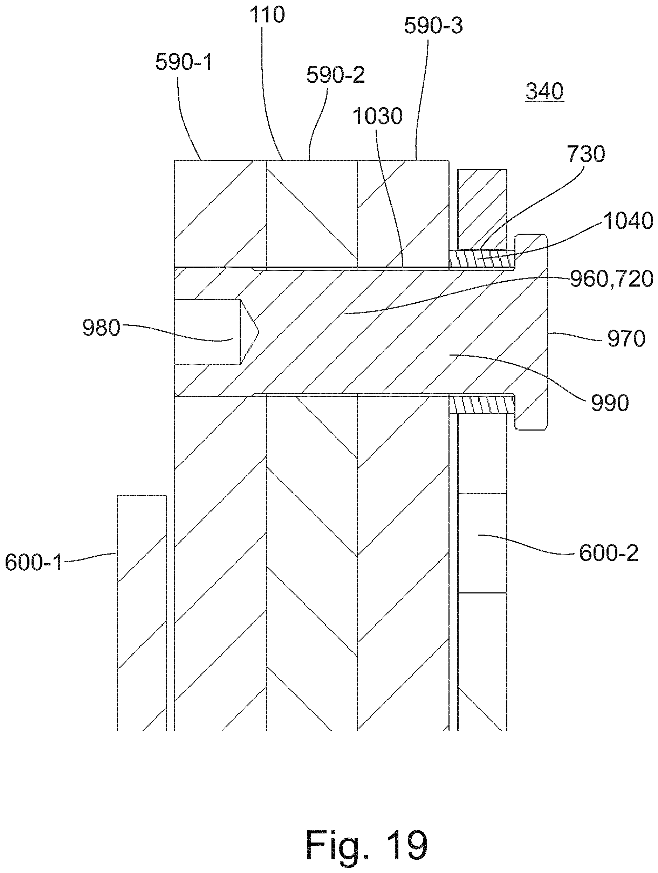

Fig. 19 zeigt eine Fig. 18b sehr ähnliche Darstellung eines Tilgerschwingungsdämpfers 340 gemäß einem weiteren Ausführungsbeispiel, welches sich von dem in Fig. 18b gezeigten im Wesentlichen dadurch unterscheidet, dass die Verbindungsausnehmungen 730 hinsichtlich ihres Durchmessers etwas größer ausgeführt ist. Ist beispielsweise die Verbindungsstruktur 720 aus einem metallischen Werkstoff gefertigt, also der Niet 960 aus einem entsprechenden Werkstoff gefertigt, kann ein Abschnitt der zylinderförmigen Außenkontur, der mit dem betreffenden Führungsbauteil 600- 2 zur Begrenzung der radialen Bewegung der Tilgermasse 110 in Kontakt tritt, von einer Hülse 1040 umgeben sein. Die Hülse kann beispielsweise aus einem Kunststoff, also beispielsweise einem Duroplast, einem Elastomere oder einem Thermoplast gefertigt sein, wie diese zuvor beschrieben wurden.

Optional kann so ein Anschlag der Tilgermassen 110 über eine Hülse 1040 erfolgen, die über den Nietschäften 990 angeordnet sein können. Diese können so radial an das betreffende Führungsbauteil 600-2 anschlagen, bevor die Wälzkörper 620 der Tilgermassen 110 in die betreffenden Anschläge gehen können. Alternativ kann selbstverständlich auch ein radial innenliegender Ring aus einem entsprechenden Material integriert werden, der die Tilgermassen 110 auffängt. Die Hülsen 1040 können so also als Kunststoffhülse, als winkelbegrenzender Anschlag eingesetzt werden, die bei maximal ausgelenkten Tilgermassen 110 in Kontakt mit dem zweiten Führungsbauteil 660 kommen.

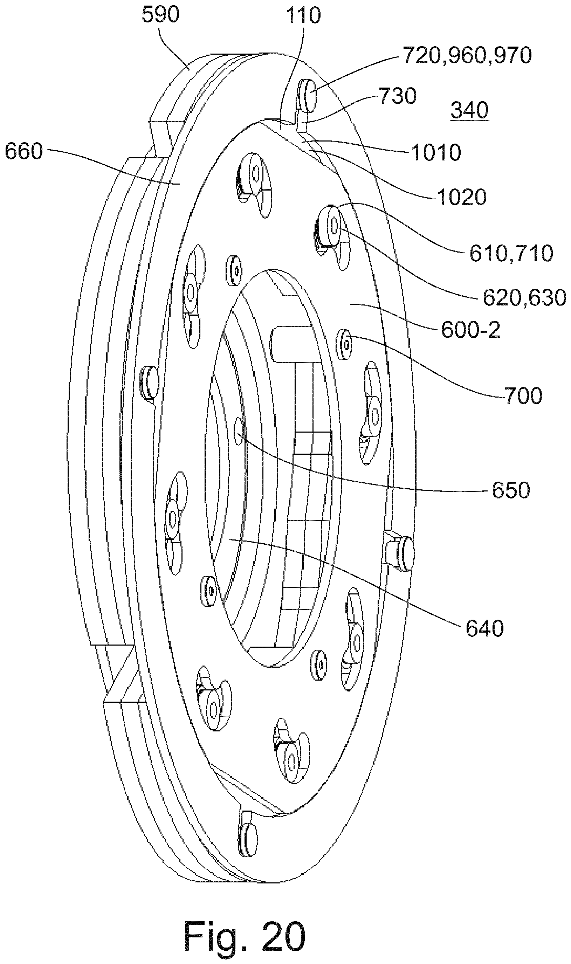

Fig. 20 zeigt schließlich eine perspektivische Darstellung des Tilgerschwingungsdämpfers 340, wie er beispielsweise in den Fig. 13a, 13b, 14a und 14b gezeigt ist.

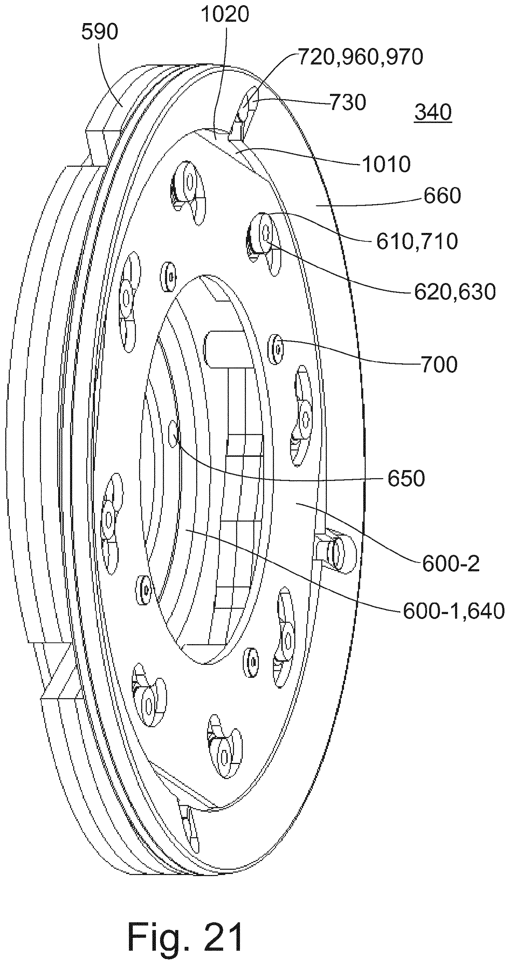

Fig. 21 zeigt ferner eine perspektivische Ansicht eines Tilgerschwingungsdämpfers 340 gemäß einem Ausführungsbeispiel, bei dem das Distanzbauteil 660 sich im Wesentlichen von dem in Fig. 20 gezeigten dadurch unterscheidet, dass dieses einen breiteren Steg im radial äußeren Bereich aufweist, um Fliehkraftbedingt Kräfte besser aufnehmen zu können. Auch hier macht sich diese Konstruktion wiederum zunutze, dass der Bereich 950 im Bereich des Anfahrelements 300 nicht verwendet wird. Zu diesem Zweck ist an der den Tilgermassen 110 abgewandten Seite der Distanzbauteil 660 konisch ausgeformt. Anders ausgedrückt ist das Distanzbauteil 660 auch hier wiederum dem freien Volumen zu der Turbine bzw. dem Turbinenrad 390 des Anfahrelements 300 angepasst.

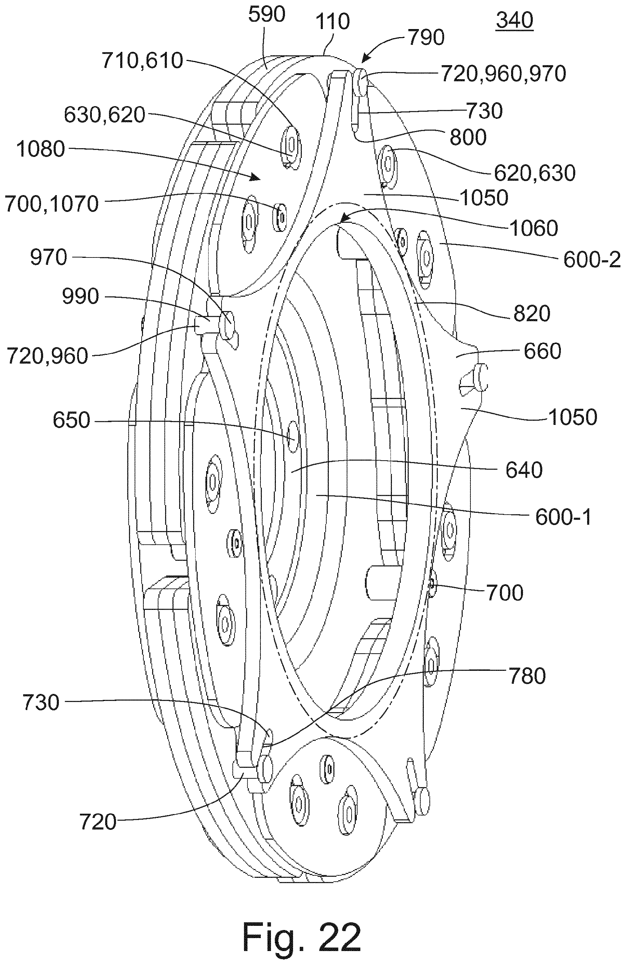

Fig. 22 zeigt eine perspektivische Darstellung eines weiteren Tilgerschwingungsdämpfers 390 mit einem Distanzbauteil 660 als geräuschreduzierende Maßnahme, bei der das Distanzbauteil 660 im Hinblick auf seine radiale Lagerung auch innen an dem zweiten Führungsbauteil 600-22 implementiert sein kann. Diese Implementierung kann es gegebenenfalls ermöglichen, das Massenträgheitsmoment des Distanzbauteils 660 aufgrund des kleineren Schwerpunktradius kleiner zu halten. Jedoch baut diese Variante entlang der Drehrichtung 430, also in axialer Richtung etwas länger.

Fig. 22 zeigt hierbei den Tilgerschwingungsdämpfer 340 von Seiten des zweiten Führungsbauteils 600-2 her. Die Verbindungsstrukturen 720 sind hierbei mit wenigstens einer der Tilgermassen 110 verbunden, wobei die Verbindungsstruktur 720 und das Distanzbauteil 660 gerade durch einen in Kontrakttreten der Verbindungsstruktur 720 mit dem Distanzbauteil 660, die Bewegung der betreffenden Tilgermasse 110 entlang der radialen Richtung zu begrenzen in der Lage ist. So weist die Verbindungsstruktur 720 bei diesem Ausführungsbeispiel wiederum eine zylinderförmige Außenkontur auf, die durch den Nietschaft 990 des Niets 960 gebildet wird. Die Verbindungsausnehmung 730 ist hierbei als eine schlitzförmige Ausnehmung ausgestaltet, deren offenes Ende 790 nach radial außen zeigt, während das geschlossene Ende 800 nach radial innen ausgerichtet ist.

Das Distanzbauteil 660 weist hierbei wiederum einen im Wesentlichen reinen ringförmigen Abschnitt 820 auf, an den sich zu den Verbindungsausnehmungen 730 hin entsprechende Führungsabschnitte 1050 anschließen. Diese sind integral bzw. einstückig mit dem ringförmigen Abschnitt 820 gebildet. Wie bereits zuvor erwähnt wurde, erfolgt hier die radiale Führung des Distanzbauteils 660 an einer radialen Innenkante 1060 an dem zweiten Führungsbauteil 600-2. Im Unterschied hierzu wird die axiale Führung wiederum zwischen dem zweiten Führungsbauteil 600-2 zur nächsten Teiltilgermasse 590 und dem betreffenden Nietkopf 990 des Niets 960 gewährleistet.

Diese Anordnung mit einer Führung des Distanzbauteils 660 an dem zweiten Führungsbauteil radial innen, kann zwar gegebenenfalls eine Massenträgheit des Distanzbauteils 660 reduzieren, kann jedoch gegebenenfalls auch zu einem erhöhten axialen Bauraumbedarf führen.

Wie bereits im Zusammenhang mit den zuvor beschriebenen Ausführungsbeispielen erläutert wurde, werden hierbei die Verbindungsstrukturen 720 an den im Wesentlichen parallel verlaufenden geraden Abschnitten 780 der Verbindungsausnehmung 730 geführt. Anders ausgedrückt schauen die Nieten 960 aus den Tilgermassen 110 heraus und werden durch die parallelen Flächen 780 des Distanzbauteils 660 zueinander auf Position gehalten.

Um eine Freigängigkeit der Tilgermassen 110, die hier in der Mittellage, also in ihrer neutralen Stellung gezeigt sind, zu gewährleisten und um Kollisionen mit einem Nietkopf 1070 des Distanzbolzens 700, mit dessen Hilfe die beiden Führungsbauteile 600 miteinander verbunden sind, zu vermeiden, weist das Distanzbauteil 660 entsprechende Aussparungen 1080 auf, die durch an diese jeweils in Umfangsrichtung zu beiden Seiten unmittelbar angrenzende Führungsabschnitte 1050 begrenzt werden. Dies kann gegebenenfalls notwendig, zumindest jedoch ratsam sein, da sich das Distanzbauteil 660 im Betrieb relativ zu den Führungsbauteilen 660 verdrehen kann.

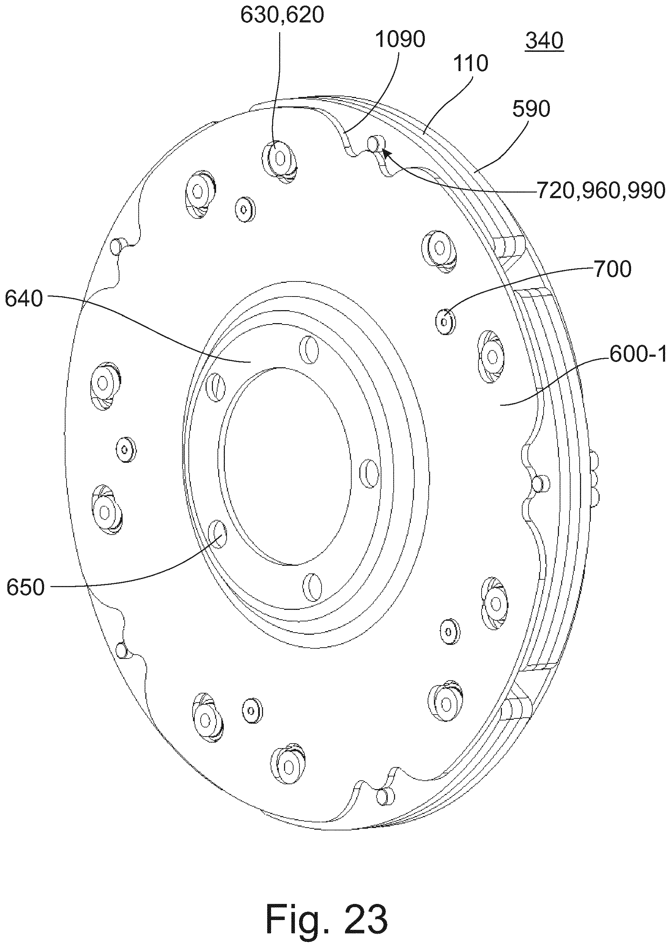

Fig. 23 zeigt eine perspektivische Darstellung des Tilgerschwingungsdämpfers 340 aus Fig. 22 von der Seite des ersten Führungsbauteils 600-1 aus. Im Unterschied zu den bisher beschriebenen Verbindungsstrukturen 720 ragt hier diese, also der Niet 960 bzw. der Nietschaft 990 auch auf der dem ersten Führungsbauteil 600 - 1 zugewandten Seite über die Tilgermasse 110 hinaus. Hierdurch kann es möglich sein, im Rahmen des ersten Führungsbauteils 600-1 durch Einführen einer entsprechenden weiteren Führungslaufbahn 1090 eine zusätzliche Führung der Tilgermassen 110 bzw. der Führungsbauteile 600 zu schaffen. Anstelle einer Ausnehmung, welche eine solche weitere Führungslaufbahn 1090 implementiert, kann selbstverständlich ebenso eine einfache Freistellung implementiert werden, die eine Kollision des gegebenenfalls über die Tilgermasse 110 hinausstehenden Verbindungsstruktur 720 mit dem ersten Führungsbauteil 600-1 unterbindet.

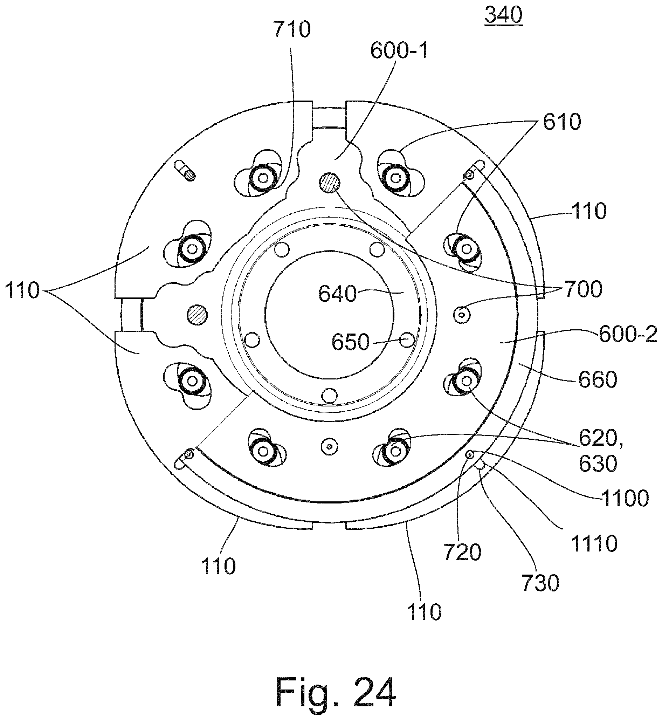

Fig. 24 zeigte eine Aufsicht auf einen weiteren Tilgerschwingungsdämpfer 340 gemäß einem Ausführungsbeispiel im Rahmen einer Teilaufrissdarstellung. So zeigt Fig. 24 die Baugruppe des Tilgerschwingungsdämpfers 340 mit ihren Komponenten und dem eingebauten Distanzbauteil 660 in neutraler Lage, was auch aufgrund der Führung der Tilgermassen 110 als Führungsring bezeichnet wird. Zur Verbesserung der Übersichtlichkeit sind bei den in Fig. 24 gewählten Darstellung das zweite Führungsbauteil 600-2 und das Führungsbauteil 660 geschnitten dargestellt.

So zeigt Fig. 24 beispielsweise die Führungslaufbahnen 610 der Tilgermassen 110 und der Führungsbauteile 600, die hinsichtlich ihrer Positionierung und ihrer Orientierung einander korrespondieren, wobei wiederum zur Verlagerung des Schwerpunkts der Tilgermassen 110 die hier nierenförmig ausgestalteten Führungslaufbahnen, die ebenfalls als Schwingbahnen bezeichnet werden, im Wesentlichen spiegelverkehrt bei den beiden zuvor genannten Komponenten des Tilgerschwingungsdämpfers 340 implementiert sind. Aufgrund ihrer Nierenform werden die Führungslaufbahnen 610 auch kurz als Nieren bezeichnet.

Ohne der nachfolgenden Beschreibung vorgreifen zu wollen, sei bereits an dieser Stelle darauf hingewiesen, dass bei den in Fig. 24 gezeigten Ausführungsbeispiel sowie den weiteren Ausführungsbeispiel das Distanzbauteil 660 die Verbindungsstruktur 720 umfasst. Hierbei umfasst die Verbindungsstruktur 720 einen Führungsabschnitt, der mit der Verbindungsausnehmung 730 in den Tilgermassen 110 in Eingriff steht. Die Verbindungsausnehmung 730 ist hierbei als Langloch 1110 ausgeführt, welches sich in der Fig. 24 gezeigten Position der Tilgermassen 110 im Wesentlichen in radialer Richtung erstreckt. Der Führungsabschnitt 1100 weist hierbei eine zylinderförmige Außenkontur auf, die mit den Rändern des Langlochs 1110 in Umfangsrichtung in Kontakt treten kann, um so die Mitnahme der Tilgermassen 110 bei einer Verdrehung des Distanzbauteils 660 zu ermöglichen.

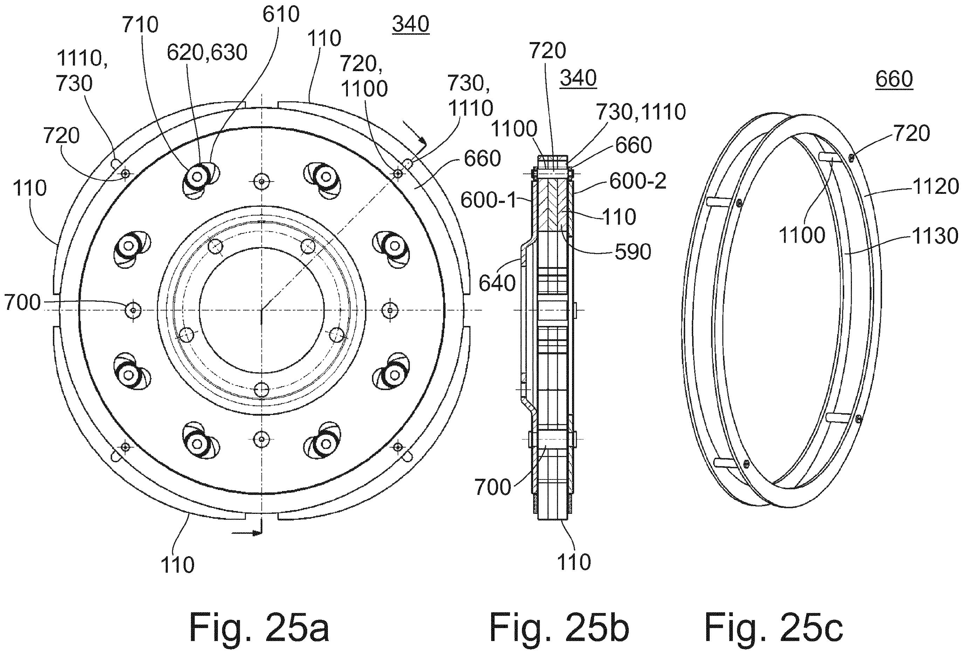

Fig. 25a zeigt eine Aufsicht auf den in Fig. 24 gezeigten Tilgerschwingungsdämpfer 340, wobei Fig. 25b eine entsprechende Schnittdarstellung entlang einer Richtung Y-Y in Fig. 25a zeigt. Fig. 25c zeigt schließlich eine perspektivische Darstellung des Distanzbauteils 660. Entsprechend zeigen die Fig. 25a und 25b selbstverständlich das Führungsbauteil 660 in einem eingebauten Zustand.

Wie Fig. 25c beispielsweise zeigt, weist das Distanzbauteil 660 einen ringförmigen Abschnitt 1120 auf, der mit der Verbindungsstruktur 720 mechanisch verbunden ist. Darüber hinaus weist das Führungsbauteil 660 ebenso einen weiteren ringförmigen Abschnitt 1130 auf, der ebenfalls mit der Verbindungsstruktur 720 verbunden ist. Beide ringförmigen Abschnitten 1120, 1130 bilden so ein entlang der Drehachse 430 versetztes Paar von ringförmigen Strukturen auf, die durch die Verbindungsstrukturen 720 miteinander verbunden sind. Zwischen den beiden ringförmigen Abschnitten 1120, 1130 weisen die Verbindungsstrukturen 720 den bereits zuvor erwähnten Führungsabschnitt 1100 mit der zylinderförmigen Außenkontur auf.

Die Führungsbauteile 600-1, 600-2 sind hierbei ebenfalls im Wesentlichen ringförmig bzw. scheibenförmig ausgestaltet und weisen so eine im Wesentlichen kreisförmig ausgestaltete Außenkontur auf. Ein Außendurchmesser der Führungsbauteile 600 ist hierbei auf einen Innendurchmesser der ringförmigen Abschnitte 1120, 1130 des Führungsbauteils 660 ausgelegt, sodass das Distanzbauteil 660 auf den äußeren Ringflächen der Führungsbauteile 600 aufliegen und somit in Umfangsrichtung und in radialer Richtung von den Führungsbauteilen 600 ebenso gehalten und geführt werden kann. Axial wird das Distanzbauteil 660 durch die Tilgermassen 110 gehalten, die, wie beispielsweise Fig. 25a, jedoch auch Fig. 25b zeigt, radial auch für die ringförmigen Abschnitte 1120, 1130 angeordnet ist.

Die Baugruppe des Distanzbauteils 660 umfasst also die beiden Ringe 1120, 1130, welche mittels mehrerer, im vorliegenden Ausführungsbeispiel mittels vier Verbindungsstrukturen 720, die auch als Abstandsstücke, Nieten oder allgemeiner als Verbindungselemente bezeichnet werden, miteinander verbunden sind. Die Verbindungsstrukturen 720 fungieren hierbei zugleich als Führungsstifte für die radiale Bewegung der Tilgermassen 110 in dem Tilgerschwingungsdämpfer 340.

Zur Implementierung bzw. Darstellung gewünschter Eigenschaften, wie beispielsweise Festigkeit, Gleitfähigkeit, Härte, Funktion und anderer Parameter, kann das Distanzbauteil 660 beispielsweise vollständig oder teilweise aus einem Kunststoff oder einem metallischen Werkstoff bzw. eine Kombination der betroffenen Materialien hergestellt werden. Ebenso kann dieses eine entsprechende Beschichtung aufweisen, also mit einer entsprechenden Schicht versehen sein.

Im Hinblick auf die Funktion ähnelt das Distanzbauteil 660 den zuvor beschriebenen Distanzbauteilen. Dieses wird in radialer Richtung auf den Führungsbauteilen 600 abgestützt und führt die Tilgermassen 110 relativ zueinander in Umfangsrichtung. Durch die Proportionen der auch als ovale Aussparung bezeichneten Langlöcher 1110 der Verbindungsausnehmungen 730 in den Tilgermassen 110 wird die radiale Bewegung der Tilgermassen 110 definiert. Durch die drehbare Lagerung des Distanzbauteils 660 wird eine freie Schwingung der Tilgermassen 110 in einem definierten oder vorgegebenen Winkelbereich nicht beeinträchtigt.

Weiterhin werden die Tilgermassen des Distanzbauteils 660 bei einem Herabfallen gegeneinander abgestützt und somit auf Abstand gehalten, wodurch eine Kollision der Tilgermassen 110, beispielsweise nach dem Abstellen des Motors, gegebenenfalls vermieden werden kann. Dies kann, wie zuvor bereits erläutert wurde, klappernde Geräusche hervorrufen, die dann sowohl im Inneren des Fahrzeugs als auch außerhalb wahrgenommen werden könnten.

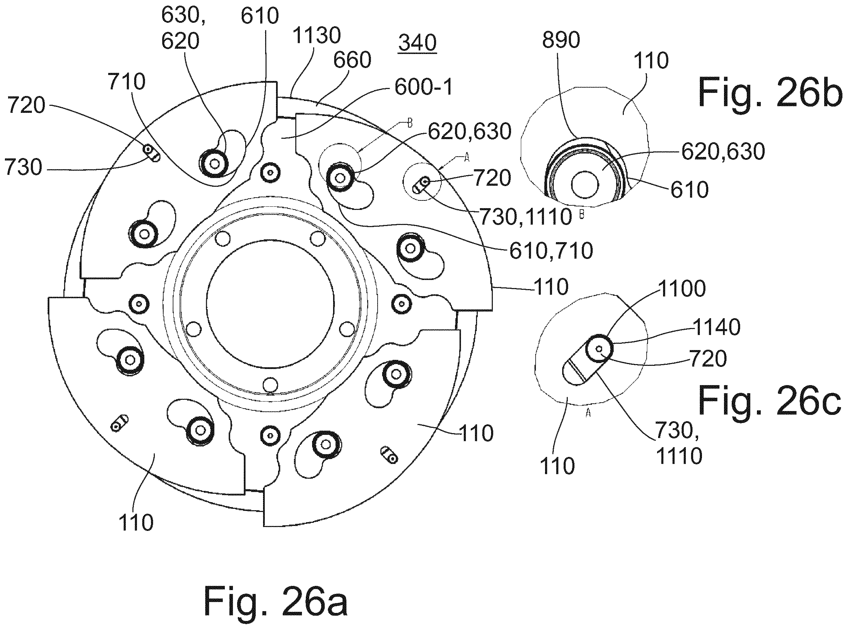

Fig. 26a zeigt eine Darstellung in Form einer Aufsicht auf den in den Fig. 24 - 25c gezeigten Tilgerschwingungsdämpfer 340, wobei zur besseren Übersichtlichkeit das zweite Führungsbauteil 600-2 sowie der ringförmige Abschnitt 1120 des Distanzbauteils 660 nicht dargestellt sind.

Bei der in Fig. 26a dargestellten Situation sind die Tilgermassen 110 in ihrem maximalen Verschwenkwinkel bzw. ihrem maximalen Schwingwinkel. Fig. 26b zeigt hierbei eine Vergrößerung eines Bereichs um das Bahnende 890 der Auslaufbahn 610 in der Tilgermasse 110. Fig. 26b zeigt hierbei, dass der Wälzkörper 620, der wiederum als Rolle 630 implementiert ist, auch in diesem Betriebszustand nicht das Bahnende 890 erreicht, sondern zuvor gestoppt wird.

Dies wird durch das Zusammenwirken der Verbindungsstruktur 720 und der Verbindungsausnehmung 730, also deuten die spielbehaftete formschlüssige Verbindung zwischen dem Distanzbauteil 660 und den Tilgermassen 110 bewirkt. So befindet sich in dem maximalen Schwingwinkel die Verbindungsstruktur 720 in einer Endlage 1140 des Langlochs 1110 bzw. der Verbindungsausnehmung 730, wie dies in der vergrößerten Darstellung des Bereichs A aus Fig. 26a dargestellt ist. Anders ausgedrückt zeigen die Fig. 26b und 26c, dass die Wälzkörper 620 kurz vor dem Anschlag gestoppt werden, dadurch, dass die auch als Abstandsstück bezeichnete Verbindungsstruktur 720 ihrerseits in den Anschlag geht.

Die Fig. 26a bis 26c zeigen so den Tilgerschwingungsdämpfer 340 mit maximal ausgelenkten Tilgermassen 110, also in der Situation, wenn seine Auslenkung der maximalen Schwingamplitude entspricht. Bevor die Tilgermassen 110 in ihre Anschläge ihrer Führungslaufbahnen geraten können, wird mithilfe des Distanzbauteils 660 eine hemmende Wirkung zwischen den Wälzkörpern 620 und den Führungslaufbahnen 610 der Führungsbauteile 600 sowie zwischen den Wälzkörpern 620 und den Führungslaufbahnen der Tilgermassen 110 erzielt.

Dies kommt dadurch zustande, dass die Verbindungsstrukturen 720 des Distanzbauteils 660 in die Anschläge ihrer Bahnen, also in die Anschläge ihrer zugeordneten Verbindungsausnehmungen 730, in den Tilgermassen 110 gehen und somit die Tilgermassen 110 an ihrer Bewegung radial nach innen über eine bestimmte Distanz hinaus hindern. Durch diese Hemmung wird somit der Anschlag der Tilgermassen 110 am Bahnende 890 ihrer Führungslaufbahnen 610 gedämpft. In diesem Betrieb beschreibt das Distanzbauteil 660 einen vergleichsweise geringen Winkel.

Der angestrebte freie Schwingwinkel der Tilgermassen 110 kann hierbei über die im Wesentlichen radiale Länge der Langlöcher, also der Verbindungsausnehmungen 730 in den Tilgermassen 110 bestimmt werden. Über die Einstellung des Spiels in Umfangsrichtung zwischen den Führungslaufbahnen und den Verbindungsstücken 720 kann darüber hinaus eine Asynchronität bei der Umfangsbewegung der Tilgermassen 110 zugelassen werden.

Aufgrund dessen, dass durch den Einsatz des Distanzbauteils 660 eine Kollision der Tilgermassen 110 miteinander im Wesentlichen ausgeschlossen werden kann, kann durch eine Verlängerung der Tilgermassen 110 in Umfangsrichtung gegebenenfalls auch eine höhere Tilgermasse, also eine Masse der Tilgermassen 110, realisiert werden.

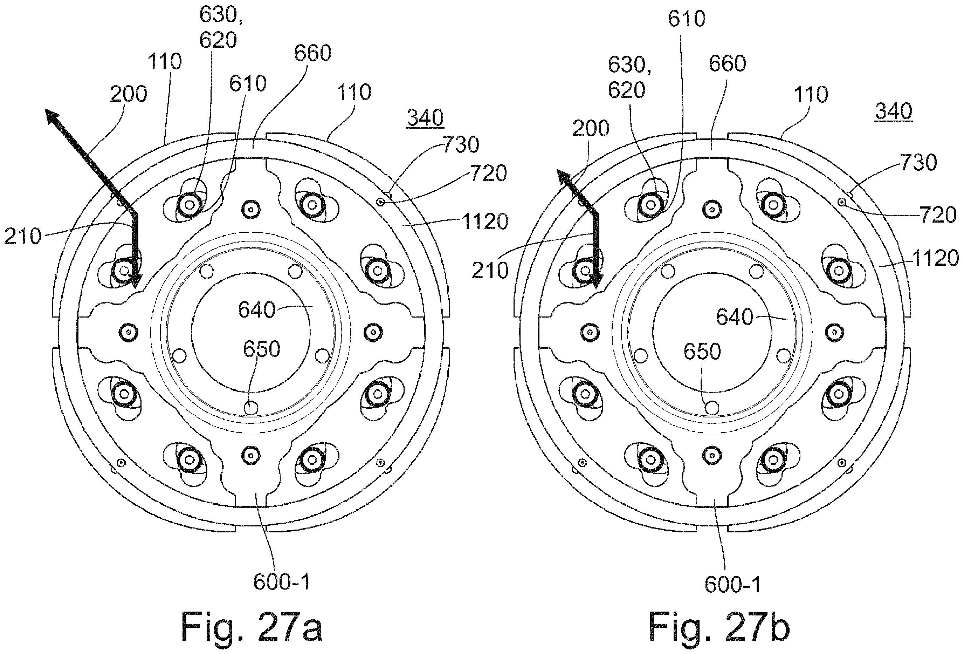

Die Fig. 27a und 27b zeigen eine Fig. 25a vergleichbare Darstellung des Tilgerschwingungsdämpfers 340, wie er zuvor beschrieben wurde. Auch in den Fig. 27a und 27b ist zur verbesserten Darstellung das zweite Führungsbauteil 600-2 nicht dargestellt bzw. ausgeblendet. Hierbei zeigt Fig. 27a einen Zustand im Normalbetrieb, bei dem die Fliehkräfte 200, welche auf die Tilgermassen 110 wirken, betragsmäßig wesentlich höher als die entsprechenden Gewichtskraftkomponenten 210 sind, die ebenfalls auf die Tilgermassen 110 einwirken. Dadurch werden die Tilgermassen 110 radial außen gehalten und bewegen sich entsprechend der vorliegenden Anregung entlang der Führungslaufbahnen 610 vermittelt durch die Wälzkörper 620.

Während also Fig. 27a den Zustand des normalen Motorbetriebs darstellt, zeigt Fig. 27b einen Zustand, bei dem der Motor abgestellt wird, die Getriebeeingangswelle jedoch noch läuft. Alternativ kann die in Fig. 27b dargestellte Situation auch im Kriechbetrieb des Fahrzeugs auftreten. Bei langsamen Kriechen dreht sich die Getriebeeingangswelle mit niedrigerer Drehzahl als die Motordrehzahl. In einem solchen Fall kann die Gewichtskraft 210 betragsmäßig deutlich größer sein als die entsprechende Fliehkraft 200. Dies gilt um so mehr für die entsprechende parallele Komponente zu der Gewichtskraft 210 der Fliehkraft 200.

Ähnlich verhält es sich auch beim Abstellen des Motors. Die Getriebeeingangswelle läuft einige Sekunden nach. Ab einem bestimmten Zeitpunkt übersteigt dann die Gewichtskraft 210 betragsmäßig die entgegengesetzte Fliehkraftkomponente der Fliehkraft 200. Ohne eine entsprechende Maßnahme würden in einer solchen Situation die Tilgermassen unkontrolliert in die Anschläge bzw. Bahnenden 890 der Führungslaufbahnen 610 fallen.

In beiden Zuständen sorgt das Distanzbauteil 660 dafür, dass die Tilgermassen 110 auf Abstand gehalten werden und somit eine Kollision nicht mehr möglich ist. Des Weiteren kann das Distanzbauteil 660 die Tilgermassen 110 in ihrer radialen Position halten und damit gegebenenfalls verhindern, dass die Tilgermassen 110 in radialer Richtung an den Wälzkörper 620 anschlagen. Aufgrund der in diesem Ausführungsbeispiel gezeigten Geometrie der Führungslaufbahnen 610 kann hierbei lediglich ein leichtes Verkippen der Tilgermassen 110 ohne signifikante Auswirkung auf die Akustik zu erwarten sein. Dies könnte sich jedoch bei anders ausgestalteten, beispielsweise nicht nierenförmigen Führungslaufbahnen 610 ändern.

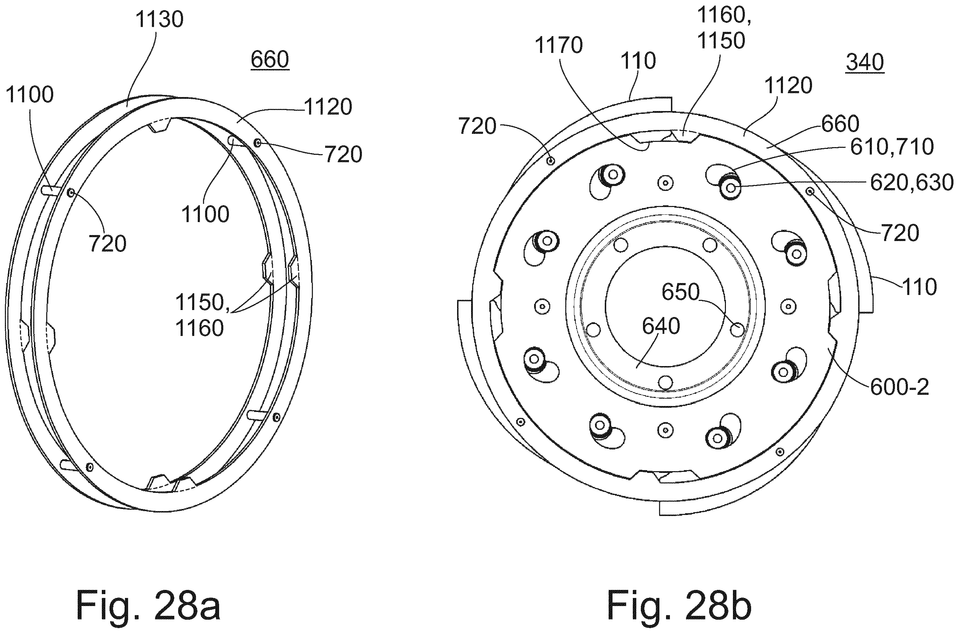

Fig. 28a zeigt eine perspektivische Darstellung eines weiteren Distanzbauteils 660, wie es beispielsweise in einem anderen Tilgerschwingungsdämpfer 340 gemäß einem Ausführungsbeispiel zum Einsatz kommen kann. Der entsprechende Tilgerschwingungsdämpfer 340 ist als Aufsicht in Fig. 28b dargestellt.

Das Distanzbauteil 660 weist wiederum den ringförmigen Abschnitt 1120 sowie den weiteren ringförmigen Abschnitt 1130 auf, die über die Verbindungsstrukturen 720 mit ihren Führungsabschnitten 1100 miteinander verbunden sind. Im Unterschied zu dem in Fig. 25c dargestellten Distanzbauteilen 660 weist das Distanzbauteil 660 aus Fig. 28a jedoch sowohl an dem ringförmigen Abschnitt 1120 wie auch an dem weiteren ringförmigen Abschnitt 1130 jeweils wenigstens eine Anschlagstruktur 1150 auf, die ausgebildet ist, um eine Verdrehung des Distanzbauteils 660 bezüglich des wenigstens einen Führungsbauteils 600 zu begrenzen.

Um dies zu erreichen, ist die Anschlagsstruktur 1150 des Distanzbauteils 660 als Anschlagsvorsprung 1160 ausgebildet. Das Führungsbauteil 600-2 sowie das in Fig. 28b nicht sichtbare erste Führungsbauteil 600-1 weisen jeweils den Anschlagsvorsprung 1160 der beiden ringförmigen Abschnitte 1120, 1130 entsprechend gegen Anschlagsausnehmung 1170 auf. Die Anschlagsvorsprünge 1160 sind hierbei gerade so ausgelegt, dass diese in die Gegenanschlagsausnehmungen 1170 eingreifen und so ein Verdrehen des Distanzbauteils 660 bzgl. des oder der Führungsbauteile 600 begrenzen.

Selbstverständlich können bei anderen Ausführungsbeispielen auch die Anordnungen der Ausnehmung und des Vorsprungs vertauscht sein. So kann beispielsweise das Distanzbauteil 660 eine Anschlagsausnehmung aufweisen, während die Führungsbauteile oder wenigstens eines der Führungsbauteile 600 einen entsprechenden Gegenanschlagsvorsprung aufweisen kann. Auch muss dies selbstverständlich nicht im Falle eines Tilgerschwingungsdämpfers 340 mit mehr als einem Führungsbauteil 600 an mehr als einem implementiert sein. Selbstverständlich ist dies jedoch optional möglich. Anders ausgedrückt zeigt Fig. 28a eine Variante des Distanzbauteils 660 mit radial nach innen ragenden Nasen als Anschlagsstrukturen 1150 in Form von Anschlagsvorsprüngen 1160. Diese werden in entsprechenden Aussparungen oder in Anschlagsausnehmungen 1170 der Führungsbauteile 600 geführt.

Über die Länge der Gegenanschlagsausnehmungen 1170 in den Führungsbauteilen 600 kann so der maximale Schwingwinkel der Tilgermassen 110 eingestellt werden. Somit ergibt sich eine weitere Möglichkeit der Einstellung des freien Schwingwinkels.

Fig. 28b zeigt hierbei die gesamte Baugruppe des Tilgerschwingungsdämpfers 340 mit eingebautem Distanzbauteil 660. Die Baugruppe ist mit bis zum Anschlag ausgefahrenen Tilgermassen 110 dargestellt.

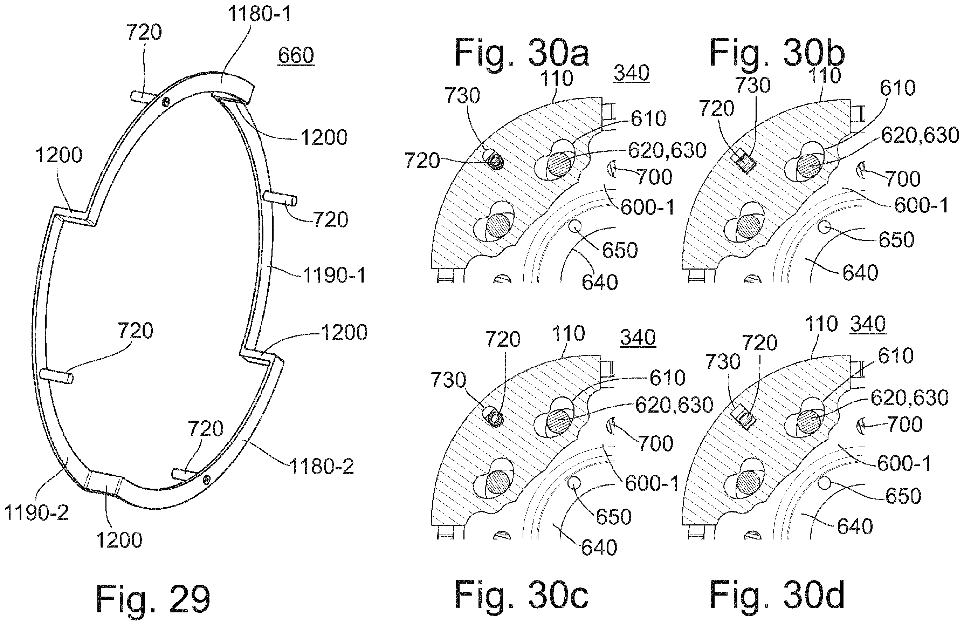

Fig. 29 zeigt schließlich eine perspektivische Darstellung einer weiteren Variante eines Distanzbauteils 660 für einen Tilgerschwingungsdämpfer 340 gemäß einem Ausführungsbeispiel. Hierbei handelt es sich um eine gegenüber dem zuvor gezeigten Varianten vereinfachte Ausgestaltung des Distanzbauteils 660. Das hier gezeigte Distanzbauteil 660 umfasst so zwei ringsegmentförmige Abschnitte 1180-1, 1180-2 und einen entlang der in Fig. 29 nicht eingezeichneten Drehachse 430 parallel zu den ringsegmentförmigen Abschnitten 1180 versetzten und mit diesem verbundenen weitere ringförmige Abschnitte 1190-1, 1190-2. Die Verbindung zwischen den ringsegmentförmigen Abschnitten 1180 und den weiteren ringsegmentförmigen Abschnitten 1190 erfolgt hierbei über Verbindungsabschnitte 1200, die sich im Wesentlichen entlang der Drehachse 430 erstrecken.

Auch dieses Distanzbauteil 660 umfasst mehrere Verbindungsstrukturen 720, von denen jeweils eines mit einem der ringsegmentförmigen Abschnitte 1180 und jeweils eines mit den weiteren ringsegmentförmigen Abschnitten 1190 mechanisch drehfest bzw. mechanisch fest verbunden ist. Selbstverständlich können diese sowie die Anordnung der ringsegmentförmigen Abschnitte 1180 hinsichtlich Zahl, Ausdehnung und anderer Parameter bei anderen Ausführungsbeispielen abweichend ausgestaltet sein.

Die Verbindungsstrukturen 720 und die entsprechenden Verbindungsausnehmungen 730 sind hier also ausgebildet, um durch ein in Kontakttreten derselben mit einem Ende der Verbindungsausnehmungen 730 eine entsprechende Bewegung der betreffenden Tilgermasse 110 entlang der radialen Richtung zu begrenzen. Ist die Verbindungsstruktur 720 wiederum aus einem metallischen Werkstoff gefertigt, kann hier erneut gegebenenfalls mithilfe einer Hülse aus einem Kunststoff, also beispielsweise aus einem Duroplast, einem Elastomere oder einem Thermoplast die zylinderförmige Außenkontur umgeben sein, um so eine geräuschärmere Materialpaarung zu realisieren.

Die Fig. 29 zeigt hierbei also eine vereinfachte Variante des Distanzbauteils 660, die gegebenenfalls sogar im Rahmen eines Spritzgießvorgangs vollständig als Spritzgussteil herstellbar sein kann. Einer der großen Vorteile dieser dort gezeigten Geometrie des Distanzbauteils 660 ist die mögliche Gewichtsreduktion. Ebenso kann gegebenenfalls eine Vernietung entfallen.

Wie schließlich die Fig. 30a, 30b, 30c und 30d zeigen, die jeweils eine Aufsichtsdarstellung auf eine Tilgermasse 110 eines Tilgerschwingungsdämpfers 340 gemäß einem Ausführungsbeispiel gezeigt ist. Die auch als Abstandsstücke bezeichneten Verbindungsstrukturen 720 können hierbei in verschiedenen Distanzbauteilvariationen in diversen Formen hergestellt werden. So zeigt beispielsweise Fig. 30a eine zylindrische Ausgestaltung, während Fig. 30b eine quaderförmige zeigt. Bei Fig. 30c handelt es sich um eine kegelstumpfförmige Ausgestaltung der Verbindungsstruktur 720, während Fig. 30 deinen Variante mit abgerundeten Ecke einer quaderförmigen Fassung zeigt. Ebenso kann eine Beschichtung der Oberflächen oder der Einsatz von Hülsen aus Polymer- oder Elastomermaterialien zur Erzielung einer gewünschten Dämpfungs- bzw. Gleiteigenschaft umgesetzt werden.

Wie die letzten Ausführungsbeispiele gezeigt haben, kann so ein Distanzbauteil, welches auch als Führungsring bezeichnet wird, gegebenenfalls zur Verbesserung der Akustik bei drehzahladaptiven Tilgern, also Tilgerschwingungsdämpfer 340 gemäß einem Ausführungsbeispiel beitragen. Diese können beispielsweise bei (hydrodynamischen) Wandlern 310 mit einem entsprechenden drehzahladaptiven Tilger jedoch auch bei anderen Anfahrelementen 300, beispielsweise auf reinen reibschlüssigen Kontakten basierenden Anfahrelementen 300, eingesetzt werden.

Durch den Einsatz eines Ausführungsbeispiels eines Tilgerschwingungsdämpfers 340 kann gegebenenfalls ein Kompromiss zwischen einer Vereinfachung einer Herstellung eines Tilgerschwingungsdämpfers, einer Reduzierung während des Betriebes auftretender Geräusche, einer effizienten Ausnutzung des zur Verfügung stehenden Bauraums und der Leistung des Tilgerschwingungsdämpfers 340 verbessert werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichen

- 100: Tilgerschwingungsdämpfer
- 110: Tilgermasse
- 120: Rolle
- 130: erstes Führungsblech
- 140: Distanzbolzen
- 150: Drehachse
- 160: Flansch
- 170: Bohrung
- 180: Führungslaufbahn
- 190: Kreis
- 200: Fliehkraft
- 210: Gewichtskraft
- 300: Anfahrelement
- 310: hydrodynamischer Wandler
- 320: Überbrückungskupplung
- 330: Schwingungsdämpfer
- 340: Tilgerschwingungsdämpfer
- 350: flexible Anschlussplatte
- 360: Gehäuse
- 370: Pumpenrad
- 380: Pumpenschaufel
- 390: Turbinenrad
- 400: Turbinenschaufel
- 410: Leitrad
- 420: Freilauf
- 430: Drehachse
- 440: Abtriebsnabe
- 450: Innenverzahnung
- 460: Außenverzahnung
- 470: Innenlamelle
- 480: Kolbenvolumen
- 490: Kolben
- 500: Innenlamellenträger
- 510: Distanzvernietung
- 520: äußere Zentralschreibe
- 530: erstes Federelement
- 540: Abdeckblech
- 550: Distanzvernietung
- 560: zweites Federelement
- 570: innere Zentralscheibe
- 580: Vernietung
- 590: Teiltilgermasse
- 600: Führungsbauteil
- 610: Führungslaufbahn
- 620: Wälzkörper
- 630: Rolle
- 640: Flanschstruktur
- 650: Bohrung
- 660: Distanzbauteil
- 670: Nut-Feder-Verbindung
- 680: Schulter
- 690: Bohrung
- 700: Distanzbolzen
- 710: gebogener Abschnitt
- 720: Verbindungsstruktur
- 730: Verbindungsausnehmung
- 740: Feder
- 750: Nut
- 760: Abstand
- 770: Kontaktbereich
- 780: gerader Abschnitt
- 790: offenes Ende
- 800: geschlossenes Ende
- 810: Abrundung
- 820: ringförmiger Abschnitt
- 830: Abrundung
- 840: radiale Richtung
- 850: Mittelpunkt
- 860: Tangente
- 870: Linie
- 880: Rang
- 890: Bahnende
- 900: Nut
- 910: Metallring
- 920: Metallblech
- 930: gummierte Oberfläche
- 940: Verstärkungsstruktur
- 950: Bereich
- 960: Niet
- 970: Nietkopf
- 980: Ausnehmung
- 990: Nietschaft
- 1000: Bereich
- 1010: Aussparung
- 1020: abgeflachter Abschnitt
- 1030: Bohrung
- 1040: Hülse
- 1050: Führungsabschnitt
- 1060: Innenkante
- 1070: Nietkopf
- 1080: Aussparung
- 1090: weiterer Führungsabschnitt
- 1100: Führungsabschnitt
- 1110: Langloch
- 1120: ringförmiger Abschnitt
- 1130: weiterer ringförmige Abschnitt
- 1140: Endlage
- 1150: Anschlagsstruktur
- 1160: Anschlagvorsprung
- 1170: Gegenanschlagausnehmung
- 1180: ringsegmentförmiger Abschnitt
- 1190: weiterer ringsegmentförmiger Abschnitt
- 1200: Verbindungsabschnitt

## Patentansprüche

1. Tilgerschwingungsdämpfer (340), beispielsweise für einen Antriebsstrang eines Kraftfahrzeugs, zur Dämpfung eines Schwingungsanteils einer Drehbewegung, mit folgenden Merkmalen:
wenigstens drei Tilgermassen (110), die derart ausgebildet sind, um in Abhängigkeit von der Drehbewegung eine Schwingung auszuführen, um den Schwingungsanteil derselben zu dämpfen;
wenigstens einem Führungsbauteil (600), das ausgebildet ist, um die Tilgermassen (110) derart beweglich zu führen, sodass die Tilgermassen (110) entlang einer zu einer Drehachse (430) der Drehbewegung senkrechten Umfangsrichtung versetzt angeordnet sind und die Schwingungen ausführen können;
einem gegenüber dem wenigstens einen Führungsbauteil (600) um die Drehachse der Drehbewegung verdrehbaren und formstabilen Distanzbauteil (660), das mit den Tilgermassen (110) in einer spielbehafteten formschlüssigen Verbindung steht, die so ausgestaltet sind, dass ausgehend von einer Mittellage der Tilgermassen (110) zu dem Distanzbauteil (660) bei einer ein Spiel der Verbindungen zweier der Tilgermassen (110) zu dem Distanzbauteil (660) überwindenden Schwingung einer der beiden Tilgermassen (110) das Distanzbauteil (660) entlang der Umfangsrichtung so verdreht wird, dass dieses die andere der beiden Tilgermassen (110) entlang der Umfangsrichtung mitnimmt, wobei das Distanzbauteil (660) eine Anschlagstruktur (1150) aufweist, die ausgebildet ist, um eine Verdrehung des Distanzbauteils (660) bezüglich des wenigstens einen Führungsbauteils (600) zu begrenzen,
**dadurch gekennzeichnet, dass**
die Anschlagstruktur (1150) des Distanzbauteils (660) einen Anschlagsvorsprung (1160) oder eine Anschlagsausnehmung umfasst, die ausgebildet ist, um in eine Gegenanschlagsausnehmung (1170) bzw. einen Gegenanschlagsvorsprung wenigstens eines Führungsbauteils (600) einzugreifen und eine Verdrehung des Distanzbauteils (660) bezüglich dem wenigstens einen Führungsbauteil (600) zu begrenzen.

2. Tilgerschwingungsdämpfer (340) nach Anspruch 1, bei dem die Tilgermassen (110) und das Distanzbauteil (660) so ausgebildet sind, dass die Tilgermassen (110) bezüglich des Distanzbauteils (660) von ihren Mittellagen zu dem Distanzbauteil (660) ausgehend um einen vorbestimmten Winkel verdrehbar sind.

3. Tilgerschwingungsdämpfer (340) nach einem der vorhergehenden Ansprüche, bei dem die Spiele der Verbindungen zwischen den Tilgermassen (110) und dem Distanzbauteil (660) so ausgebildet sind, dass die Tilgermassen (110) von dem Distanzbauteil (660) im Wesentlichen parallel zueinander geführt werden.

4. Tilgerschwingungsdämpfer (340) nach einem der vorhergehenden Ansprüche, bei dem das wenigstens eine Führungsbauteil (600) wenigstens abschnittsweise eine kreis- oder zylindermantelförmige Kontur aufweist, die sich um die Drehachse (340) wenigstens teilweise oder vollständig herum erstreckt, und bei dem das Distanzbauteil (660) ausgebildet ist, um radial an der kreis- oder zylindermantelförmigen Kontur gelagert zu sein.

5. Tilgerschwingungsdämpfer (340) nach einem der vorhergehenden Ansprüche, bei dem wenigstens 50% einer Masse des Distanzbauteils (660) vollständig radial außerhalb oder innerhalb wenigstens eines Führungsbauteils (600) angeordnet ist.

6. Tilgerschwingungsdämpfer (340) nach einem der vorhergehenden Ansprüche, bei dem das Distanzbauteil (660) ausgebildet ist, um durch ein in Kontakt Treten mit den Tilgermassen (110) außerhalb der spielbehafteten formschlüssigen Verbindungen zu diesen eine Bewegung der Tilgermassen (110) entlang einer radialen Richtung und/oder einen maximalen Schwingwinkel der Tilgermassen (110) zu begrenzen.

7. Tilgerschwingungsdämpfer (340) nach Anspruch 6, bei dem das Distanzbauteil (660) als Distanzinnenring oder als Distanzaußenring ausgebildet ist, um wenigstens eine der Tilgermassen (110) bei einer radial nach innen bzw. einer radial nach außen gerichteten Bewegung über eine vorbestimmte Distanz hinaus abzufangen.

8. Tilgerschwingungsdämpfer (340) nach einem der vorhergehenden Ansprüche, bei dem die Tilgermassen (110) und das Distanzbauteil (340) so ausgebildet sind, dass ein maximaler Schwingwinkel der Tilgermassen (110) und/oder eine Bewegung derselben entlang der radialen Richtung durch die spielbehafteten formschlüssigen Verbindungen begrenzet wird.

9. Tilgerschwingungsdämpfer (340) nach einem der Ansprüche 6 bis 8, bei dem eine Materialpaarung der bei dem Begrenzen der radialen Bewegung bzw. des maximalen Schwingwinkels miteinander in Kontakt tretender Komponenten eine Komponente einen Kunststoff, ein Duroplast, ein Elastomer oder ein Thermoplast und die andere Komponente einen metallischen Werkstoff aufweist, sodass gegenüber einer metallischen Materialpaarung ein geringeres Geräusch entsteht.

10. Tilgerschwingungsdämpfer (340) nach einem der Ansprüche 8 oder 9, bei dem die spielbehaftete formschlüssige Verbindung zwischen dem Distanzbauteil (660) und wenigstens einer der Tilgermassen (110) eine Verbindungsstruktur (720) und eine Verbindungsausnehmung (730) aufweist, wobei die Verbindungsstruktur (720) in die Verbindungsausnehmung (730) eingreift, und wobei die Verbindungsstruktur (720) und die Verbindungsausnehmung (730) ausgebildet sind, um eine radiale Bewegung der Verbindungsstruktur (720) und der Verbindungsausnehmung (730) zueinander und/oder eine Verdrehung der Verbindungsstruktur (720) und der Verbindungsausnehmung (730) zueinander zu ermöglichen.

11. Tilgerschwingungsdämpfer (340) nach einem der vorhergehenden Ansprüche, bei dem die Tilgermassen (110) jeweils wenigstens eine Führungslaufbahn (610) aufweisen, bei dem das wenigstens eine Führungsbauteil (600) für die Tilgermassen (110) jeweils eine Führungslaufbahn (610) aufweist, die zu den Führungslaufbahnen (610) der Tilgermassen (110) korrespondiert, und wobei der Tilgerschwingungsdämpfer (340) für die Tilgermassen (110) jeweils wenigstens einen Wälzkörper (620) aufweist, die ausgebildet sind, um an den Führungslaufbahnen (610) des wenigstens einen Führungsbauteils (600) und denen der Tilgermassen (110) abzurollen, um diese so zuführen, dass eine Auslenkung der Tilgermassen (110) aus ihren jeweiligen Mittellagen zu einer radialen Verlagerung der Schwerpunkte der betreffenden Tilgermasse (110) führt.

12. Tilgerschwingungsdämpfer (340) nach Anspruch 11, bei dem eine Begrenzung der Bewegung der wenigstens einer der Tilgermassen (110) in der radialen Richtung (840) bewirkt wird, bevor der wenigstens eine betreffende Wälzkörper (620) ein Ende (890( der betreffenden Führungslaufbahnen (610) erreicht.

13. Tilgerschwingungsdämpfer (340) nach einem der vorhergehenden Ansprüche, bei dem das Distanzbauteil (660) mit allen Tilgermassen (110) spielbehaftet formschlüssig so verbunden ist, dass von einer Mittellage einer beliebigen Tilgermasse (110) aller Tilgermassen (110) zu dem Distanzbauteil (660) und den Mittellagen der anderen Tilgermassen (110) zu dem Distanzbauteil (660) bei einer ein Spiel aller Verbindungen der betreffenden Tilgermassen (110) zu dem Distanzbauteil (660) überwindenden Schwingung der beliebigen Tilgermasse (110) das Distanzbauteil (660) entlang der Umfangsrichtung so verdreht wird, dass dieses alle übrigen Tilgermasse (110) entlang der Umfangsrichtung mitnimmt.

## Claims

1. Absorber-type vibration damper (340), for example for a drive train of a motor vehicle, for damping a vibration component of a rotational movement, having the following features:
at least three absorber masses (110) which are configured so as to carry out a vibration in a manner which is dependent on the rotational movement, in order to damp the vibration component thereof;
at least one guide component (600) which is configured to guide the absorber masses (110) movably such that the absorber masses (110) are arranged along and offset with respect to a circumferential direction which is perpendicular with respect to a rotational axis (430) of the rotational movement, and can carry out the vibrations;
a dimensionally stable spacer component (660) which can be rotated about the rotational axis of the rotational movement with respect to the at least one guide component (600) and is a play-afflicted positively locking connection with the absorber masses (110) which are configured in such a way that, starting from a middle position of the absorber masses (110) with respect to the spacer component (660), in the case of a vibration of one of the two absorber masses (110), which vibration overcomes a play of the connections of two of the absorber masses (110) with respect to the spacer component (660), the spacer component (660) is rotated along the circumferential direction in such a way that it drives the other of the two absorber masses (110) along the circumferential direction, the spacer component (660) having a stop structure (1150) which is configured to limit a rotation of the spacer component (660) with regard to the at least one guide component (600),
**characterized in that**
the stop structure (1150) of the spacer component (660) comprises a stop projection (1160) or a stop recess which is configured to engage into a corresponding stop recess (1170) or a corresponding stop projection of at least one guide component (600) and to limit a rotation of the spacer component (660) with regard to the at least one guide component (600).

2. Absorber-type vibration damper (340) according to Claim 1, in which the absorber masses (110) and the spacer component (660) are configured in such a way that the absorber masses (110) can be rotated by a predefined angle with regard to the spacer component (660), starting from their middle positions with respect to the spacer component (660).

3. Absorber-type vibration damper (340) according to either of the preceding claims, in which the plays of the connections between the absorber masses (110) and the spacer component (660) are configured in such a way that the absorber masses (110) are guided by the spacer component (660) substantially parallel to one another.

4. Absorber-type vibration damper (340) according to one of the preceding claims, in which the at least one guide component (600) has a circular or cylinder shell-shaped contour at least in sections, which contour extends at least partially or completely about the rotational axis (340), and in which absorber-type vibration damper (340) the spacer component (660) is configured to be mounted radially on the circular or cylinder shell-shaped contour.

5. Absorber-type vibration damper (340) according to one of the preceding claims, in which at least 50% of a mass of the spacer component (660) is arranged completely radially outside or inside at least one guide component (600).

6. Absorber-type vibration damper (340) according to one of the preceding claims, in which the spacer component (660) is configured to limit a movement of the absorber masses (110) along a radial direction and/or a maximum vibration angle of the absorber masses (110) by way of coming into contact with the absorber masses (110) outside the play-afflicted positively locking connections with respect to the latter.

7. Absorber-type vibration damper (340) according to Claim 6, in which the spacer component (660) is configured as an inner spacer ring or as an outer spacer ring, in order to catch at least one of the absorber masses (110) in the case of a radially inwardly or a radially outwardly directed movement beyond a predefined distance.

8. Absorber-type vibration damper (340) according to one of the preceding claims, in which the absorber masses (110) and the spacer component (340) are configured in such a way that a maximum vibration angle of the absorber masses (110) and/or a movement thereof along the radial direction are/is limited by way of the play-afflicted positively locking connections.

9. Absorber-type vibration damper (340) according to one of Claims 6 to 8, in which a material pairing of the components which come into contact with one another during the limiting of the radial movement and/or the maximum vibration angle one component has a plastic, a thermoset, an elastomer or a thermoplastic and the other component has a metallic material, with the result that lower noise is produced in comparison with a metallic material pairing.

10. Absorber-type vibration damper (340) according to either of Claims 8 and 9, in which the play-afflicted positively locking connection between the spacer component (660) and at least one of the absorber masses (110) has a connecting structure (720) and a connecting recess (730), the connecting structure (720) engaging into the connecting recess (730), and the connecting structure (720) and the connecting recess (730) being configured to make a radial movement of the connecting structure (720) and the connecting recess (730) with respect to one another and/or a rotation of the connecting structure (720) and the connecting recess (730) with respect to one another possible.

11. Absorber-type vibration damper (340) according to one of the preceding claims, in which the absorber masses (110) in each case have at least one guide raceway (610), in which the at least one guide component (600) has in each case one guide raceway (610) for the absorber masses (110), which guide raceway (610) corresponds to the guide raceways (610) of the absorber masses (110), and the absorber-type vibration damper (340) has in each case at least one rolling body (620) for the absorber masses (110), which rolling bodies (620) are configured to roll on the guide raceways (610) of the at least one guide component (600) and those of the absorber masses (110), in order to guide the said rolling bodies (620) in such a way that a deflection of the absorber masses (110) out of their respective middle positions leads to a radial movement of the centres of gravity of the relevant absorber mass (110).

12. Absorber-type vibration damper (340) according to Claim 11, in which a limitation of the movement of the at least one of the absorber masses (110) in the radial direction (840) is brought about before the at least one relevant rolling body (620) reaches an end (890) of the relevant guide raceways (610).

13. Absorber-type vibration damper (340) according to one of the preceding claims, in which the spacer component (660) is connected in a positively locking manner which is afflicted with play to all absorber masses (110) in such a way that the spacer component (660) is rotated along the circumferential direction from a middle position of an arbitrary absorber mass (110) of all absorber masses (110) with respect to the spacer component (660) and the middle positions of the other absorber masses (110) with respect to the spacer component (660), in the case of a vibration of the arbitrary absorber mass (110), which vibration overcomes a play of all connections of the relevant absorber masses (110) with respect to the spacer component (660), in such a way that the said spacer component (660) drives all remaining absorber masses (110) along the circumferential direction.

## Revendications

1. Amortisseur d'oscillations à absorbeur (340), par exemple pour une chaîne cinématique d'un véhicule automobile, pour l'amortissement d'une partie des oscillations d'un mouvement de rotation, comprenant les caractéristiques suivantes :
au moins trois masses d'absorbeur (110) qui sont réalisées de manière à effectuer un mouvement d'oscillation en fonction du mouvement de rotation afin d'en amortir la partie des oscillations ;
au moins un composant de guidage (600) qui est réalisé de manière à guider le mouvement des masses d'absorbeur (110) de telle sorte que les masses d'absorbeur (110) soient disposées de manière décalée le long d'une direction périphérique perpendiculaire à un axe de rotation (430) du mouvement de rotation et puissent effectuer les oscillations ;
un composant d'espacement (660) de forme stable et pouvant tourner autour de l'axe de rotation du mouvement de rotation par rapport à l'au moins un composant de guidage (600), qui est en liaison par engagement positif avec jeu avec les masses d'absorbeur (110) qui sont réalisées de telle sorte que, partant d'une position centrale des masses d'absorbeur (110) vers le composant d'espacement (660), dans le cas d'une oscillation de l'une des deux masses d'absorbeur (110) surmontant un jeu des connexions de deux des masses d'absorbeur (110) avec le composant d'espacement (660), le composant d'espacement (660) soit tourné le long de la direction périphérique de telle sorte que celui-ci entraîne l'autre des deux masses d'absorbeur (110) le long de la direction périphérique, le composant d'espacement (660) présentant une structure de butée (1150) qui est réalisée de manière à limiter une rotation du composant d'espacement (660) par rapport à l'au moins un composant de guidage (600),
**caractérisé en ce que**
la structure de butée (1150) du composant d'espacement (660) comprend une saillie de butée (1160) ou un évidement de butée qui est réalisé(e) de manière à venir en prise dans un évidement de butée conjuguée (1170) ou dans une saillie de butée conjuguée d'au moins un composant de guidage (600) et à limiter une rotation du composant d'espacement (660) par rapport à l'au moins un composant de guidage (600).

2. Amortisseur d'oscillations à absorbeur (340) selon la revendication 1, dans lequel les masses d'absorbeur (110) et le composant d'espacement (660) sont réalisés de telle sorte que les masses d'absorbeur (110) puissent tourner d'un angle prédéterminé par rapport au composant d'espacement (660) depuis leur position centrale vers le composant d'espacement (660).

3. Amortisseur d'oscillations à absorbeur (340) selon l'une quelconque des revendications précédentes, dans lequel les jeux des connexions entre les masses d'absorbeur (110) et le composant d'espacement (660) sont réalisés de telle sorte que les masses d'absorbeur (110) soient guidées essentiellement parallèlement les unes aux autres par le composant d'espacement (660).

4. Amortisseur d'oscillations à absorbeur (340) selon l'une quelconque des revendications précédentes, dans lequel l'au moins un composant de guidage (600) présente au moins en partie un contour ayant une forme d'enveloppe circulaire ou cylindrique qui s'étend au moins en partie ou complètement autour de l'axe de rotation (340), et dans lequel le composant d'espacement (660) est réalisé de manière à être supporté radialement sur le contour de forme d'enveloppe circulaire ou cylindrique.

5. Amortisseur d'oscillations absorbeur (340) selon l'une quelconque des revendications précédentes, dans lequel au moins 50 % d'une masse du composant d'espacement (660) sont disposés complètement radialement à l'extérieur ou à l'intérieur d'au moins un composant de guidage (600).

6. Amortisseur d'oscillations à absorbeur (340) selon l'une quelconque des revendications précédentes, dans lequel le composant d'espacement (660) est réalisé de manière à limiter, par une venue en contact avec les masses d'absorbeur (110) à l'extérieur des connexions par engagement positif avec jeu avec celles-ci, un déplacement des masses d'absorbeur (110) le long d'une direction radiale et/ou un angle d'oscillation maximal des masses d'absorbeur (110).

7. Amortisseur d'oscillations à absorbeur (340) selon la revendication 6, dans lequel le composant d'espacement (660) est réalisé sous forme de bague interne d'espacement ou sous forme de bague externe d'espacement, afin de capturer au moins l'une des masses d'absorbeur (110) au-delà d'une distance prédéterminée dans le cas d'un déplacement orienté radialement vers l'intérieur ou orienté radialement vers l'extérieur.

8. Amortisseur d'oscillations à absorbeur (340) selon l'une quelconque des revendications précédentes, dans lequel les masses d'absorbeur (110) et le composant d'espacement (340) sont réalisés de telle sorte qu'un angle d'oscillation maximal des masses d'absorbeur (110) et/ou un déplacement de celles-ci le long de la direction radiale soit limité par les connexions par engagement positif avec jeu.

9. Amortisseur d'oscillations à absorbeur (340) selon l'une quelconque des revendications 6 à 8, dans lequel un appariement de matériau des composants venant en contact les uns avec les autres lors de la limitation du mouvement radial ou de l'angle d'oscillation maximal, un composant présente un plastique, un matériau duroplastique, un élastomère ou un matériau thermoplastique et l'autre composant présente un matériau métallique, de sorte que par rapport à un appariement de matériaux métalliques, il se produit un plus faible bruit.

10. Amortisseur d'oscillations à absorbeur (340) selon l'une quelconque des revendications 8 ou 9, dans lequel la connexion par engagement positif avec jeu entre le composant d'espacement (660) et au moins l'une des masses d'absorbeur (110) présente une structure de liaison (720) et un évidement de liaison (730), la structure de liaison (720) s'engageant dans l'évidement de liaison (730), et la structure de liaison (720) et l'évidement de liaison (730) étant réalisés de manière à permettre un déplacement radial de la structure de liaison (720) et de l'évidement de liaison (730) l'un par rapport à l'autre et/ou une rotation de la structure de liaison (720) et de l'évidement de liaison (730) l'un par rapport à l'autre.

11. Amortisseur d'oscillations à absorbeur (340) selon l'une quelconque des revendications précédentes, dans lequel les masses d'absorbeur (110) présentent à chaque fois au moins un chemin de roulement de guidage (610), dans lequel l'au moins un composant de guidage (600) pour les masses d'absorbeur (110) présente à chaque fois un chemin de roulement de guidage (610) qui correspond aux chemins de roulement de guidage (610) des masses d'absorbeur (110), et dans lequel l'amortisseur d'oscillations à absorbeur (340) pour les masses d'absorbeur (110) présente à chaque fois au moins un corps de roulement (620), lesquels corps de roulement sont réalisés de manière à rouler sur les chemins de roulement de guidage (610) de l'au moins un composant de guidage (600) et sur ceux des masses d'absorbeur (110), afin de les acheminer de telle sorte qu'une déviation des masses d'absorbeur (110) hors de leur position centrale respective entraîne un décalage radial des centres de gravité des masses d'absorbeur concernées (110).

12. Amortisseur d'oscillations à absorbeur (340) selon la revendication 11, dans lequel une limitation du mouvement de l'au moins une des masses d'absorbeur (110) dans la direction radiale (840) est réalisée avant que l'au moins un corps de roulement concerné (620) n'ait atteint une extrémité (890) des chemins de roulement de guidage concernés (610) .

13. Amortisseur d'oscillations à absorbeur (340) selon l'une quelconque des revendications précédentes, dans lequel le composant d'espacement (660) est connecté par engagement positif avec jeu à toutes les masses d'absorbeur (110), de telle sorte que depuis une position centrale d'une masse d'absorbeur quelconque (110) de toutes les masses d'absorbeur (110) jusqu'au composant d'espacement (660) et depuis les positions centrales des autres masses d'absorbeur (110) au composant d'espacement (660), dans le cas d'une oscillation de la masse d'absorbeur quelconque (110) surmontant un jeu de toutes les connexions des masses d'absorbeur concernées (110) au composant d'espacement (660), le composant d'espacement (660) soit tourné le long de la direction périphérique de telle sorte que celui-ci entraîne toutes les autres masses d'absorbeur (110) le long de la direction périphérique.
